(19) Europäisches Patentamt
European Patent Office
Office européen des brevets

(11) EP 3 626 782 A1

(12) # EUROPEAN PATENT APPLICATION
published in accordance with Art. 153(4) EPC

(43) Date of publication:
**25.03.2020 Bulletin 2020/13**

(21) Application number: **18802793.2**

(22) Date of filing: **17.05.2018**

(51) Int Cl.:
***C08L 101/00*** (2006.01) ***C01G 21/00*** (2006.01)
***C08J 3/02*** (2006.01) ***C08J 5/18*** (2006.01)
***C08K 3/10*** (2018.01) ***C08L 83/14*** (2006.01)
***C08L 83/16*** (2006.01) ***G02B 5/20*** (2006.01)
***C09K 11/66*** (2006.01)

(86) International application number:
**PCT/JP2018/019072**

(87) International publication number:
**WO 2018/212268 (22.11.2018 Gazette 2018/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.05.2017 JP 2017097962**

(71) Applicant: **Sumitomo Chemical Company, Limited**
**Tokyo 104-8260 (JP)**

(72) Inventors:
- **ARIMURA, Takashi**
**Tsukuba-shi**
**Ibaraki 300-3294 (JP)**
- **MIYAMOTO, Takeshi**
**Tsukuba-shi**
**Ibaraki 300-3294 (JP)**
- **NAITO, Shota**
**Tsukuba-shi**
**Ibaraki 300-3294 (JP)**

(74) Representative: **J A Kemp LLP**
**14 South Square**
**Gray's Inn**
**London WC1R 5JJ (GB)**

(54) **FILM, PRODUCTION METHOD FOR COMPOSITION, PRODUCTION METHOD FOR CURED PRODUCT, AND PRODUCTION METHOD FOR FILM**

(57) The present invention relates to a film including a light-emitting semiconductor fine particle (1), a silazane or modified product thereof (2), and a polymerizable compound or polymer (4), in which the film has a sea-island-like phase separation structure, in the sea-island-like phase separation structure, the polymerizable compound or polymer (4) is present in a sea-like hydrophobic region, and the light-emitting semiconductor fine particle (1) and the silazane or modified product thereof (2) are present in an island-like hydrophilic region, and the island-like hydrophilic region has a size of 0.1 μm to 100 μm.

EP 3 626 782 A1

## Description

TECHNICAL FIELD

The present invention relates to a film, a production method for composition, a production method for cured product, and a production method for film.

Priority is claimed on Japanese Patent Application No. 2017-097962, filed on May 17, 2017, the content of which is incorporated herein by reference.

BACKGROUND ART

In recent years, there is a growing interest in films containing semiconductor fine particles with a light-emitting property. Since the semiconductor fine particles are known to deteriorate in a case of being in contact with water vapor, development of a film having durability with respect to water vapor and a composition used for producing the film has been required.

Here, as a production method for the composition, a production method including a step of mixing a perhydropolysilazane with semiconductor fine particles formed by InP being covered with ZnS and drying the mixture to obtain semiconductor fine particles covered with the perhydropolysilazane; a step of dispersing the semiconductor fine particles covered with the perhydropolysilazane in toluene to obtain a dispersion liquid; and a step of mixing a UV curable resin in the dispersion liquid has been reported (Patent Document 1).

Citation List

Patent Literature

[Patent Document 1] PCT International Publication No. WO2014/196319

DISCLOSURE OF INVENTION

Technical Problem

However, the film produced using the composition described in Patent Document 1 does not necessarily have sufficient durability with respect to water vapor.

Further, since the production method for the composition described in Patent Document 1 requires multiple steps, there is a problem in that the cost increases in a case of mass production.

The present invention has been made in consideration of the above-described problems, and an object thereof is to provide a film having durability with respect to water vapor. Further, another object of the present invention is to provide a production method for a composition, a cured product, and a film having durability with respect to water vapor by performing simple steps.

Solution to problem

As the result of intensive examination conducted by the present inventors in order to solve the above-described problems, completing the present invention.

In other words, embodiments of the present invention include the following inventions [1] to [9].

[1] A film including: a light-emitting semiconductor fine particle (1); a silazane or modified product thereof (2); and a polymerizable compound or polymer (4), in which the film has a sea-island-like phase separation structure, in the sea-island-like phase separation structure, the polymerizable compound or polymer (4) is present in a sea-like hydrophobic region, and the light-emitting semiconductor fine particle (1) and the silazane or modified product thereof (2) are present in an island-like hydrophilic region, and the island-like hydrophilic region has a size of 0.1 μm to 100 μm.

[2] The film according to [1], in which the light-emitting semiconductor fine particle (1) is a compound having a perovskite type crystal structure which includes constituent components A, B, and X. (the constituent component A indicates a component positioned at each vertex of a hexahedron having the constituent component B at the center in the perovskite type crystal structure and is a monovalent cation, the constituent component X indicates a component positioned at each vertex of an octahedron having the constituent component B at the center in the perovskite type crystal structure and is at least one anion selected from the group consisting of a halide ion and a thiocyanate ion, and the constituent component B indicates a component positioned at the centers of the hexahedron where the

constituent component A is disposed at each vertex and the octahedron where the constituent component X is disposed at each vertex in the perovskite type crystal structure and is a metal ion)

[3] The film according to [1] or [2], in which a difference D in energy value between an emission wavelength PLtop and a band edge Eg is 0.2 or less.

[4] A production method for a composition, including: a step of mixing a light-emitting semiconductor fine particle (1), a silazane or modified product thereof (2), and a polymerizable compound or polymer (4) in the presence of a solvent (3).

[5] The production method for a composition according to [4], including: a step of dispersing the light-emitting semiconductor fine particle (1) in the solvent (3) to obtain a dispersion liquid; and a step of mixing the dispersion liquid, the silazane or modified product thereof (2), and the polymerizable compound or polymer (4).

[6] The production method for a composition according to [5], including: a step of dispersing the light-emitting semiconductor fine particle (1) in the solvent (3) to obtain a dispersion liquid; a step of mixing the dispersion liquid and the silazane or modified product thereof (2) to obtain a mixed solution; and a step of mixing the mixed solution and the polymerizable compound or polymer (4).

[7] The production method for a composition according to [5], including: a step of dispersing the light-emitting semiconductor fine particle (1) in the solvent (3) to obtain a dispersion liquid; a step of mixing the dispersion liquid and a silazane (2') to obtain a mixed solution; a step of performing a modification treatment on the mixed solution to obtain a mixed solution containing a modified product of silazane; and a step of mixing the mixed solution containing the modified product of silazane and the polymerizable compound or polymer (4).

[8] A production method for a cured product, including: a step of dispersing a light-emitting semiconductor fine particle (1) in a solvent (3) to obtain a dispersion liquid; a step of mixing the dispersion liquid and a silazane (2') to obtain a mixed solution; a step of performing a modification treatment on the mixed solution to obtain a mixed solution containing a modified product of silazane; a step of mixing the mixed solution containing the modified product of silazane and a polymer (4") to obtain a composition; and a step of removing the solvent (3) from the composition.

[9] A production method for a film, including: a step of dispersing a light-emitting semiconductor fine particle (1) in a solvent (3) to obtain a dispersion liquid; a step of mixing the dispersion liquid and a silazane (2') to obtain a mixed solution; a step of performing a modification treatment on the mixed solution to obtain a mixed solution containing a modified product of silazane; a step of mixing the mixed solution containing the modified product of silazane and a polymer (4") to obtain a composition; a step of coating a substrate with the composition to obtain a coated film; and a step of removing the solvent (3) from the coated film.

## Advantageous Effects of Invention

According to the present invention, it is possible to provide a film having durability with respect to water vapor, and a production method for a composition, a cured product, and the film, which have durability with respect to water vapor by performing simple steps.

## BRIEF DESCRIPTION OF DRAWINGS

Fig. 1 is a cross-sectional view showing an embodiment of a laminated structure according to the present invention.
Fig. 2 is a cross-sectional view showing an embodiment of a display according to the present invention.
Fig. 3 is a TEM image showing a cured product (film) according to the present invention which is obtained in Example 1.
Fig. 4 is a TEM image showing a cured product (film) according to the present invention which is obtained in Example 2.
Fig. 5 is a TEM image showing a cured product (film) according to the present invention which is obtained in Example 3.
Fig. 6 is a TEM image showing a cured product (film) according to the present invention which is obtained in Example 5.
Fig. 7 is a TEM image showing a cured product (film) according to the present invention which is obtained in Example 7.

## BEST MODE FOR CARRYING OUT THE INVENTION

Hereinafter, the present invention will be described in detail based on embodiments.

### Semiconductor fine particle (1)

A semiconductor fine particle according to the present embodiment has a light-emitting property. The "light-emitting property" indicates a property of emitting light. As the light-emitting property, a property of emitting light using excitation of electrons is preferable, and a property of emitting light using excitation of electrons caused by excitation

light is more preferable. The wavelength of excitation light may be, for example, in a range of 200 nm to 800 nm, in a range of 250 nm to 700 nm, or in a range of 300 nm to 600 nm.

Hereinafter, in regard to a light-emitting semiconductor fine particle (1), a semiconductor fine particle containing a Group II-V compound, a semiconductor fine particle containing a Group II-VI compound, a semiconductor fine particle containing a Group III-IV compound, a semiconductor fine particle containing a Group III-V compound, a semiconductor fine particle containing a Group III-VI compound, a semiconductor fine particle containing a Group IV-VI compound, and a semiconductor fine particle containing a Group I-III-VI compound (1-1); and a semiconductor fine particle containing a perovskite compound (1-2) will be described based on embodiments.

In addition, the light-emitting semiconductor fine particle (1) is not limited to the following semiconductor fine particles.

As the light-emitting semiconductor fine particle (1), a semiconductor fine particle which contains a compound having a cadmium (Group 12) element, a semiconductor fine particle which contains a compound having an indium (Group 13) element, or a semiconductor fine particle which contains a perovskite compound is preferable from the viewpoint of obtaining an excellent quantum yield; a semiconductor fine particle which contains a compound having an indium (Group 13) element or a semiconductor fine particle which contains a perovskite compound is more preferable; and a semiconductor fine particle having a perovskite compound is still more preferable from the viewpoint of easily obtaining an emission peak with a narrow half value width without strictly controlling the particle diameter.

Semiconductor fine particle containing Group II-V compound, semiconductor fine particle containing Group II-VI compound, semiconductor fine particle containing Group III-IV compound, semiconductor fine particle containing Group III-V compound, semiconductor fine particle containing Group III-VI compound, semiconductor fine particle containing Group IV-VI compound, and semiconductor fine particle containing Group I-III-VI compound (1-1)

A Group II-V compound indicates a compound containing a Group II element and a Group V element, a Group II-VI compound indicates a compound containing a Group II element and a Group VI element, a Group III-IV compound indicates a compound containing a Group III element and a Group IV element, a Group III-V compound indicates a compound containing a Group III element and a Group V element, a Group III-VI compound indicates a compound containing a Group III element and a Group VI element, a Group IV-VI compound indicates a compound containing a Group IV element and a Group VI element, and a Group I-III-VI compound indicates a compound containing a Group I element, a Group III element, and a Group VI element.

Here, the Group I indicates the Group 11 in the periodic table, the Group II indicates the Group 2 or Group 12 in the periodic table, the Group III indicates the Group 13 in the periodic table, the Group IV indicates the Group 14 in the periodic table, the Group V indicates the Group 15 in the periodic table, and the Group VI indicates the Group 16 in the periodic table (the same applies hereinafter).

In the present specification, the "periodic table" indicates the long-period type periodic table.

Each of these compounds may be binary, ternary, or quaternary.

(Semiconductor fine particle containing Group II-V compound)

Examples of the binary Group II-V compound include $Zn_3P_2$, $Zn_3As_2$, $Cd_3P_2$, $Cd_3As_2$, $Cd_3N_2$, and $Zn_3N_2$.

The ternary Group II-V compound may be a ternary Group II-V compound containing one element (first element) selected from the Group 2 and Group 12 elements in the periodic table and two elements (second elements) selected from the Group 15 elements in the periodic table or a ternary Group II-V compound containing two elements (first elements) selected from the Group 2 and Group 12 elements in the periodic table and one element (second element) selected from the Group 15 elements in the periodic table. Examples of the ternary Group II-V compound include $Cd_3PN$, $Cd_3PAs$, $Cd_3AsN$, $Cd_2ZnP_2$, $Cd_2ZnAs_2$, and $Cd_2ZnN_2$.

The quaternary Group II-V compound may be a quaternary Group II-V compound containing two elements (first elements) selected from the Group 2 and Group 12 elements in the periodic table and two elements (second elements) selected from the Group 15 elements in the periodic table. Examples of the quaternary Group II-V compound include CdZnPN, CdZnPAs, and $Cd_2ZnAsN$.

The semiconductor fine particle containing a Group II-V compound may contain an element other than the Group 2 element or the Group 12 and the Group 15 elements in the periodic table as a doping element.

(Semiconductor fine particle containing Group II-VI compound)

Examples of the binary Group II-VI compound containing a Group 12 element in the periodic table include CdS, CdSe, CdTe, ZnS, ZnSe, ZnTe, HgS, HgSe, and HgTe.

Examples of the binary Group II-VI compound containing a Group 2 element in the periodic table include MgS, MgSe, MgTe, CaS, CaSe, CaTe, SrS, SrSe, SrTe, BaS, BaSe, and BaTe.

The ternary Group II-VI compound may be a ternary Group II-VI compound containing one element (first

element) selected from the Group 2 and Group 12 elements in the periodic table and two elements (second elements) selected from the Group 16 elements in the periodic table or a ternary Group II-VI compound containing two elements (first elements) selected from the Group 2 and Group 12 elements in the periodic table and one element (second element) selected from the Group 16 elements in the periodic table. Examples of the ternary Group II-VI compound include CdSeS, CdSeTe, CdSTe, CdZnS, CdZnSe, CdZnTe, CdHgS, CdHgSe, and CdHgTe.

The quaternary Group II-VI compound may be a quaternary Group II-VI compound containing two elements (first elements) selected from the Group 2 and Group 12 elements in the periodic table and two elements (second elements) selected from the Group 16 elements in the periodic table. Examples of the quaternary Group II-VI compound include CdZnSeS, CdZnSeTe, CdZnSTe, CdHgSeS, CdHgSeTe, and CdHgSTe.

The semiconductor fine particle containing a Group II-VI compound may contain an element other than the Group 2 element, the Group 12, and the Group 16 elements in the periodic table as a doping element.

(Semiconductor fine particle containing Group III-IV compound)

Examples of the binary Group III-IV compound include $B_4C_3$, $Al_4C_3$, and $Ga_4C_3$.

The ternary Group III-IV compound may be a ternary Group III-IV compound containing one element (first element) selected from the Group 13 elements in the periodic table and two elements (second elements) selected from the Group 14 elements in the periodic table or a ternary Group III-IV compound containing two elements (first elements) selected from the Group 13 elements in the periodic table and one element (second element) selected from the Group 14 elements in the periodic table.

The quaternary Group III-IV compound may be a quaternary Group III-IV compound containing two elements (first elements) selected from the Group 13 elements in the periodic table and two elements (second elements) selected from the Group 14 elements in the periodic table.

The semiconductor fine particle containing a Group III-IV compound may contain an element other than the Group 13 element and the Group 14 element in the periodic table as a doping element.

(Semiconductor fine particle containing Group III-V compound)

Examples of the binary Group III-V compound include BP, AlP, AlAs, AlSb, GaN, GaP, GaAs, GaSb, InN, InP, InAs, InSb, AlN, and BN.

The ternary Group III-V compound may be a ternary Group III-V compound containing one element (first element) selected from the Group 13 elements in the periodic table and two elements (second elements) selected from the Group 15 elements in the periodic table or a ternary Group III-V compound containing two elements (first elements) selected from the Group 13 elements in the periodic table and one element (second element) selected from the Group 15 elements in the periodic table. Examples of the ternary Group III-V compound include InPN, InPAs, InPSb, and InGaP.

The quaternary Group III-V compound may be a quaternary Group III-V compound containing two elements (first elements) selected from the Group 13 elements in the periodic table and two elements (second elements) selected from the Group 15 elements in the periodic table. Examples of the quaternary Group III-V compound include InGaPN, InGaPAs, and InGaPSb.

The semiconductor fine particle containing a Group III-V compound may contain an element other than the Group 13 element and the Group 15 element in the periodic table.

According to one aspect of the present invention, InP is preferable as the Group III-V compound.

(Semiconductor fine particle containing Group III-VI compound)

Examples of the binary Group III-VI compound include $Al_2S_3$, $Al_2Se_3$, $Al_2Te_3$, $Ga_2S_3$, $Ga_2Se_3$, $Ga_2Te_3$, GaTe, $In_2S_3$, $In_2Se_3$, $In_2Te_3$, and InTe.

The ternary Group III-VI compound may be a ternary Group III-VI compound containing one element (first element) selected from the Group 13 elements in the periodic table and two elements (second elements) selected from the Group 16 elements in the periodic table or a ternary Group III-VI compound containing two elements (first elements) selected from the Group 13 elements in the periodic table and one element (second element) selected from the Group 16 elements in the periodic table. Examples of the ternary Group III-VI compound include $InGaS_3$, $InGaSe_3$, $InGaTe_3$, $In_2SSe_2$, and $In_2TeSe_2$.

The quaternary Group III-VI compound may be a quaternary Group III-VI compound containing two elements (first elements) selected from the Group 13 elements in the periodic table and two elements (second elements) selected from the Group 16 elements in the periodic table. Examples of the quaternary Group III-VI compound include $InGaSSe_2$, $InGaSeTe_2$, and $InGaSTe_2$.

The semiconductor fine particle containing a Group III-VI compound may contain an element other than the

Group 13 element and the Group 16 element in the periodic table as a doping element.

(Semiconductor fine particle containing Group IV-VI compound)

Examples of the binary Group IV-VI compound include PbS, PbSe, PbTe, SnS, SnSe, and SnTe.
The ternary Group IV-VI compound may be a ternary Group IV-VI compound containing one element (first element) selected from the Group 14 elements in the periodic table and two elements (second elements) selected from the Group 16 elements in the periodic table or a ternary Group IV-VI compound containing two elements (first elements) selected from the Group 14 elements in the periodic table and one element (second element) selected from the Group 16 elements in the periodic table.
The quaternary Group III-VI compound may be a quaternary Group IV-VI compound containing two elements (first elements) selected from the Group 14 elements in the periodic table and two elements (second elements) selected from the Group 16 elements in the periodic table.
The semiconductor fine particle containing a Group IV-VI compound may contain an element other than the Group 14 element and the Group 16 element in the periodic table as a doping element.

(Semiconductor fine particle containing Group I-III-VI compound)

Examples of the ternary Group I-III-VI compound include $CuInS_2$.
The semiconductor fine particle containing a Group I-III-VI compound may contain an element other than the Group 11 element, the Group 13 element, and the Group 16 element in the periodic table as a doping element.

Semiconductor fine particle (1-2) containing perovskite compound

As an example of the semiconductor fine particle, a semiconductor fine particle containing a perovskite compound is an exemplary example.
The perovskite compound is a compound which contains constituent components A, B, and X and has a perovskite type crystal structure.
In the present invention, the constituent component A indicates a component positioned at each vertex of a hexahedron having the constituent component B at the center in a perovskite type crystal structure and is a monovalent cation.
The constituent component X indicates a component positioned at each vertex of an octahedron having the constituent component B at the center in the perovskite type crystal structure and is at least one anion selected from the group consisting of a halide ion and a thiocyanate ion.
The constituent component B indicates a component positioned at the centers of the hexahedron where the constituent component A is disposed at each vertex and the octahedron where the constituent component X is disposed at each vertex in the perovskite type crystal structure and is a metal ion.
The perovskite compound having the constituent components A, B, and X is not particularly limited and may be a compound having any of a three-dimensional structure, a two-dimensional structure, and a quasi-two-dimensional structure.
In a case of the three-dimensional structure, the composition of the perovskite compound is represented by $ABX_{(3+\delta)}$.
In a case of the two-dimensional structure, the composition of the perovskite compound is represented by $A_2BX_{(4+\delta)}$.
Here, the parameter $\delta$ is a number which can be appropriately changed according to the charge balance of B and is in a range of -0.7 to 0.7.
For example, in a case where A represents a monovalent cation, B represents a divalent cation, and X represents a monovalent cation, the parameter $\delta$ can be selected such that the compound becomes electrically neutral (in other words, the charge of the compound is 0).
In the case of the three-dimensional structure, the structure has a three-dimensional network of a vertex-sharing octahedron which has B as the center and X as a vertex and is represented by $BX_6$.
In the case of the two-dimensional structure, a structure in which a layer formed of two-dimensionally connected $BX_6$ and a layer formed of A are alternately laminated is formed in a case where the octahedron which has B as the center and X as a vertex and is represented by $BX_6$ shares Xs of four vertexes in the same plane.
B represents a metal cation which can have octahedral coordination of X.
In the present specification, the perovskite type crystal structure can be confirmed by an X-ray diffraction pattern.
In a case of the compound having the perovskite type crystal structure of the three-dimensional structure, typically, a peak derived from (hkl) = (001) is confirmed at a position where $2\theta$ is in a range of 12° to 18° or a peak

derived from (hkl) = (110) is confirmed at a position where 2θ is in a range of 18° to 25° in the X ray diffraction pattern. It is more preferable that a peak derived from (hkl) = (001) is confirmed at a position where 2θ is in a range of 13° to 16° or a peak derived from (hkl) = (110) is confirmed at a position where 2θ is in a range of 20° to 23°.

In a case of the compound having the perovskite type crystal structure of the two-dimensional structure, typically, a peak derived from (hkl) = (002) is confirmed at a position where 2θ is in a range of 1° to 10° in the X ray diffraction pattern. It is more preferable that a peak derived from (hkl) = (002) is confirmed at a position where 2θ is in a range of 2° to 8°.

As the perovskite compound, a perovskite compound represented by Formula (P1) is preferable.

$$ABX(3+\delta)\ (-0.7 \leq \delta \leq 0.7) \cdots (P1)$$

The constituent component A indicates a component positioned at each vertex of a hexahedron having the constituent component B at the center in a perovskite type crystal structure and is a monovalent cation.

The constituent component X indicates a component positioned at each vertex of an octahedron having the constituent component B at the center in the perovskite type crystal structure and is one or more kinds of anions selected from the group consisting of a halide ion and a thiocyanate ion.

The constituent component B indicates a component positioned at the centers of the hexahedron where the constituent component A is disposed at each vertex and the octahedron where the constituent component X is disposed at each vertex in the perovskite type crystal structure and is a metal ion.

(A)

In the perovskite compound, the constituent component A indicates a component positioned at each vertex of a hexahedron having the constituent component B at the center in a perovskite type crystal structure and is a monovalent cation, Examples of the monovalent cation include a cesium ion, an organic ammonium ion, and an amidinium ion. In a case where the constituent component A is a cesium ion, an organic ammonium ion having 3 or less carbon atoms, or an amidinium ion having 3 or less carbon atoms in the perovskite compound, the perovskite compound typically has a three-dimensional structure represented by $ABX_{(3+\delta)}$.

In the perovskite compound, a cesium ion or an organic ammonium ion is preferable as the constituent component A.

Specific examples of the organic ammonium ion as the constituent component A include a cation represented by Formula (A1).

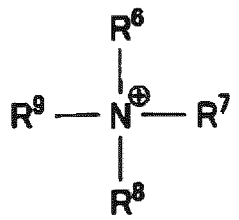

· · · (A1)

In Formula (A1), $R^6$ to $R^9$ each independently represent a hydrogen atom, an alkyl group which may contain an amino group as a substituent, or a cycloalkyl group which may contain an amino group as a substituent. Here, not all of $R^6$ to $R^9$ simultaneously represent hydrogen atoms.

The alkyl group represented by each of independent $R^6$ to $R^9$ may be linear or branched and may have an amino group as a substituent.

In a case where $R^6$ to $R^9$ represent an alkyl group, the number of carbon atoms of each of independent $R^6$ to $R^9$ is typically in a range of 1 to 20, preferably in a range of 1 to 4, still more preferably in a range of 1 to 3, and even still more preferably 1.

The cycloalkyl group represented by each of independent $R^6$ to $R^9$ may contain an alkyl group or an amino group as a substituent.

The number of carbon atoms of the cycloalkyl group represented by each of independent $R^6$ to $R^9$ is typically in a range of 3 to 30, preferably in a range of 3 to 11, and more preferably in a range of 3 to 8. The number of carbon atoms include the number of carbon atoms in a substituent.

As the group represented by each of independent $R^6$ to $R^9$, a hydrogen atom or an alkyl group is preferable.

A compound having a perovskite type crystal structure of a three-dimensional structure with high emission

intensity can be obtained by decreasing the number of alkyl groups and cycloalkyl groups which can be included in Formula (A1) and decreasing the number of carbon atoms in the alkyl group and the cycloalkyl group.

In a case where the number of carbon atoms in the alkyl group or the cycloalkyl group is 4 or more, a compound partially or entirely having a two-dimensional and/or quasi-two-dimensional (quasi-2D) perovskite type crystal structure can be obtained. In a case where a two-dimensional perovskite type crystal structure is laminated at infinity, the structure becomes the same as the three-dimensional perovskite type crystal structure (reference literature: for example, P. P. Boix et al., J. Phys. Chem. Lett. 2015, 6, 898 to 907).

It is preferable that the total number of carbon atoms in the alkyl group and the cycloalkyl group represented by $R^6$ to $R^9$ is in a range of 1 to 4 and more preferable that one of $R^6$ to $R^9$ represents an alkyl group having 1 to 3 carbon atoms and three of $R^6$ to $R^9$ represent a hydrogen atom.

Examples of the alkyl group as $R^6$ to $R^9$ include a methyl group, an ethyl group, an n-propyl group, an isopropyl group, an n-butyl group, an isobutyl group, a sec-butyl group, a tert-butyl group, an n-pentyl group, an isopentyl group, a neopentyl group, a tert-pentyl group, a 1-methylbutyl group, an n-hexyl group, a 2-methylpentyl group, a 3-methylpentyl group, a 2,2-dimethylbutyl group, a 2,3-dimethylbutyl group, an n-heptyl group, a 2-methylhexyl group, a 3-methylhexyl group, a 2,2-dimethylpentyl group, a 2,3-dimethylpentyl group, a 2,4-dimethylpentyl group, a 3,3-dimethylpentyl group, a 3-ethylpentyl group, a 2,2,3-trimethylbutyl group, an n-octyl group, an isooctyl group, a 2-ethylhexyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, and an icosyl group.

As the cycloalkyl group as $R^6$ to $R^9$, a group in which an alkyl group having 3 or more carbon atoms which has been provided as an exemplary example of the alkyl group represented by each of independent $R^6$ to $R^9$ forms a ring is an exemplary example, and examples thereof include a cyclopropyl group, a cyclobutyl group, a cyclopentyl group, a cyclohexyl group, a cycloheptyl group, a cyclooctyl group, a cyclononyl group, a cyclodecyl group, a norbornyl group, an isobornyl group, a 1-adamantyl group, a 2-adamantyl group, and a tricyclodecyl group.

As the organic ammonium ion represented by A, $CH_3NH_3^+$ (also referred to as a methylammonium ion), $C_2H_5NH_3^+$ (also referred to as an ethylammonium ion), or $C_3H_7NH_3^+$ (also referred to as a propylammonium ion) is preferable, $CH_3NH_3^+$ or $C_2H_5NH_3^+$ is more preferable, $CH_3NH_3^+$ is still more preferable.

As the amidinium ion represented by A, an amidinium ion represented by Formula (A2) is an exemplary example.

$$(R^{10}R^{11}N{=}CH\text{-}NR^{12}R^{13})^+ \cdots \qquad (A2)$$

In Formula (A2), $R^{10}$ to $R^{13}$ each independently represent a hydrogen atom, an alkyl group which may contain an amino group as a substituent, or a cycloalkyl group which may contain an amino group as a substituent.

The alkyl group represented by each of independent $R^{10}$ to $R^{13}$ may be linear or branched and may have an amino group as a substituent.

The number of carbon atoms in the alkyl group represented by each of independent $R^{10}$ to $R^{13}$ is typically in a range of 1 to 20, preferably in a range of 1 to 4, and still more preferably in a range of 1 to 3.

The cycloalkyl group represented by each of independent $R^{10}$ to $R^{13}$ may contain an alkyl group or an amino group as a substituent.

The number of carbon atoms of the cycloalkyl group represented by each of independent $R^{10}$ to $R^{13}$ is typically in a range of 3 to 30, preferably in a range of 3 to 11, and more preferably in a range of 3 to 8. The number of carbon atoms include the number of carbon atoms in a substituent.

Specific examples of the alkyl group as $R^{10}$ to $R^{13}$ are the same as those provided as exemplary examples of the alkyl group represented by each of independent $R^6$ to $R^9$.

Specific examples of the cycloalkyl group as $R^{10}$ to $R^{13}$ are the same as those provided as exemplary examples of the cycloalkyl group represented by each of independent $R^6$ to $R^9$.

As the group represented by each of independent $R^{10}$ to $R^{13}$, a hydrogen atom or an alkyl group is preferable.

A perovskite compound having a three-dimensional structure with high emission intensity can be obtained by decreasing the number of alkyl groups and cycloalkyl groups which can be included in Formula (A2) and decreasing the number of carbon atoms in the alkyl group and the cycloalkyl group.

In a case where the number of carbon atoms in the alkyl group or the cycloalkyl group is 4 or more, a compound partially or entirely having a two-dimensional and/or quasi-two-dimensional (quasi-2D) perovskite type crystal structure can be obtained.

It is preferable that the total number of carbon atoms in the alkyl group and the cycloalkyl group represented by $R^{10}$ to $R^{13}$ is in a range of 1 to 4 and more preferable that $R^{10}$ represents an alkyl group having 1 to 3 carbon atoms and $R^{11}$ to $R^{13}$ represent a hydrogen atom.

[B]

In the perovskite compound, the constituent component B indicates a component positioned at the centers of the hexahedron where the constituent component A is disposed at each vertex and the octahedron where the constituent component X is disposed at each vertex in the perovskite type crystal structure and is a metal ion.
The metal ion as the component B may be an ion formed of one or more selected from the group consisting of a monovalent metal ion, a divalent metal ion, and a trivalent metal ion. It is preferable that the component B contains a divalent metal ion and more preferable that the component B contains at least one metal ion selected from the group consisting of lead and tin.

[X]

In the perovskite compound, the constituent component X indicates a component positioned at each vertex of an octahedron having the constituent component B at the center in the perovskite type crystal structure and is at least one anion selected from the group consisting of a halide ion and a thiocyanate ion.
The constituent component X may be at least one anion selected from the group consisting of a chloride ion, a bromide ion, a fluoride ion, an iodide ion, and a thiocyanate ion.
The constituent component X can be appropriately selected according to a desired emission wavelength. For example, the constituent component X may contain a bromide ion.
In a case where the constituent component X is two or more kinds of halide ions, the content ratio of the halide ions can be appropriately selected according to the emission wavelength. For example, a combination of a bromide ion and a chloride ion or a combination of a bromide ion and an iodide ion can be employed.
Specific preferred examples of the compound which is represented by $ABX_{(3+\delta)}$ and has the perovskite type crystal structure of the three-dimensional structure in the perovskite compound include $CH_3NH_3PbBr_3$, $CH_3NH_3PbCl_3$, $CH_3NH_3PbI_3$, $CH_3NH_3PbBr_{(3-y)}I_y$ (0<y<3), $CH_3NH_3PbBr_{(3-y)}Cl_y$ (0<y<3), $(H_2N=CH-NH_2)$ $PbBr_3$, $(H_2N=CH-NH_2)PbCl_3$, $(H_2N=CH-NH_2)PbI_3$, $CH_3NH_3Pb_{(1-a)}Ca_aBr_3$ ($0 < a \leq 0.7$), $CH_3NH_3Pb_{(1-a)}Sr_aBr_3$ ($0 < a \leq 0.7$), $CH_3NH_3Pb_{(1-a)}La_aBr_{(3+\delta)}$ ($0 < a \leq 0.7$, $0 < \delta \leq 0.7$), $CH_3NH_3Pb_{(1-a)}Ba_aBr_3$ ($0 < a \leq 0.7$), $CH_3NH_3Pb_{(1-a)}Dy_aBr_{(3+\delta)}$ ($0 < a \leq 0.7$, $0 < \delta \leq 0.7$), $CH_3NH_3Pb_{(1-a)}Na_aBr_{(3+\delta)}$($0<a\leq0.7$,$-0.7\leq\delta<0$), $CH_3NH_3Pb_{(1-a)}Li_aBr_{(3+\delta)}$($0<a\leq0.7$,$-0.7\leq\delta<0$), $CsPb_{(1-a)}Na_aBr_{(3+\delta)}$ ($0 < a \leq 0.7$, $-0.7 \leq \delta < 0$), $CsPb_{(1-a)}Li_aBr_{(3+\delta)}$ ($0 < a \leq 0.7$, $-0.7 \leq \delta < 0$), $CH_3NH_3Pb_{(1-a)}Na_aBr_{(3+\delta-y)}I_y$ ($0 < a \leq 0.7$, $-0.7 \leq \delta < 0$, $0 < y < 3$), $CH_3NH_3Pb_{(1-a)}Li_aBr_{(3+\delta-y)}I_y$ ($0 < a \leq 0.7$, $-0.7 \leq \delta < 0$, $0 < y < 3$), $CH_3NH_3Pb_{(1-a)}Na_aBr_{(3+\delta-y)}Cl_y$ ($0 < a \leq 0.7$, $-0.7 \leq \delta < 0$, $0 < y < 3$), $CH_3NH_3Pb_{(1-a)}Li_aBr_{(3+\delta-y)}Cl_y$ ($0 < a \leq 0.7$, $-0.7 \leq \delta < 0$, $0 < y < 3$), $(H_2N=CH-NH_2)Pb_{(1-a)}Na_aBr_{(3+\delta)}$ ($0<a\leq0.7$, $-0.7 \leq \delta < 0$), $(H_2N=CH-NH_2)Pb_{(1-a)}Li_aBr_{(3+\delta)}$($0 < a \leq 0.7$, $-0.7 \leq \delta < 0$), $(H_2N=CH-NH_2)Pb_{(1-a)}Na_aBr_{(3+\delta-y)}I_y$ ($0 < a \leq 0.7$, $-0.7 \leq \delta < 0$, $0 < y < 3$), $(H_2N=CH-NH_2)Pb_{(1-a)}Na_aBr_{(3+\delta-y)}Cl_y$ ($0 < a \leq 0.7$, $-0.7 \leq \delta < 0$, $0 < y < 3$), $CsPbBr_3$, $CsPbCl_3$, $CsPbI_3$, $CsPbBr_{(3-y)}I_y$ ($0 < y < 3$), $CsPbBr_{(3-y)}Cl_y$ ($0 < y < 3$), $CH_3NH_3PbBr_{(3-y)}Cl_y$ ($0 < y < 3$), $CH_3NH_3Pb_{(1-a)}Zn_aBr_3$ ($0 < a \leq 0.7$), $CH_3NH_3Pb_{(1-a)}Al_aBr_{(3+\delta)}$ ($0 < a \leq 0.7$, $0 \leq \delta \leq 0.7$), $CH_3NH_3Pb_{(1-a)}Co_aBr_3$ ($0 < a \leq 0.7$), $CH_3NH_3Pb_{(1-a)}Mn_aBr_3$ ($0 < a \leq 0.7$), $CH_3NH_3Pb_{(1-a)}Mg_aBr_3$ ($0 < a \leq 0.7$), $CsPb_{(1-a)}Zn_aBr_3$ ($0 < a \leq 0.7$), $CsPb_{(1-a)}Al_aBr_{(3+\delta)}$($0 < a \leq 0.7$, $0 < \delta \leq 0.7$), $CsPb_{(1-a)}Co_aBr_3$ ($0 < a \leq 0.7$), $CsPb_{(1-a)}Mn_aBr_3$ ($0 < a \leq 0.7$), $CsPb_{(1-a)}Mg_aBr_3$ ($0 < a \leq 0.7$), $CH_3NH_3Pb_{(1-a)}Zn_aBr_{(3-y)}I_y$ ($0 < a \leq 0.7$, $0 < y < 3$), $CH_3NH_3Pb_{(1-a)}Al_aBr_{(3+\delta-y)}I_y$ ($0 < a \leq 0.7$, $0 < \delta \leq 0.7$, $0 < y < 3$), $CH_3NH_3Pb_{(1-a)}Co_aBr_{(3-y)}I_y$ ($0 < a \leq 0.7$, $0 < y < 3$), $CH_3NH_3Pb_{(1-a)}Mn_aBr_{(3-y)}I_y$ ($0 < a \leq 0.7$, $0 < y < 3$), $CH_3NH_3Pb_{(1-a)}Mg_aBr_{(3-y)}I_y$ ($0 < a \leq 0.7$, $0 < y < 3$), $CH_3NH_3Pb_{(1-a)}Zn_aBr_{(3-y)}Cl_y$ ($0 < a \leq 0.7$, $0 < y < 3$), $CH_3NH_3Pb_{(1-a)}Al_aBr_{(3+\delta-y)}Cl_y$ ($0 < a \leq 0.7$, $0 < \delta \leq 0.7$, $0 < y < 3$), $CH_3NH_3Pb_{(1-a)}Co_aBr_{(3+\delta-y)}Cl_y$ ($0 < a \leq 0.7$, $0 < y < 3$), $CH_3NH_3Pb_{(1-a)}Mn_aBr_{(3-y)}Cl_y$ ($0 < a \leq 0.7$, $0 < y < 3$), $CH_3NH_3Pb_{(1-a)}Mg_aBr_{(3-y)}Cl_y$ ($0 < a \leq 0.7$, $0 < y < 3$), $(H_2N=CH-NH_2)$ $Zn_aBr_3$ ($0 < a \leq 0.7$), $(H_2N=CH-NH_2)Mg_aBr_3$ ($0 < a \leq 0.7$), $(H_2N=CH-NH_2)Pb_{(1-a)}Zn_aBr_{(3-y)}I_y$($0 < a \leq 0.7$, $0 < y < 3$), and $(H_2N=CH-NH_2)Pb_{(1-a)}Zn_aBr_{(3-y)}Cl_y$ ($0 < a \leq 0.0$, $0 < y < 3$).
According to one aspect of the present invention, as the perovskite compound which is a compound represented by $ABX_{(3+\delta)}$ and having the perovskite type crystal structure of the three-dimensional structure, $CsPbBr_3$ or $CsPbBr_{(3-y)}I_y$ ($0 < y < 3$) is preferable.
Specific preferred examples of the compound which is represented by $A_2BX_{(4+\delta)}$ and has the perovskite type crystal structure of the two-dimensional structure in the perovskite compound include $(C_4H_9NH_3)_2PbBr_4$, $(C_4H_9NH_3)_2PbCl_4(C_4H_9NH_3)_2PbI_4$, $(C_7H_{15}NH_3)_2PbBr_4$, $(C_7H_{15}NH_3)_2PbCl_4$, $(C_7H_{15}NH_3)_2PbI_4$, $(C_4H_9NH_3)_2Pb_{(1-a)}Li_aBr_{(4+\delta)}$ ($0 < a \leq 0.7$, $-0.7 \leq \delta < 0$), $(C_4H_9NH_3)_2Pb_{(1-a)}Na_aBr_{(4+\delta)}$ ($0 < a \leq 0.7$, $-0.7 \leq \delta < 0$), $(C_4H_9NH_3)_2Pb_{(1-a)}Rb_aBr_{(4+\delta)}$ ($0 < a \leq 0.7$, $-0.7 \leq \delta < 0$), $(C_7H_{15}NH_3)_2Pb_{(1-a)}Na_aBr_{(4+\delta)}$ ($0 < a \leq 0.7$, $-0.7 \leq \delta < 0$), $(C_7H_{15}NH_3)_2Pb_{(1-a)}Li_aBr_{(4+\delta)}$ ($0 < a \leq 0.7$, $-0.7 \leq \delta < 0$), $(C_7H_{15}NH_3)_2Pb_{(1-a)}Rb_aBr_{(4+\delta)}$($0 < a \leq 0.7$, $-0.7 \leq \delta < 0$), $(C_4H_9NH_3)_2Pb_{(1-a)}Na_aBr_{(4+\delta-y)}I_y$ ($0 < a \leq 0.7$, $-0.7 \leq \delta < 0$, $0 < y < 4$), $(C_4H_9NH_3)_2Pb_{(1-a)}Li_aBr_{(4+\delta-y)}I_y$ ($0 < a \leq 0.7$, $-0.7 \leq \delta < 0$, $0 < y < 4$), $(C_4H_9NH_3)_2Pb_{(1-a)}Rb_aBr_{(4+\delta-y)}I_y$ ($0 < a \leq 0.7$, $-0.7 \leq \delta < 0$, $0 < y < 4$), $(C_4H_9NH_3)_2Pb_{(1-a)}Na_aBr_{(4+\delta-y)}Cl_y$ ($0 < a \leq 0.7$, $-0.7 \leq \delta < 0$, $0 < y < 4$), $(C_4H_9NH_3)_2Pb_{(1-a)}Li_aBr_{(4+\delta-y)}Cl_y$ ($0 < a \leq 0.7$, $-0.7 \leq \delta < 0$, $0 < y < 4$), $(C_4H_9NH_3)_2Pb_{(1-a)}Rb_aBr_{(4+\delta-y)}Cl_y$ ($0 < a \leq 0.7$, $-0.7 \leq \delta < 0$, $0 < y < 4$), $(C_4H_9NH_3)_2PbBr_4$, $(C_7H_{15}NH_3)_2PbBr_4$, $(C_4H_9NH_3)_2PbBr_{(4-y)}Cl_y$ ($0 < y < 4$), $(C_4H_9NH_3)_2PbBr_{(4-y)}I_y$ (0<y<4), $(C_4H_9NH_3)_2Pb_{(1-}$a)ZnaBr4 ($0 < a \leq 0.7$), $(C_4H_9NH_3)_2Pb_{(1-a)}$MgaBr$_4$ ($0 < a \leq 0.7$), $(C_4H_9NH_3)_2Pb_{(1-a)}Co_aBr_4$ (0

$< a \leq 0.7$), $(C_4H_9NH_3)_2Pb_{(1-a)}Mn_aBr_4$ ($0 < a \leq 0.7$), $(C_7H_{15}NH_3)_2Pb_{(1-a)}Zn_aBr_4$ ($0 < a \leq 0.7$), $(C_7H_{15}NH_3)_2Pb_{(1-a)}Mg_aBr_4$ ($0 < a \leq 0.7$), $(C_7H_{15}NH_3)_2Pb_{(1-a)}Co_aBr_4$ ($0 < a \leq 0.7$), $(C_7H_{15}NH_3)_2Pb_{(1-a)}Mn_aBr_4$ ($0 < a \leq 0.7$), $(C_4H_9NH_3)_2Pb_{(1-a)}Zn_aBr_{(4-y)}I_y$ ($0 < a \leq 0.7$, $0 < y < 4$), $(C_4H_9NH_3)_2Pb_{(1-a)}Mg_aBr_{(4-y)}I_y$ ($0 < a \leq 0.7$, $0 < y < 4$), $(C_4H_9NH_3)_2Pb_{(1-a)}Co_aBr_{(4-y)}I_y$ ($0 < a \leq 0.7$, $0 < y < 4$), $(C_4H_9NH_3)_2Pb_{(1-a)}Mn_aBr_{(4-y)}I_y$ ($0 < a \leq 0.7$, $0 < y < 4$), $(C_4H_9NH_3)_2Pb_{(1-a)}Zn_aBr_{(4-y)}Cl_y$ ($0 < a \leq 0.7$, $0 < y < 4$), $(C_4H_9NH_3)_2Pb_{(1-a)}Mg_aBr_{(4-y)}Cl_y$ ($0 < a \leq 0.7$, $0 < y < 4$), $(C_4H_9NH_3)_2Pb_{(1-a)}Co_aBr_{(4-y)}Cl_y$ ($0 < a \leq 0.7$, $0 < y < 4$), and $(C_4H_9NH_3)_2Pb_{(1-a)}Mn_aBr_{(4-y)}Cl_y$ ($0 < a \leq 0.7$, $0 < y < 4$).

(Emission spectrum)

The perovskite compound is a light emitting material which is capable of emitting fluorescence in a visible light wavelength range. In a case where the constituent component X is a bromide ion, the compound is capable of emitting fluorescence having a maximum peak of the intensity in a wavelength range of typically 480 nm or greater, preferably 500 nm or greater, and more preferably 520 nm or greater and typically 700 nm or less, preferably 600 nm or less, and more preferably 580 nm or less.

The above-described upper limit and lower limit can be combined as desired.

According to another aspect of the present invention, in the case where the constituent component X in the perovskite compound is a bromide ion, the peak of the emitted fluorescence is typically in a range of 480 nm to 700 nm, preferably in a range of 500 nm to 600 nm, and more preferably in a range of 520 nm to 580 nm.

In a case where the constituent component X is an iodide ion, the compound is capable of emitting fluorescence having a maximum peak of the intensity in a wavelength range of typically 520 nm or greater, preferably 530 nm or greater, and more preferably 540 nm or greater and typically 800 nm or less, preferably 750 nm or less, and more preferably 730 nm or less.

The above-described upper limit and lower limit can be combined as desired.

According to another aspect of the present invention, in the case where the constituent component X in the perovskite compound is an iodide ion, the peak of the emitted fluorescence is typically in a range of 520 nm to 800 nm, preferably in a range of 530 nm to 750 nm, and more preferably in a range of 540 nm to 730 nm.

In a case where the constituent component X is a chloride ion, the compound is capable of emitting fluorescence having a maximum peak of the intensity in a wavelength range of typically 300 nm or greater, preferably 310 nm or greater, and more preferably 330 nm or greater and typically 600 nm or less, preferably 580 nm or less, and more preferably 550 nm or less.

The above-described upper limit and lower limit can be combined as desired.

According to another aspect of the present invention, in the case where the constituent component X in the perovskite compound is a chloride ion, the peak of the emitted fluorescence is typically in a range of 300 nm to 600 nm, preferably in a range of 310 nm to 580 nm, and more preferably in a range of 330 nm to 550 nm.

The average particle diameter of the light-emitting semiconductor fine particle (1) contained in the composition is not particularly limited, but the average particle diameter thereof is preferably 1 nm or greater, more preferably 2 nm or greater, and still more preferably 3 nm or greater from the viewpoint of satisfactorily maintaining the crystal structure. Further, the average particle diameter thereof is preferably 10 μm or less, more preferably 1 μm or less, and still more preferably 500 nm or less from the viewpoint of making the light-emitting semiconductor fine particle (1) difficult to be precipitated.

The above-described upper limit and lower limit can be combined as desired.

The average particle diameter of the light-emitting semiconductor fine particle (1) contained in the composition is not particularly limited, but the average particle diameter thereof is preferably in a range of 1 nm to 10 μm, more preferably in a range of 2 nm to 1 μm, and still more preferably 3 nm to 500 nm from the viewpoints of making the light-emitting semiconductor fine particle (1) difficult to be settled out and satisfactorily maintaining the crystal structure.

In the present specification, the average particle diameter of the light-emitting semiconductor fine particle (1) contained in the composition can be measured using, for example, a transmission electron microscope (hereinafter, also referred to as a TEM) and a scanning electron microscope (hereinafter, also referred to as a SEM). Specifically, the average particle diameter can be acquired using a method of observing the maximum Feret diameter of twenty or more light-emitting semiconductor fine particles (1) contained in the composition using a TEM or a SEM and calculating the average maximum Feret diameter which is an average value of obtained values. The "maximum Feret diameter" in the present specification indicates the maximum distance between two straight lines parallel to each other which interpose the light-emitting semiconductor fine particle (1) therebetween on a TEM or SEM image.

Silazane or modified product thereof (2)

A silazane is a compound having a Si-N-Si bond.

The silazane may be linear, branched, or cyclic. Further, the silazane may be low molecular or high molecular

(in the present specification, also referred to as a polysilazane).

The "low-molecular-weight" in the present specification indicates that the number average molecular weight is less than 600, and the "high-molecular-weight" indicates that the number average molecular weight is in a range of 600 to 2000.

In the present specification, the "number average molecular weight" indicates a value in terms of polystyrene to be measured according to a gel permeation chromatography (GPC) method.

For example, a low-molecular-weight silazane represented by Formula (B1) or (B2) or a polysilazane which has a constituent unit represented by Formula (B3) or has a structure represented by Formula (B4) is preferable.

The silazane contained in the composition according to the present embodiment may be a modified product of a silazane which has been modified according to the above-described method.

The modification indicates that a Si-O-Si bond is formed by substituting N with O in at least some Si-N-Si bonds contained in the silazane, and the modified product of the silazane indicates a compound having a Si-O-Si bond.

As the modified product of the silazane, a low-molecular-weight compound in which at least one N in Formula (B1) or (B2) is substituted with O, a high-molecular-weight compound in which at least one N in a polysilazane having a constituent unit represented by Formula (B3) is substituted with O, or a high-molecular-weight compound in which at least one N in a polysilazane having a structure represented by Formula (B4) is substituted with O is preferable.

The ratio of the number of substituted Os is preferably in a range of 0.1% to 100%, more preferably in a range of 10% to 98%, and still more preferably in a range of 30% to 95% with respect to the total amount of N in Formula (B2).

The ratio of the number of substituted Os is preferably in a range of 0.1% to 100%, more preferably in a range of 10% to 98%, and still more preferably in a range of 30% to 95% with respect to the total amount of N in Formula (B3).

The ratio of the number of substituted Os is preferably in a range of 0. 1 % to 99%, more preferably in a range of 10% to 97%, and still more preferably in a range of 30% to 95% with respect to the total amount of N in Formula (B4).

The modified product of a silazane may be used alone or in the form of a mixture of two or more kinds thereof.

The number of Si atoms, the number of N atoms, and the number of O atoms contained in the modified product of the silazane can be calculated according to nuclear magnetic resonance spectroscopy (hereinafter, also referred to as NMR), X-ray photoelectron spectroscopy (hereinafter, also referred to as XPS), or energy dispersive X-ray analysis (hereinafter, also referred to as EDX) using a TEM.

According to a particularly preferable method, the calculation can be made by measuring the number of Si atoms, the number of N atoms, and the number of O atoms in the composition according to the X-ray photoelectron spectroscopy (XPS).

The ratio of the number of O atoms to the number of N atoms contained in the silazane and modified product thereof to be measured according to the above-described method is preferably in a range of 0.1 % to 99%, more preferably in a range of 10% to 95%, and still more preferably 30% to 90%.

At least a part of the silazane or modified product thereof may be adsorbed by the light-emitting semiconductor fine particle (1) contained in the composition or may be dispersed in the composition.

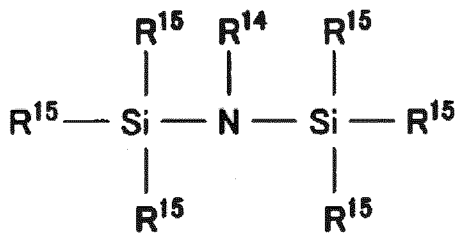

(B 1)

In Formula (B1), $R^{14}$ and $R^{15}$ each independently represent a hydrogen atom, an alkyl group having 1 to 20 carbon atoms, an alkenyl group having 1 to 20 carbon atoms, a cycloalkyl group having 3 to 20 carbon atoms, an aryl group having 6 to 20 carbon atoms, or an alkylsilyl group having 1 to 20 carbon atoms. The alkyl group having 1 to 20 carbon atoms, the alkenyl group having 1 to 20 carbon atoms, the cycloalkyl group having 3 to 20 carbon atoms, the aryl group having 6 to 20 carbon atoms, or the alkylsilyl group having 1 to 20 carbon atoms may have a substituent such as an amino group. A plurality of $R^{15}$'s may be the same as or different from one another.

Examples of the low-molecular-weight silazane represented by Formula (B1) include 1,3-divinyl-1,1,3,3-tetramethyldisilazane, 1,3-diphenyltetramethyldisilazane, and 1,1,1,3,3,3-hexamethyldisilazane.

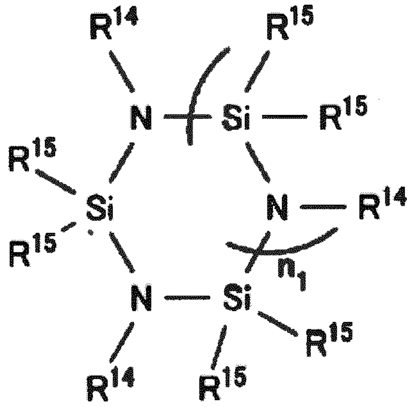

(B 2)

In Formula (B2), $R^{14}$ and $R^{15}$ each have the same definition as described above.

A plurality of $R^{14}$'s may be the same as or different from one another.

A plurality of $R^{15}$'s may be the same as or different from one another.

$n_1$ represents an integer of 1 to 20. $n_1$ may represent an integer of 1 to 10 or 1 or 2.

Examples of the low-molecular-weight silazane represented by Formula (B2) include octamethylcyclotetrasilazane, 2,2,4,4,6,6,-hexamethylcyclotrisilazane, and 2,4,6-trimethyl-2,4,6-trivinylcyclotrisilazane.

As the low-molecular-weight silazane, octamethylcyclotetrasilazane or 1,3-diphenyltetramethyldisilazane is preferable, and octamethylcyclotetrasilazane is more preferable.

The polysilazane is a polymer compound having a Si-N-Si bond and is not particularly limited, and examples thereof include a polymer compound having a constituent unit represented by Formula (B3). The constituent unit represented by Formula (B3) which is contained in the polysilazane may be used alone or in combination of a plurality of kinds thereof.

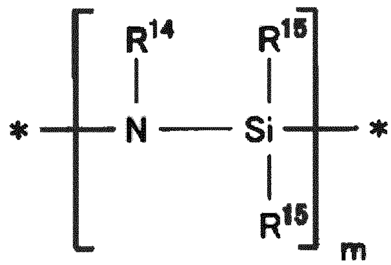

(B 3)

In Formula (B3), $R^{14}$ and $R^{15}$ each have the same definition as described above.

The symbol "*" represents a bonding site. The bonding site of the N atom at the terminal may have the same substituent as that of $R^{14}$, and the bonding site of the Si atom at the terminal may have the same substituent as that of $R^{15}$.

A plurality of $R^{14}$'s may be the same as or different from one another.

A plurality of $R^{15}$'s may be the same as or different from one another.

m represents an integer of 2 to 10000.

The polysilazane having a constituent unit represented by Formula (B3) may be a perhydropolysilazane in which all of $R^{14}$'s and $R^{15}$'s represent a hydrogen atom.

The polysilazane having a constituent unit represented by Formula (B3) may be an organopolysilazane in which at least one $R^{15}$ represents a group other than the hydrogen atom. According to the application thereof, the perhydropolysilazane or organopolysilazane may be appropriately selected or can be used by being mixed.

The polysilazane may have a ring structure in a portion of a molecule. For example, the polysilazane may have a structure represented by Formula (B4).

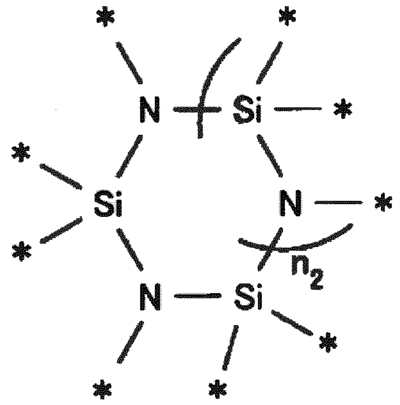

(B 4)

In Formula (B4), the symbol "*" represents a bonding site.

The bonding site may be bonded to the bonding site of the constituent unit represented by Formula (B3). In a case where the polysilazane has a plurality of structures represented by Formula (B4) in a molecule, a bonding site of the structure represented by Formula (B4) may be bonded to another bonding site of the structure represented by Formula (B4).

The bonding site of the constituent unit represented by Formula (B3) or the bonding site of the N atom which is not bonded to another bonding site of the structure represented by Formula (B4) may have the same substituent as that of $R^{14}$, and the bonding site of the constituent unit represented by Formula (B3) or the bonding site of the Si atom which is not bonded to another bonding site of the structure represented by Formula (B4) may have the same substituent as that of $R^{15}$.

$n_2$ represents an integer of 1 to 10000. $n_2$ may represent an integer of 1 to 10 or 1 or 2.

The silazane or modified product thereof (2) is not particularly limited. However, from the viewpoints of improving the dispersibility and suppressing aggregation, an organopolysilazane or modified product thereof is preferable as the silazane or modified product thereof (2). The organopolysilazane may be an organopolysilazane in which at least one of $R^{14}$ and $R^{15}$ in Formula (B3) represents an alkyl group having 1 to 20 carbon atoms, an alkenyl group having 1 to 20 carbon atoms, a cycloalkyl group having 3 to 20 carbon atoms, an aryl group having 6 to 20 carbon atoms, or an alkylsilyl group having 1 to 20 carbon atoms and which has a constituent unit represented by Formula (B3) or an organopolysilazane in which at least one bonding site in Formula (B4) is bonded to $R^{14}$ or $R^{15}$ and at least one of $R^{14}$ and $R^{15}$ represents an alkyl group having 1 to 20 carbon atoms, an alkenyl group having 1 to 20 carbon atoms, a cycloalkyl group having 3 to 20 carbon atoms, an aryl group having 6 to 20 carbon atoms, or an alkylsilyl group having 1 to 20 carbon atoms and which has a structure represented by Formula (B4).

It is preferable that the organopolysilazane is an organopolysilazane in which at least one of $R^{14}$ and $R^{15}$ in Formula (B3) represents a methyl group and has a constituent unit represented by Formula (B3) or a polysilazane in which at least one bonding site in Formula (B4) is bonded to $R^{14}$ or $R^{15}$ and at least one of $R^{14}$ and $R^{15}$ represents a methyl group and which has a structure represented by Formula (B4).

A typical polysilazane is a structure in which a linear structure and a ring structure such as a 6-membered ring or a 8-membered ring are present. The molecular weight thereof is in a range of 600 to 2000 (in terms of polystyrene) as the number average molecular weight (Mn), and the silazane is a substance in a liquid or solid state depending on the molecular weight thereof. As the polysilazane, a commercially available product may be used, and examples of the commercially available product include NN120-10, NN120-20, NAX120-20, NN110, NAX120, NAX110, NL120A, NL110A, NL150A, NP110, and NP140 (all manufactured by AZ Electronic Materials plc), AZNN-120-20, Durazane (registered trademark) 1500 Slow Cure, Durazane (registered trademark) 1500 Rapid Cure, and Durazane (registered trademark) 1800 (all manufactured by Merck Performance Materials Ltd.), and Durazane (registered trademark) 1033 (manufactured by Merck Performance Materials Ltd.).

As the polysilazane having a constituent unit represented by Formula (B3), AZNN-120-20, Durazane (registered trademark) 1500 Slow Cure or Durazane (registered trademark) 1500 Rapid cure is preferable, and Durazane (registered trademark) 1500 Slow Cure is more preferable.

(3) Solvent

The solvent is not particularly limited as long as the solvent is a medium in which the semiconductor fine particle (1) can be dispersed. Further, a solvent in which the semiconductor fine particle (1) is unlikely to be dissolved is preferable.

In the present specification, the "solvent" indicates a substance (excluding a polymerizable compound and a polymer) that enters a liquid state at 25°C and 1 atm.

In the present specification, the term "dispersed" indicates a state in which the semiconductor fine particle (1) is floated or suspended in a solvent, a polymerizable compound, or a polymer or may be partially precipitated.

Examples of the solvent include an ester such as methyl formate, ethyl formate, propyl formate, pentyl formate, methyl acetate, ethyl acetate, or pentyl acetate; a ketone such as γ-butyrolactone, N-methyl-2-pyrrolidone, acetone, dimethyl ketone, diisobutyl ketone, cyclopentanone, cyclohexanone, or methyl cyclohexanone; an ether such as diethyl ether, methyl-tert-butyl ether, diisopropyl ether, dimethoxymethane, dimethoxyethane, 1,4-dioxane, 1,3-dioxolane, 4-methyldioxolane, tetrahydrofuran, methyl tetrahydrofuran, anisole, or phenetole; an alcohol such as methanol, ethanol, 1-propanol, 2-propanol, 1-butanol, 2-butanol, tert-butanol, 1-pentanol, 2-methyl-2-butanol, methoxypropanol, diacetone alcohol, cyclohexanol, 2-fluoroethanol, 2,2,2-trifluoroethanol, or 2,2,3,3-tetrafluoro-1-propanol; a glycol ether such as ethylene glycol monomethyl ether, ethylene glycol monoethyl ether, ethylene glycol monobutyl ether, ethylene glycol monoethyl ether acetate, or triethylene glycol dimethyl ether; an organic solvent containing an amide group such as N,N-dimethylformamide, acetamide, or N,N-dimethylacetamide; an organic solvent containing a nitrile group such as acetonitrile, isobutyronitrile, propionitrile, or methoxy acetonitrile; an organic solvent containing a carbonate group such as ethylene carbonate or propylene carbonate; an organic solvent containing a halogenated hydrocarbon group such as methylene chloride or chloroform; an organic solvent containing a hydrocarbon group such as n-pentane, cyclohexane, n-hexane, benzene, toluene, or xylene; and dimethyl sulfoxide.

Among these, an ester such as methyl formate, ethyl formate, propyl formate, pentyl formate, methyl acetate, ethyl acetate, or pentyl acetate; a ketone such as γ-butyrolactone, N-methyl-2-pyrrolidone, acetone, dimethyl ketone, diisobutyl ketone, cyclopentanone, cyclohexanone, or methyl cyclohexanone; an ether such as diethyl ether, methyl-tert-butyl ether, diisopropyl ether, dimethoxymethane, dimethoxyethane, 1,4-dioxane, 1,3-dioxolane, 4-methyldioxolane, tetrahydrofuran, methyl tetrahydrofuran, anisole, or phenetole; an organic solvent containing a nitrile group such as acetonitrile, isobutyronitrile, propionitrile, or methoxyacetonitrile; an organic solvent containing a carbonate group such as ethylene carbonate or propylene carbonate; an organic solvent containing a halogenated hydrocarbonate group such as methylene chloride or chloroform; or an organic solvent containing a hydrocarbon group such as n-pentane, cyclohexane, n-hexane, benzene, toluene, or xylene is preferable from the viewpoint that the polarity is low and the semiconductor fine particle (1) is unlikely to be dissolved therein, and an organic solvent containing a hydrocarbon group such as methylene chloride or chloroform; or an organic solvent containing a hydrocarbon group such as n-pentane, cyclohexane, n-hexane, benzene, toluene, or xylene is more preferable.

Polymerizable compound or polymer (4)

The polymerizable compound is not particularly limited, and one or two or more kinds thereof may be used. As the polymerizable compound, a polymerizable compound with a low solubility of the semiconductor fine particle (1) at the temperature at which the composition according to the present embodiment is produced is preferable.

Further, from the viewpoint of easily forming a sea-island-like phase separation structure described below, it is preferable that the polymerizable compound or polymer (4) is a hydrophobic polymerizable compound or polymer.

In the present specification, the "polymerizable compound" indicates a compound of a monomer containing a polymerizable group.

In a case where the composition is produced at room temperature under normal pressure, the polymerizable compound is not particularly limited, and examples thereof include known polymerizable compounds such as styrene, acrylic acid ester, methacrylic acid ester, and acrylonitrile.

Among these, from the viewpoints of the solubility and easily forming a sea-island-like phase separation structure, acrylic acid ester and/or methacrylic acid ester serving as a monomer component of an acrylic resin is preferable as the polymerizable compound.

The polymer contained in the composition according to the present embodiment is not particularly limited, and one or two or more kinds thereof may be used. As the polymer, a polymer with a low solubility of the semiconductor fine particle (1) at the temperature at which the composition according to the present embodiment is produced is preferable.

In a case where the composition is produced at room temperature under normal pressure, the polymer is not particularly limited, and examples thereof include known polymers such as polystyrene, an acrylic resin, and an epoxy resin. Among these, from the viewpoints of the solubility and easily forming a sea-island-like phase separation structure, an acrylic resin is preferable as the polymer.

The acrylic resin has a constitutional unit derived from acrylic acid ester and methacrylic acid ester. In the composition according to the present embodiment, the amount of the acrylic acid ester and/or methacrylic acid ester and the constitutional unit derived from these may be 10% by mole or greater, 30% by mole or greater, 50% by mole or greater, 80% by mole or greater, or 100% by mole or greater with respect to the amount of all constitutional units contained in the polymerizable compound or polymer (4).

The weight-average molecular weight of the polymer is preferably in a range of 100 to 1200000, more preferably in a range of 1000 to 800000, and still more preferably in a range of 5000 to 150000.

In the present specification, the "weight-average molecular weight" indicates a value in terms of polystyrene to be measured according to a gel permeation chromatography (GPC) method.

At least one compound or ion (5) selected from group consisting of ammonia, amine, carboxylic acid, and salts or ions thereof

Along with the ammonia, the amine, and the carboxylic acid, the composition according to the present embodiment may contain at least one compound or ion selected from the group consisting of salts and ions thereof as the form which can be employed by these compounds.

In other words, the composition according to the present embodiment may contain at least one compound or ion selected from the group consisting of ammonia, an amine, a carboxylic acid, a salt of the ammonia, a salt of the amine, a salt of the carboxylic acid, an ion of the ammonia, an ion of the amine, and an ion of the carboxylic acid.

The ammonia, the amine, the carboxylic acid, and the salts and the ions thereof typically function as capping ligands. The capping ligand is a compound having a function of being adsorbed on the surface of the semiconductor fine particle (1) and stably dispersing the semiconductor fine particle (1) in the composition. Examples of the ions or salts (such as an ammonium salt) of the ammonia or amine include an ammonium cation represented by Formula (A1) and an ammonium salt containing the ammonium cation. Examples of the ions or salts (such as a carboxylate) of the carboxylic acid include a carboxylate anion represented by Formula (A2) and a carboxylate containing the carboxylate anion. The composition according to the present embodiment may contain any one or both of an ammonium salt and a carboxylate.

The compound or ion (5) may be an ammonium cation represented by Formula (A3) or an ammonium salt containing the ammonium cation.

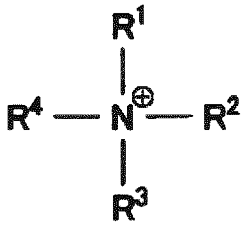

· · · (A3)

In Formula (A3), $R^1$ to $R^3$ represent a hydrogen atom, and $R^4$ represents a hydrogen atom or a monovalent hydrocarbon group. The hydrocarbon group represented by $R^4$ may be a saturated hydrocarbon group (in other words, an alkyl group or a cycloalkyl group) or an unsaturated hydrocarbon group.

The alkyl group represented by $R^4$ may be linear or branched.

The number of carbon atoms of the alkyl group represented by $R^4$ is typically in a range of 1 to 20, preferably in a range of 5 to 20, and more preferably in a range of 8 to 20.

The cycloalkyl group represented by $R^4$ may contain an alkyl group as a substituent. The number of carbon atoms in the cycloalkyl group is typically in a range of 3 to 30, preferably in a range of 3 to 20, and more preferably in a range of 3 to 11. The number of carbon atoms include the number of carbon atoms in a substituent.

The unsaturated hydrocarbon group as $R^4$ may be linear or branched.

The number of carbon atoms in the unsaturated hydrocarbon group as $R^4$ is typically in a range of 2 to 20, preferably in a range of 5 to 20, and more preferably in a range of 8 to 20.

It is preferable that $R^4$ represents a hydrogen atom, an alkyl group, or an unsaturated hydrocarbon group. As the unsaturated hydrocarbon, an alkenyl group is preferable. It is preferable that $R^4$ represents an alkenyl group having 8 to 20 carbon atoms.

Specific examples of the alkyl group as $R^4$ include those provided as exemplary examples of the alkyl group represented by $R^6$ to $R^9$.

Specific examples of the cycloalkyl group as $R^4$ include those provided as exemplary examples of the cycloalkyl group represented by $R^6$ to $R^9$.

As the alkenyl group represented by $R^4$, a group in which any one single bond (C-C) between carbon atoms is substituted with a double bond (C=C) in the linear or branched alkyl group as $R^6$ to $R^9$ is an exemplary example, and the position of the double bond is not limited.

Preferred examples of such an alkenyl group include an ethenyl group, a propenyl group, a 3-butenyl group, a 2-butenyl group, a 2-pentenyl group, a 2-hexenyl group, a 2-nonenyl group, a 2-dodecenyl group, and a 9-octadecenyl group.

In a case of the ammonium cation forms a salt, the counter ion is not particularly limited, and preferred examples thereof include halide ions such as Br-, Cl-, I-, and F-; and carboxylate ions.

Preferred examples of the ammonium cation represented by Formula (A3) and the ammonium salt containing

a counter anion include an n-octylammonium salt and an oleyl ammonium salt.

The compound or ion (5) may be a carboxylate anion represented by Formula (A4) or a carboxylate containing the carboxylate anion.

$$R^5\text{-}CO_2^- \cdots \qquad (A4)$$

In Formula (A4), $R^5$ represents a monovalent hydrocarbon group.

The hydrocarbon group represented by $R^5$ may be a saturated hydrocarbon group (in other words, an alkyl group or a cycloalkyl group) or an unsaturated hydrocarbon group.

The alkyl group represented by $R^5$ may be linear or branched.

The number of carbon atoms of the alkyl group represented by $R^5$ is typically in a range of 1 to 20, preferably in a range of 5 to 20, and more preferably in a range of 8 to 20.

The cycloalkyl group represented by $R^5$ may contain an alkyl group as a substituent. The number of carbon atoms in the cycloalkyl group is typically in a range of 3 to 30, preferably in a range of 3 to 20, and more preferably in a range of 3 to 11. The number of carbon atoms include the number of carbon atoms in a substituent.

The unsaturated hydrocarbon group as $R^5$ may be linear or branched.

The number of carbon atoms in the unsaturated hydrocarbon group as $R^5$ is typically in a range of 2 to 20, preferably in a range of 5 to 20, and more preferably in a range of 8 to 20.

It is preferable that $R^5$ represents an alkyl group or an unsaturated hydrocarbon group. As the unsaturated hydrocarbon group, an alkenyl group is preferable.

Specific examples of the alkyl group as $R^5$ include those provided as exemplary examples of the alkyl group represented by $R^6$ to $R^9$.

Specific examples of the cycloalkyl group as $R^5$ include those provided as exemplary examples of the cycloalkyl group represented by $R^6$ to $R^9$.

Specific examples of the alkenyl group as $R^5$ include those provided as exemplary examples of the alkenyl group represented by $R^4$.

As the carboxylate anion represented by Formula (A4), an oleate anion is preferable.

In a case where the carboxylate anion forms a salt, the counter cation is not particularly limited, and preferred examples thereof include an alkali metal ion, an alkaline earth metal cation, and an ammonium cation.

<Method for producing composition>

A production method for the composition according to the present embodiment includes a step of mixing the light-emitting semiconductor fine particle (1), the silazane or modified product thereof (2), and the polymerizable compound or polymer (4) in the presence of the solvent (3).

Here, as the light-emitting semiconductor fine particle (1) to be added, a fine particle coated with the silazane or modified product thereof (2) is excluded.

According to the production method for the composition according to the present embodiment, a composition having durability with respect to water vapor can be produced without performing a step of mixing the light-emitting semiconductor fine particle (1) with the silazane or modified product thereof (2) to cause a reaction in advance and a step of drying the obtained reaction product to obtain the light-emitting semiconductor fine particle (1) coated with the silazane or modified product thereof (2).

The production method for the composition according to the present embodiment which includes the step of mixing the light-emitting semiconductor fine particle (1), the silazane or modified product thereof (2), and the polymerizable compound or polymer (4) in the presence of the solvent (3) may be a production method (a) for the composition which includes a step of dispersing the light-emitting semiconductor fine particle (1) in the solvent (3) to obtain a dispersion liquid and a step of mixing the silazane or modified product thereof (2) and the polymerizable compound or polymer (4) into the dispersion liquid or a production method (b) for the composition which includes a step of dispersing the silazane or modified product thereof (2) in the solvent (3) to obtain a dispersion liquid and a step of mixing the light-emitting semiconductor fine particle (1) and the polymerizable compound or polymer (4) into the dispersion liquid.

From the viewpoint of improving the dispersibility of the light-emitting semiconductor fine particle (1), the production method (a) is preferable as the production method for the composition according to the present embodiment.

The production method (a) may be a production method (a1) for the composition which includes a step of dispersing the light-emitting semiconductor fine particle (1) in the solvent (3) to obtain a dispersion liquid, a step of mixing the polymerizable compound or polymer (4) into the dispersion liquid to obtain a mixed solution, and a step of mixing the silazane or modified production thereof (2) into the mixed solution; or a production method (a2) for the composition which includes a step of dispersing the light-emitting semiconductor fine particle (1) in the solvent (3) to obtain a dispersion liquid, a step of mixing the silazane or modified product thereof (2) into the dispersion liquid to obtain a mixed solution,

and a step of mixing the polymerizable compound or polymer (4) into the mixed solution.

The production method (b) may be a production method (b1) for the composition which includes a step of dispersing the silazane or modified product thereof (2) in the solvent (3) to obtain a dispersion liquid, a step of mixing the polymerizable compound or polymer (4) into the dispersion liquid to obtain a mixed solution, and a step of mixing the light-emitting semiconductor fine particle (1) into the mixed solution; or a production method (b2) for the composition which includes a step of dispersing the silazane or modified product thereof (2) in the solvent (3) to obtain a dispersion liquid, a step of mixing the light-emitting semiconductor fine particle (1) into the dispersion liquid to obtain a mixed solution, and a step of mixing the polymerizable compound or polymer (4) into the mixed solution.

From the viewpoint of improving the dispersibility of the light-emitting semiconductor fine particle (1) or the silazane or modified product thereof (2), it is preferable that stirring is performed in each step included in the above-described production methods.

In each step included in the above-described production methods, the temperature is not particularly limited, but is preferably in a range of 0°C to 100°C and more preferably in a range of 10°C to 80°C from the viewpoint of uniformly mixing the mixture.

The compound or ion (5) may be added in any step included in the above-described production methods.

Further, the compound or ion (5) may be mixed in any step included in a production method for a semiconductor fine particle described below.

In a case where a silazane is employed as the silazane or modified product thereof (2) in the production method for the composition according to the present embodiment, the production method for the composition according to the present embodiment may include a step of performing a modification treatment on the mixed solution containing the silazane.

The timing for performing the modification treatment is not particularly limited. For example, the production method (a) may include a step of dispersing the light-emitting semiconductor fine particle (1) in the solvent (3) to obtain a dispersion liquid; a step of mixing a silazane (2') into the dispersion liquid to obtain a mixed solution; a step of performing a modification treatment on the mixed solution to obtain a mixed solution containing a modified product of silazane; and a step of mixing the polymerizable compound or polymer (4) into the mixed solution containing the modified product of silazane.

The silazane (2') has the same definition as that for the silazane included in the silazane or modified product thereof (2) described above.

The method of performing the modification treatment is not particularly limited as long as the method is a method in which a Si-O-Si bond is formed by substituting N with O in at least some Si-N-Si bonds contained in the silazane. Examples of the method of performing the modification treatment include known methods such as a method of radiating ultraviolet rays and a method of reacting the silazane with water vapor.

Among these, from the viewpoint of forming a stronger protected region in the vicinity of the semiconductor fine particle (1), it is preferable that the modification treatment is performed by reacting the silazane with water vapor (hereinafter, also referred to as "a humidification treatment is performed").

The wavelength of ultraviolet rays used in the method of radiating ultraviolet rays is typically in a range of 10 to 400 nm, preferably in a range of 10 to 350 nm, and more preferably in a range of 100 nm to 180 nm. Examples of the light source that generates ultraviolet rays include a metal halide lamp, a high pressure mercury lamp, a low pressure mercury lamp, a xenon arc lamp, a carbon arc lamp, an excimer lamp, and UV laser light.

In a case where the humidification treatment is performed, for example, the composition may be allowed to stand or be stirred for a certain time under conditions of a temperature and a humidity described below.

From the viewpoint of improving the dispersibility of the silazane contained in the composition, it is preferable that stirring is carried out.

The temperature during the humidification treatment may be a temperature at which the modification sufficiently proceeds and is preferably in a range of 5°C to 150°C, more preferably in a range of 10°C to 100°C, and still more preferably in a range of 15°C to 80°C.

The humidity during the humidification treatment may be a humidity at which the moisture is sufficiently supplied to the compound containing the silazane in the composition and is in a range of 30% to 100%, preferably in a range of 40% to 95%, and more preferably in a range of 60% to 90%.

In the present specification, the "humidity" indicates the relative humidity at a temperature at which the humidification treatment is performed.

The time required for the humidification treatment may be a time at which the modification sufficiently proceeds and is in a range of 10 minutes to 1 week, preferably in a range of 1 hour to 5 days, and more preferably in a range of 12 hours to 3 days.

<Regarding compounding ratio of each component>

In the production method for the composition according to the present embodiment, the content ratio of the light-emitting semiconductor fine particle (1) with respect to the total mass of the composition is not particularly limited. However, from the viewpoints of making the light-emitting semiconductor fine particle (1) difficult to be condensed and preventing the concentration quenching, the content ratio thereof is preferably 50% by mass or less, more preferably 1% by mass or less, and still more preferably 0.1% by mass or less. Further, from the viewpoint of obtaining an excellent quantum yield, the content ratio thereof is preferably 0.0001% by mass or greater, more preferably 0.0005% by mass or greater, and still more preferably 0.001% by mass or greater.

The above-described upper limit and lower limit can be combined as desired.

The content ratio of the light-emitting semiconductor fine particle (1) with respect to the total mass of the composition is typically in a range of 0.0001% to 50% by mass.

The content ratio of the light-emitting semiconductor fine particle (1) with respect to the total mass of the composition is preferably in a range of 0.0001% to 1% by mass, more preferably in a range of 0.0005% to 1% by mass, and still more preferably in a range of 0.001% to 0.5% by mass.

From the viewpoints of making the light-emitting semiconductor fine particle (1) difficult to aggregate and exhibiting an excellent light-emitting property, a composition in which the content ratio of the light-emitting semiconductor fine particle (1) with respect to the total mass of the composition is in the above-described range is preferable.

In the production method for the composition according to the present embodiment, the content ratio of the silazane or modified product thereof (2) with respect to the total mass of the composition is not particularly limited. However, from the viewpoint of improving the dispersibility of the silazane or modified product thereof (2) contained in the composition, the content ratio thereof is preferably 30% by mass or less, more preferably 15% by mass or less, and still more preferably 7% by mass or less. Further, from the viewpoint that the effect for improving the durability with respect to water vapor due to the silazane or modified product thereof (2) becomes excellent, the content ratio thereof is preferably 0.001% by mass or greater, more preferably 0.01% by mass or greater, and still more preferably 0.1% by mass or greater.

The above-described upper limit and lower limit can be combined as desired.

The content ratio of the silazane or modified product thereof (2) with respect to the total mass of the composition is typically in a range of 0.001% to 30% by mass.

The content ratio of the silazane or modified product thereof (2) with respect to the total mass of the composition is preferably in a range of 0.01% to 15% by mass, more preferably in a range of 0.1% to 10% by mass, and still more preferably in a range of 0.2% to 7% by mass.

From the viewpoint that the dispersibility of the silazane or modified product thereof (2) contained in the composition is high and the effect for improving the durability with respect to water vapor due to the silazane or modified product thereof (2) is particularly satisfactorily exhibited, a composition in which the content ratio of the silazane or modified product thereof (2) with respect to the total mass of the composition is in the above-described range is preferable.

In the production method for the composition according to the present embodiment, the compounding ratio between the mass of the light-emitting semiconductor fine particle (1), and the total mass of the solvent (3) and the polymerizable compound or polymer (4) in the composition according to the present embodiment is not particularly limited. However, the compounding ratio thereof may be at a level where the effect for emission due to the light-emitting semiconductor fine particle (1) is satisfactorily exhibited and can be appropriately determined depending on the kinds or the like of the light-emitting semiconductor fine particle (1), the silazane or modified product thereof (2), the solvent (3), and the polymerizable compound or polymer (4).

The mass ratio [light-emitting semiconductor fine particle (1)/(total amount of solvent (3) and polymerizable compound or polymer (4))] of the light-emitting semiconductor fine particle (1) with respect to the total amount of the solvent (3) and the polymerizable compound or polymer (4) is typically in a range of 0.00001 to 10, preferably in a range of 0.0001 to 2, and more preferably in a range of 0.0005 to 1.

From the viewpoints of making the light-emitting semiconductor fine particle (1) difficult to aggregate and exhibiting an excellent light-emitting property, a composition in which the compounding ratio between the mass of the light-emitting semiconductor fine particle (1), and the total mass of the solvent (3) and the polymerizable compound or polymer (4) is in the above-described range is preferable.

In the production method for the composition according to the present embodiment, the compounding ratio between the light-emitting semiconductor fine particle (1) and the compound or ion (5) in the composition according to the present embodiment is not particularly limited. However, the content ratio thereof may be at a level where the effect for emission due to the light-emitting semiconductor fine particle (1) is satisfactorily exhibited and can be appropriately determined depending on the kinds or the like of the light-emitting semiconductor fine particle (1), the silazane or modified product thereof (2), the solvent (3), the polymerizable compound or polymer (4), and the compound or ion (5).

In the production method for the composition according to the embodiment which contains the light-emitting

semiconductor fine particle (1), the silazane or modified product thereof (2), the solvent (3), the polymerizable compound or polymer (4), and the compound or ion (5), the molar ratio [(1)/(5)] of the light-emitting semiconductor fine particle (1) to the compound or ion (5) may be in a range of 0.0001 to 1000 or in a range of 0.01 to 100.

From the viewpoints of making the light-emitting semiconductor fine particle (1) difficult to aggregate and exhibiting an excellent light-emitting property, a composition in which the compounding ratio between the light-emitting semiconductor fine particle (1) and the compound or ion (5) is in the above-described range is preferable.

In the production method for the composition according to the present embodiment, the total content ratio of the light-emitting semiconductor fine particle (1) and the silazane or modified product thereof (2) with respect to the total mass of the composition is not particularly limited. However, from the viewpoints of making the light-emitting semiconductor fine particle (1) difficult to be condensed and preventing the concentration quenching, the content ratio thereof is preferably 60% by mass or less, more preferably 40% by mass or less, still more preferably 30% by mass or less, and particularly preferably 20% by mass or less. Further, from the viewpoint of obtaining an excellent quantum yield, the content ratio thereof is preferably 0.0002% by mass or greater, more preferably 0.002% by mass or greater, and still more preferably 0.005% by mass or greater.

The above-described upper limit and lower limit can be combined as desired.

The total content ratio of the light-emitting semiconductor fine particle (1) and the silazane or modified product thereof (2) with respect to the total mass of the composition is typically in a range of 0.0002% to 60% by mass.

The total content ratio of the light-emitting semiconductor fine particle (1) and the silazane or modified product thereof (2) with respect to the total mass of the composition is preferably in a range of 0.001% to 40% by mass, more preferably in a range of 0.002% to 30% by mass, and still more preferably in a range of 0.005% to 20% by mass.

From the viewpoints of making the light-emitting semiconductor fine particle (1) difficult to aggregate and exhibiting an excellent light-emitting property, a composition in which the total content ratio of the light-emitting semiconductor fine particle (1) and the silazane or modified product thereof (2) with respect to the total mass of the composition is in the above-described range is preferable.

In the production method for the composition according to the present embodiment, the compounding ratio between between the light-emitting semiconductor fine particle (1) and the silazane or modified product thereof (2) may be at a level where the effect for improvement in the durability with respect to water vapor due to the silazane or modified product thereof (2) is exhibited and can be appropriately determined depending on the kinds or the like of the light-emitting semiconductor fine particle (1) and the silazane or modified product thereof (2).

In the production method for the composition according to the present embodiment, in a case where a compound containing an indium element described below is employed as the light-emitting semiconductor fine particle (1), the molar ratio [Si/In] of the Si element in the silazane or modified product thereof (2) to the In element in the compound containing an indium element may be in a range of 0.001 to 2000 or in a range of 0.01 to 500.

In the production method for the composition according to the present embodiment, in a case where the silazane or modified product thereof (2) is a silazane represented by Formula (B1) or (B2) or a modified product thereof, the molar ratio [Si/In] of the Si element in the silazane or modified product thereof (2) to the In element in the compound containing an indium element as the light-emitting semiconductor fine particle (1) may be in a range of 1 to 1000, in a range of 10 to 500, or in a range of 20 to 300.

In the production method for the composition according to the present embodiment, in a case where the silazane or modified product thereof (2) is a polysilazane having a constituent unit which is represented by Formula (B3), the molar ratio [Si/In] of the Si element in the silazane or modified product thereof (2) to the In element in the compound containing an indium element as the light-emitting semiconductor fine particle (1) may be in a range of 0.001 to 2000, in a range of 0.01 to 2000, in a range of 0.1 to 1000, in a range of 1 to 500, or in a range of 2 to 300.

In the production method for the composition according to the present embodiment, in a case where a perovskite compound containing components A, B, and X described below is employed as the light-emitting semiconductor fine particle (1), the molar ratio [Si/B] of the Si element in the silazane or modified product thereof (2) to the metal ion in the B component of the perovskite component may be in a range of 0.001 to 2000 or in a range of 0.01 to 500.

In the production method for the composition according to the present embodiment, in a case where the silazane or modified product thereof (2) is a silazane represented by Formula (B1) or (B2) or a modified product thereof, the molar ratio [Si/B] of the Si element in the silazane or modified product thereof (2) to the metal ion in the B component of the perovskite component as the light-emitting semiconductor fine particle (1) may be in a range of 1 to 1000, in a range of 10 to 500, or in a range of 20 to 300.

In the production method for the composition according to the present embodiment, in a case where the silazane or modified product thereof (2) is a polysilazane having a constituent unit which is represented by Formula (B3), the molar ratio [Si/B] of the Si element in the silazane or modified product thereof (2) to the metal ion in the B component of the perovskite component as the light-emitting semiconductor fine particle (1) may be in a range of 0.001 to 2000, in a range of 0.01 to 2000, in a range of 0.1 to 1000, in a range of 1 to 500, or in a range of 2 to 300.

From the viewpoint that the effect for improving the durability with respect to water vapor due to the silazane

or modified product thereof (2) is particularly satisfactorily exhibited, a composition in which the compounding ratio between the light-emitting semiconductor fine particle (1) and the silazane or modified product thereof (2) is in the above-described range is preferable.

Production method for semiconductor fine particle (1)

Hereinafter, the production method for the semiconductor fine particle (1) will be described.

The production method for a semiconductor fine particle containing a Group II-V compound, a semiconductor fine particle containing a Group II-VI compound, a semiconductor fine particle containing a Group III-IV compound, a semiconductor fine particle containing a Group III-V compound, a semiconductor fine particle containing a Group III-VI compound, a semiconductor fine particle containing a Group IV-VI compound, and a semiconductor fine particle containing a Group I-III-VI compound (1-1); and a semiconductor fine particle containing a perovskite compound (1-2) will be described based on embodiments. The production method for the semiconductor fine particle (1) is not limited to those produced according to the following production method.

Semiconductor fine particle containing Group II-V compound, semiconductor fine particle containing Group II-VI compound, semiconductor fine particle containing Group III-IV compound, semiconductor fine particle containing Group III-V compound, semiconductor fine particle containing Group III-VI compound, semiconductor fine particle containing Group IV-VI compound, and semiconductor fine particle containing Group I-III-VI compound (1-1)

Commercially available products may be used as the semiconductor fine particle containing a Group II-V compound, the semiconductor fine particle containing a Group II-VI compound, the semiconductor fine particle containing a Group III-IV compound, the semiconductor fine particle containing a Group III-V compound, the semiconductor fine particle containing a Group III-VI compound, the semiconductor fine particle containing a Group IV-VI compound, and the semiconductor fine particle containing a Group I-III-VI compound (1-1), and these semiconductor fine particles may be produced according to a known production method. Examples of the known production method include a method of heating a single substance of element constituting the semiconductor fine particle or a mixed solution obtained by mixing a compound thereof with a fat-soluble solvent.

The single substance of element constituting the semiconductor fine particle or the compound thereof is not particularly limited, and examples thereof include a metal, an oxide, an acetate, an organometallic compound, a halide, and a nitrate.

Examples of the fat-soluble solvent include a nitrogen-containing compound which contains a hydrocarbon group having 4 to 20 carbon atoms and an oxygen-containing compound which contains a hydrocarbon group having 4 to 20 carbon atoms. Examples of the hydrocarbon group having 4 to 20 carbon atoms include a saturated aliphatic hydrocarbon group such as an n-butyl group, an isobutyl group, an n-pentyl group, an octyl group, a decyl group, a dodecyl group, a hexadecyl group, or an octadecyl group; an unsaturated aliphatic hydrocarbon group such as an oleyl group; an alicyclic hydrocarbon group such as a cyclopentyl group or a cyclohexyl group; and an aromatic hydrocarbon group such as a phenyl group, a benzyl group, a naphthyl group, or a naphthylmethyl group. Among these, a saturated aliphatic hydrocarbon group or an unsaturated aliphatic hydrocarbon group is preferable. Examples of the nitrogen-containing compound include amines and amides; and examples of the oxygen-containing compound include fatty acids. Among such fat-soluble solvents, a nitrogen-containing compound which contains a hydrocarbon group having 4 to 20 carbon atoms is preferable, and preferred examples thereof include alkylamine such as n-butylamine, isobutylamine, n-pentylamine, n-hexylamine, octylamine, decylamine, dodecylamine, hexadecylamine, or octadecylamine and alkenylamine such as oleylamine. Such a fat-soluble solvent can be bonded to the surface of the semiconductor fine particle, and examples of the bonding mode include chemical bonds such as a covalent bond, an ionic bond, a coordination bond, a hydrogen bond, and a van der Waals bond.

The heating temperature of the mixed solution may be appropriately set depending on the kind of a single substance or compound to be used. For example, it is preferable that the heating temperature thereof is set to be in a range of 130°C to 300°C and more preferable that the heating temperature thereof is set to be in a range of 240°C to 300°C. From the viewpoint of easily unifying the crystal structure, it is preferable that the heating temperature is higher than or equal to the above-described lower limit. Further, the heating time may also be appropriately set depending on the kind of a single substance or compound to be used and the heating temperature. Typically, it is preferable that the heating time is set to be in a range of several seconds to several hours and more preferable that the heating time is set to be in a range of 1 minute to 60 minutes.

In the production method for the semiconductor fine particle according to the present invention, the heated mixed solution is cooled, the supernatant is separated from the precipitate, and the separated semiconductor fine particle (precipitate) is added to an organic solvent (such as chloroform, toluene, hexane, or n-butanol) to obtain a solution containing the semiconductor fine particle. Alternatively, the heated mixed solution is cooled, the supernatant is separated from the precipitate, a solvent in which nanoparticles are insoluble or sparingly soluble (such as methanol, ethanol, acetone, or acetonitrile) is added to the separated supernatant to generate precipitates, the precipitates are collected

and added to the organic solvent to obtain a solution containing the semiconductor fine particle.

Production method (1-2) for semiconductor fine particle containing perovskite compound

The perovskite compound according to the present invention can be produced according to a method of a first embodiment or a second embodiment described below with reference to, for example, the known literature (Nano Lett. 2015, 15, 3692 to 3696, ACSNano, 2015, 9, 4533 to 4542).

(First embodiment of method for producing perovskite compound)

Examples of the method of producing the perovskite compound according to the present invention include a production method including a step of dissolving the component B, the component X, and the component A in a solvent x; and a step of mixing the obtained solution g with a solvent y in which the solubility of the perovskite compound therein is lower than that of the solvent x used in the step of obtaining the solution g.

More specific examples thereof include a production method including a step of dissolving a compound that contains the component B and the component X and a compound that contains the component A, or the component A and the component X in a solvent x to obtain a solution g; and a step of mixing the obtained solution g with a solvent y in which the solubility of the perovskite compound therein is lower than that of the solvent x used in the step of obtaining the solution g.

The perovskite compound is precipitated by mixing the obtained solution g with the solvent y in which the solubility of the perovskite compound therein is lower than that of the solvent x used in the step of obtaining the solution g.

Hereinafter, the production method including a step of dissolving a compound that contains the component B and the component X and a compound that contains the component A, or the component A and the component X in a solvent x to obtain a solution g; and a step of mixing the obtained solution g with a solvent y in which the solubility of the perovskite compound therein is lower than that of the solvent x used in the step of obtaining the solution g will be described.

Further, the solubility indicates the solubility at the temperature of carrying out the mixing step.

From the viewpoint of stably dispersing the perovskite compound, it is preferable that the production method includes a step of adding capping ligands. It is preferable that the capping ligands are added before the mixing step is carried out. The capping ligands may be added to the solution g in which the component A, the component B, and the component X are dissolved; the solvent y in which the solubility of the perovskite compound therein is lower than that of the solvent x used in the step of obtaining the solution g; or both of solvent x and the solvent y.

It is preferable that the production method includes a step of removing coarse particles using a method of carrying out centrifugation or filtration after the mixing step described above. The size of the coarse particles to be removed by the removal step is preferably 10 μm or greater, more preferably 1 μm or greater, and still more preferably 500 nm or greater.

The step of mixing the solution g with the solvent y described above may be a step (I) of adding the solution g dropwise to the solvent y or a step (II) of adding the solvent y dropwise to the solution g.

However, from the viewpoint of improving the dispersibility of the semiconductor fine particle (1), the step (I) is preferable.

It is preferable that stirring is performed during dropwise addition from the viewpoint of improving the dispersibility of the semiconductor fine particle (1).

In the step of mixing the solution g with the solvent y, the temperature is not particularly limited, but is preferably in a range of -20°C to 40°C and more preferably in a range of -5°C to 30°C from the viewpoint of ensuring easy precipitation of the perovskite semiconductor fine particle (1).

Two kinds of solvents x and y with different solubilities in the solvent of the perovskite compound used in the production method are not particularly limited, and examples thereof include two solvents selected from the group consisting of an ester such as methyl formate, ethyl formate, propyl formate, pentyl formate, methyl acetate, ethyl acetate, or pentyl acetate; a ketone such as γ-butyrolactone, N-methyl-2-pyrrolidone, acetone, dimethyl ketone, diisobutyl ketone, cyclopentanone, cyclohexanone, or methyl cyclohexanone; an ether such as diethyl ether, methyl-tert-butyl ether, diisopropyl ether, dimethoxymethane, dimethoxyethane, 1,4-dioxane, 1,3-dioxolane, 4-methyl dioxolane, tetrahydrofuran, methyl tetrahydrofuran, anisole, or phenetole; an alcohol such as methanol, ethanol, 1-propanol, 2-propanol, 1-butanol, 2-butanol, tert-butanol, 1-pentanol, 2-methyl-2-butanol, methoxypropanol, diacetone alcohol, cyclohexanol, 2-fluoroethanol, 2,2,2-trifluoroethanol, or 2,2,3,3-tetrafluoro-1-propanol; a glycol ether such as ethylene glycol monomethyl ether, ethylene glycol monoethyl ether, ethylene glycol monobutyl ether, ethylene glycol monoethyl ether acetate, or triethylene glycol dimethyl ether; an organic solvent containing an amide group such as N,N-dimethylformamide, acetamide, or N,N-dimethylacetamide; an organic solvent containing a nitrile group such as acetonitrile, isobutyronitrile, propionitrile, or methoxy acetonitrile; an organic solvent containing a carbonate group such as ethylene carbonate or propylene carbonate; an organic solvent containing a halogenated hydrocarbon group such as methylene chloride or chloroform;

an organic solvent containing a hydrocarbon group such as n-pentane, cyclohexane, n-hexane, benzene, toluene, or xylene; and dimethyl sulfoxide.

As the solvent x used in the step of obtaining the solution g which is included in the production method, a solvent with a higher solubility in the solvent of the perovskite compound is preferable, and examples thereof include, in a case where the step is performed at room temperature (10°C to 30°C), alcohols such as methanol, ethanol, 1-propanol, 2-propanol, 1-butanol, 2-butanol, tert-butanol, 1-pentanol, 2-methyl-2-butanol, methoxypropanol, diacetone alcohol, cyclohexanol, 2-fluoroethanol, 2,2,2-trifluoroethanol, and 2,2,3,3-tetrafluoro-1-propanol; a glycol ether such as ethylene glycol monomethyl ether, ethylene glycol monoethyl ether, ethylene glycol monobutyl ether, ethylene glycol monoethyl ether acetate, or triethylene glycol dimethyl ether; an organic solvent containing an amide group such as N,N-dimethylformamide, acetamide, or N,N-dimethylacetamide; and dimethyl sulfoxide.

As the solvent y used in the mixing step which is included in the production method, a solvent with a lower solubility in the solvent of the perovskite compound is preferable, and examples thereof include, in a case where the step is performed at room temperature (10°C to 30°C), an ester such as methyl formate, ethyl formate, propyl formate, pentyl formate, methyl acetate, ethyl acetate, or pentyl acetate; a ketone such as γ-butyrolactone, N-methyl-2-pyrrolidone, acetone, dimethyl ketone, diisobutyl ketone, cyclopentanone, cyclohexanone, or methyl cyclohexanone; an ether such as diethyl ether, methyl-tert-butyl ether, diisopropyl ether, dimethoxymethane, dimethoxyethane, 1,4-dioxane, 1,3-dioxolane, 4-methyldioxolane, tetrahydrofuran, methyl tetrahydrofuran, anisole, or phenetole; an organic solvent containing a nitrile group such as acetonitrile, isobutyronitrile, propionitrile, or methoxy acetonitrile; an organic solvent containing a carbonate group such as ethylene carbonate or propylene carbonate; an organic solvent containing a halogenated hydrocarbon group such as methylene chloride or chloroform; and an organic solvent containing a hydrocarbon group such as n-pentane, cyclohexane, n-hexane, benzene, toluene, or xylene.

A difference in solubility between two kinds of solvents with different solubilities is preferably in a range of (100 μg/100 g of solvent) to (90 g/100 g of solvent) and more preferably in a range of (1 mg/100 g of solvent) to (90 g/100 g of solvent). From the viewpoint of adjusting the difference in solubility to be in a range of (100 μg/100 g of solvent) to (90 g/100 g of solvent), for example, in a case where the mixing step is performed at room temperature (10°C to 30°C), it is preferable that the solvent x used in the step of obtaining the solution is an organic solvent containing an amide group such as N,N-dimethylacetamide or dimethyl sulfoxide, and the solvent y used in the mixing step is an organic solvent containing a halogenated hydrocarbon group such as methylene chloride or chloroform or an organic solvent containing a hydrocarbon group such as n-pentane, cyclohexane, n-hexane, benzene, toluene, or xylene.

In a case where the perovskite compound is extracted from the obtained dispersion liquid containing the perovskite compound, it is possible to recover only the perovskite compound by performing solid-liquid separation.

Examples of the above-described solid-liquid separation method include a method of performing filtration or the like and a method of using evaporation of a solvent. Only the perovskite compound can be recovered by performing solid-liquid separation.

(Second embodiment of method for producing perovskite compound)

The method for producing the perovskite compound may be a production method including a step of adding the component B, the component X, and the component A to a solvent z at a high temperature and dissolving the components therein to obtain a solution h; and a step of cooling the obtained solution h.

More specifically, a production method including a step of adding a compound containing the component B and the component X and a compound containing the component A, or the component A and the component X to a solvent z at a high temperature and dissolving the components therein to obtain a solution h; and a step of cooling the obtained solution h is an exemplary example.

The step of adding a compound containing the component B and the component X and a compound containing the component A, or the component A and the component X to a solvent z at a high temperature and dissolving the components therein to obtain a solution h may be a step of adding a compound containing the component B and the component X and a compound containing the component A, or the component A and the component X to a solvent z and increasing the temperature to obtain a solution h.

According to the production method, the perovskite compound according to the present invention can be produced by allowing the perovskite compound according to the present invention to precipitate based on the difference in solubility caused by the difference in temperature.

From the viewpoint of stably dispersing the perovskite compound, it is preferable that the production method includes a step of adding capping ligands. It is preferable that the capping ligands are added before the cooling step and also preferable that the capping ligands are added to the solution h in which the component A, the component B, and the component X are dissolved.

It is preferable that the production method includes a step of removing coarse particles using a method of carrying out centrifugation or filtration after the above-described cooling step. The size of the coarse particles to be

removed by the above-described removal step is preferably 10 μm or greater, more preferably 1 μm or greater, and still more preferably 500 nm or greater.

Here, the solvent z at a high temperature may be a solvent at a temperature at which the compound containing the component B and the component X and the compound containing the component A or the component A and the component X are dissolved. For example, a solvent at 60°C to 600°C is preferable, and a solvent at 80°C to 400°C is more preferable.

The cooling temperature is preferably in a range of -20°C to 50°C and more preferably in a range of -10°C to 30°C.

The cooling temperature is preferably in a range of 0.1°C to 1500°C/min and more preferably in a range of 10°C to 150°C/min.

The solvent z used in the production method is not particularly limited as long as the compound containing the component B and the component X and the compound containing the component A or the component A and the component X are dissolved in the solvent, and examples thereof include an ester such as methyl formate, ethyl formate, propyl formate, pentyl formate, methyl acetate, ethyl acetate, or pentyl acetate; a ketone such as γ-butyrolactone, N-methyl-2-pyrrolidone, acetone, dimethyl ketone, diisobutyl ketone, cyclopentanone, cyclohexanone, or methyl cyclohexanone; an ether such as diethyl ether, methyl-tert-butyl ether, diisopropyl ether, dimethoxymethane, dimethoxyethane, 1,4-dioxane, 1,3-dioxolane, 4-methyldioxolane, tetrahydrofuran, methyl tetrahydrofuran, anisole, or phenetole; an alcohol such as methanol, ethanol, 1-propanol, 2-propanol, 1-butanol, 2-butanol, tert-butanol, 1-pentanol, 2-methyl-2-butanol, methoxypropanol, diacetone alcohol, cyclohexanol, 2-fluoroethanol, 2,2,2-trifluoroethanol, or 2,2,3,3-tetrafluoro-1-propanol; a glycol ether such as ethylene glycol monomethyl ether, ethylene glycol monoethyl ether, ethylene glycol monobutyl ether, ethylene glycol monoethyl ether acetate, or triethylene glycol dimethyl ether; an organic solvent containing an amide group such as N,N-dimethylformamide, acetamide, or N,N-dimethylacetamide; an organic solvent containing a nitrile group such as acetonitrile, isobutyronitrile, propionitrile, or methoxy acetonitrile; an organic solvent containing a carbonate group such as ethylene carbonate or propylene carbonate; an organic solvent containing a halogenated hydrocarbon group such as methylene chloride or chloroform; an organic solvent containing a hydrocarbon group such as n-pentane, cyclohexane, n-hexane, benzene, toluene, or xylene; and dimethyl sulfoxide, and 1-octadecene.

In a case where the perovskite compound is extracted from the obtained dispersion liquid containing the perovskite compound, it is possible to recover only the perovskite compound by performing solid-liquid separation.

Examples of the above-described solid-liquid separation method include a method of performing filtration or the like and a method of using evaporation of a solvent. Only the perovskite compound can be recovered by performing solid-liquid separation.

The production method for the composition according to the embodiment in which the semiconductor fine particle (1) is a semiconductor fine particle containing a perovskite compound and the compound or ion (5) is mixed in any step included in the production method for the perovskite compound may be a production method (a-1) for a composition which includes a step of dissolving a compound containing the component B and the component X, a compound containing the component A, or component A and the component X, and the compound or ion (5) in a solvent x to obtain a solution g, a step of mixing the solution g with a solvent y in which the solubility of the perovskite compound therein is lower than that of the solvent x to obtain a dispersion liquid a, a step of separating the semiconductor fine particle (1) containing a perovskite compound from the dispersion liquid a, a step of dispersing the semiconductor fine particle (1) in the solvent (3) to obtain a dispersion liquid b, and a step of mixing the silazane or modified product thereof (2) and the polymerizable compound or polymer (4) into the dispersion liquid b; a production method (a-2) for a composition which includes a step of heating a mixture of a compound containing the component B and the component X, a compound containing the component A, or the component A and the component X, the compound or ion (5), and a solvent z to obtain a solution h, a step of cooling the solution h to obtain a dispersion liquid a, a step of separating the semiconductor fine particle (1) containing a perovskite compound from the dispersion liquid a, a step of dispersing the semiconductor fine particle (1) in the solvent (3) to obtain a dispersion liquid b, and a step of mixing the silazane or modified product thereof (2) and the polymerizable compound or polymer (4) into the dispersion liquid b; a production method (b-1) for a composition which includes a step of dissolving a compound containing the component B and the component X, a compound containing the component A, or the component A and the component X, and the compound or ion (5) in a solvent x to obtain a solution g, a step of mixing the solution g with a solvent y in which the solubility of the perovskite compound therein is lower than that of the solvent x to obtain a dispersion liquid a, a step of separating the semiconductor fine particle (1) containing a perovskite compound from the dispersion liquid a, a step of dispersing the silazane or modified product thereof (2) in the solvent (3) to obtain a dispersion liquid b, and a step of mixing the semiconductor fine particle (1) and the polymerizable compound or polymer (4) into the dispersion liquid b; or a production method (b-2) for a composition which includes a step of heating a mixture of a compound containing the component B and the component X, a compound containing the component A, or the component A and the component X, the compound or ion (5), and a solvent z to obtain a solution h, a step of cooling the solution h to obtain a dispersion liquid a, a step of separating the semiconductor fine particle (1) containing a perovskite compound from the dispersion liquid a, a step of

dispersing the silazane or modified product thereof (2) in the solvent (3) to obtain a dispersion liquid b, and a step of mixing the semiconductor fine particle (1) and the polymerizable compound or polymer (4) into the dispersion liquid b.

<Production method for cured product>

A cured product can be produced using the composition obtained according to the above-described production method.

The production method for a cured product according to the present embodiment may be a production method for a cured product, including a step of dispersing the semiconductor fine particle (1) in the solvent (3) to obtain a dispersion liquid, a step of mixing the silazane or modified product thereof (2) into the dispersion liquid to obtain a mixed solution, a step of mixing a polymerizable compound (4') into the mixed solution to obtain a composition, a step of polymerizing the polymerizable compound contained in the composition to obtain a composition containing a polymer, and a step of removing the solvent (3) from the composition containing a polymer.

The production method for a cured product according to the present embodiment may be a production method for a cured product, including a step of dispersing the semiconductor fine particle (1) in the solvent (3) to obtain a dispersion liquid, a step of mixing the silazane or modified product thereof (2) into the dispersion liquid to obtain a mixed solution, a step of mixing a polymer (4") into the mixed solution to obtain a composition, and a step of removing the solvent (3) from the composition.

Further, the production method for a cured product according to the present embodiment may be a production method for a cured product, including a step of dispersing the semiconductor fine particle (1) in the solvent (3) to obtain a dispersion liquid, a step of mixing the polymerizable compound (4') into the dispersion liquid to obtain a mixed solution, a step of mixing the silazane or modified product thereof (2) into the mixed solution to obtain a composition, and a step of removing the solvent (3) from the composition.

Further, the production method for a cured product according to the present embodiment may be a production method for a cured product, including a step of dispersing the semiconductor fine particle (1) in the solvent (3) to obtain a dispersion liquid, a step of mixing the polymer (4") into the dispersion liquid to obtain a mixed solution, a step of mixing the silazane or modified product thereof (2) into the mixed solution to obtain a composition, and a step of removing the solvent (3) from the composition.

The polymerizable compound (4') and the polymer (4") each have the same definition as that for the polymerizable compound and the polymer included in the above-described polymerizable compound or polymer (4).

Similar to the production method for the composition, the production method for the cured product described above may include a step of mixing the compound or ion (5), and the compound or ion (5) may be mixed in any step included in the production method for the semiconductor fine particle.

In a case where a semiconductor fine particle containing a perovskite compound is employed as the semiconductor fine particle (1), from the viewpoint of improving the dispersibility of the semiconductor fine particle (1), it is preferable that the compound or ion (5) is mixed in any step included in the production method for the perovskite compound.

The production method for the cured product according to the embodiment in which the semiconductor fine particle (1) is a semiconductor fine particle containing a perovskite compound, and the compound or ion (5) is mixed in any step included in the production method for the perovskite compound may be a production method (a-2-1) for a cured product which includes a step of heating a mixture of a compound containing the component B and the component X, a compound containing the component A, or the component A and the component X, the compound or ion (5), and a solvent z to obtain a solution h, a step of cooling the solution h to obtain a dispersion liquid a, a step of separating the semiconductor fine particle (1) containing a perovskite compound from the dispersion liquid a, a step of dispersing the semiconductor fine particle (1) in the solvent (3) to obtain a dispersion liquid b, a step of mixing the silazane or modified product thereof (2) and the polymerizable compound (4') into the dispersion liquid b to obtain a composition; a step of polymerizing the polymerizable compound contained in the composition to obtain a composition containing a polymer; and a step of removing the solvent (3) from the composition containing a polymer; or a production method (a-2-2) for a cured product which includes a step of heating a mixture of a compound containing the component B and the component X, a compound containing the component A, or the component A and the component X, the compound or ion (5), and a solvent z to obtain a solution h, a step of cooling the solution h to obtain a dispersion liquid a, a step of separating the semiconductor fine particle (1) containing a perovskite compound from the dispersion liquid a, a step of dispersing the semiconductor fine particle (1) in the solvent (3) to obtain a dispersion liquid b, a step of mixing the silazane or modified product thereof (2) and the polymer (4") into the dispersion liquid b to obtain a composition; and a step of removing the solvent (3) from the composition.

In a case where a silazane is employed as the silazane or modified product thereof (2) in the above-described production method, the production method for the cured product according to the present embodiment may include a step of performing a modification treatment on a mixed solution containing the silazane.

The timing for performing the modification treatment is not particularly limited. For example, the production method for the cured product according to the present embodiment may include a step of dispersing the semiconductor fine particle (1) in the solvent (3) to obtain a dispersion liquid, a step of mixing the silazane (2') into the dispersion liquid to obtain a mixed solution, a step of performing a modification treatment on the mixed solution to obtain a mixed solution containing a modified product of silazane, a step of mixing the polymer (4") into the mixed solution containing the modified product of silazane to obtain a composition, and a step of removing the solvent (3) from the composition.

The step of removing the solvent (3) may be a step of allowing the composition to stand at room temperature so as to be naturally dried or a step of drying the composition under reduced pressure using a vacuum dryer or heating the composition.

In the step of removing the solvent (3), the temperature or time can be appropriately selected depending on the kind of the solvent (3).

For example, the solvent (3) can be removed by being allowed to stand in a temperature range of 0°C to 300°C for 1 minute to 7 days so as to be dried.

As a method of polymerizing a polymerizable compound in a case of using the polymerizable compound (4'), a known polymerization reaction such as radical polymerization can be appropriately used.

For example, in a case of the radical polymerization, the polymerization reaction can be allowed to proceed by generating a radical in a step of adding a radical polymerization initiator and polymerizing a polymerizable compound in any step of the step of obtaining a dispersion liquid, the step of obtaining a mixed solution, or a step of obtaining a composition described above.

The radical polymerization initiator is not particularly limited, and examples thereof include a photoradical polymerization initiator.

As the photoradical polymerization initiator, bis(2,4,6-trimethylbenzoyl)-phenylphosphine oxide is an exemplary example.

In a case where the polymer (4") is used, the polymer may be a polymer in a state of being dissolved in a solvent.

The solvent in which the above-described polymer is dissolved is not particularly limited as long the polymer (resin) can be dissolved in the solvent, but a solvent in which the semiconductor fine particle (1) according to the present invention is unlikely to be dissolved is preferable.

Examples of the solvent include an ester such as methyl formate, ethyl formate, propyl formate, pentyl formate, methyl acetate, ethyl acetate, or pentyl acetate; a ketone such as γ-butyrolactone, N-methyl-2-pyrrolidone, acetone, dimethyl ketone, diisobutyl ketone, cyclopentanone, cyclohexanone, or methyl cyclohexanone; an ether such as diethyl ether, methyl-tert-butyl ether, diisopropyl ether, dimethoxymethane, dimethoxyethane, 1,4-dioxane, 1,3-dioxolane, 4-methyldioxolane, tetrahydrofuran, methyl tetrahydrofuran, anisole, or phenetole; an alcohol such as methanol, ethanol, 1-propanol, 2-propanol, 1-butanol, 2-butanol, tert-butanol, 1-pentanol, 2-methyl-2-butanol, methoxypropanol, diacetone alcohol, cyclohexanol, 2-fluoroethanol, 2,2,2-trifluoroethanol, or 2,2,3,3-tetrafluoro-1-propanol; a glycol ether such as ethylene glycol monomethyl ether, ethylene glycol monoethyl ether, ethylene glycol monobutyl ether, ethylene glycol monoethyl ether acetate, or triethylene glycol dimethyl ether; an organic solvent containing an amide group such as N,N-dimethylformamide, acetamide or N,N-dimethylacetamide; an organic solvent containing a nitrile group such as acetonitrile, isobutyronitrile, propionitrile, or methoxy acetonitrile; an organic solvent containing a carbonate group such as ethylene carbonate or propylene carbonate; an organic solvent containing a halogenated hydrocarbon group such as methylene chloride or chloroform; an organic solvent containing a hydrocarbon group such as n-pentane, cyclohexane, n-hexane, benzene, toluene, or xylene; and dimethyl sulfoxide.

Among these, an ester such as methyl formate, ethyl formate, propyl formate, pentyl formate, methyl acetate, ethyl acetate, or pentyl acetate; a ketone such as γ-butyrolactone, N-methyl-2-pyrrolidone, acetone, dimethyl ketone, diisobutyl ketone, cyclopentanone, cyclohexanone, or methyl cyclohexanone; an ether such as diethyl ether, methyl-tert-butyl ether, diisopropyl ether, dimethoxymethane, dimethoxyethane, 1,4-dioxane, 1,3-dioxolane, 4-methyldioxolane, tetrahydrofuran, methyl tetrahydrofuran, anisole, or phenetole; an organic solvent containing a nitrile group such as acetonitrile, isobutyronitrile, propionitrile, or methoxyacetonitrile; an organic solvent containing a carbonate group such as ethylene carbonate or propylene carbonate; an organic solvent containing a halogenated hydrocarbon group such as methylene chloride or chloroform; or an organic solvent containing a hydrocarbon group such as n-pentane, cyclohexane, n-hexane, benzene, toluene, or xylene is preferable from the viewpoint that the polarity is low and the semiconductor fine particle (1) according to the present invention is unlikely to be dissolved therein, and an organic solvent containing a halogenated hydrocarbon group such as methylene chloride or chloroform; or an organic solvent containing a hydrocarbon group such as n-pentane, cyclohexane, n-hexane, benzene, toluene, or xylene is more preferable.

<Production method for film>

A film can be produced using the composition obtained according to the above-described production method.

The production method for a film according to the present embodiment may be a production method for a film

which includes a step of dispersing the semiconductor fine particle (1) in the solvent (3) to obtain a dispersion liquid, a step of mixing the polymerizable compound (4') into the dispersion liquid to obtain a mixed solution, a step of mixing the silazane or modified product thereof (2) into the mixed solution to obtain a composition, a step of coating a substrate with the composition to obtain a coated film, a step of polymerizing the polymerizable compound contained in the coated film to obtain a coated film containing a polymer, and a step of removing the solvent (3) from the coated film containing a polymer; or a production method for a film which includes a step of dispersing the semiconductor fine particle (1) in the solvent (3) to obtain a dispersion liquid, a step of mixing the polymer (4") into the dispersion liquid to obtain a mixed solution, a step of mixing the silazane or modified product thereof (2) into the mixed solution to obtain a composition, a step of coating a substrate with the composition to obtain a coated film, and a step of removing the solvent (3) from the coated film.

The compound or ion (5) may be added in any step included in the above-described production methods.

Further, the compound or ion (5) is mixed in any step included in the production methods for the semiconductor fine particle, and the particle containing the compound or ion (5) may be used as the semiconductor fine particle (1).

In a case where a semiconductor fine particle containing a perovskite compound is employed as the semiconductor fine particle (1), from the viewpoint of improving the dispersibility of the semiconductor fine particle (1), it is preferable that the compound or ion (5) is mixed in any step included in the production method for the perovskite compound.

In a case where a silazane is employed as the silazane or modified product thereof (2) in the production method described above, the production method for the film according to the present embodiment may include a step of performing a modification treatment on the mixed solution containing the silazane.

The timing for performing the modification treatment is not particularly limited. For example, the production method for the film according to the present embodiment may include a step of dispersing the semiconductor fine particle (1) in the solvent (3) to obtain a dispersion liquid, a step of mixing the silazane (2') into the dispersion liquid to obtain a mixed solution, a step of performing a modification treatment on the mixed solution to obtain a mixed solution containing a modified product of silazane, a step of mixing the polymer (4") into the mixed solution containing the modified product of silazane to obtain a composition, a step of coating a substrate with the composition to obtain a coated film, and a step of removing the solvent (3) from the coated film.

The method including the step of coating a substrate with the composition to obtain a coated film which is included in the production method for the film according to the present invention is not particularly limited, and specific examples thereof include a known coating method such as a gravure coating method, a bar coating method, a printing method, a spray method, a drop cast method, a spin coating method, a dip method, or a die coating method.

The step of removing the solvent (3) which is included in the production method for the film according to the present embodiment is the same as described above.

In a case of using the polymerizable compound (4'), the method of polymerizing the polymerizable compound is the same as described above.

In a case of using the polymer (4"), the polymer may be a polymer in a state of being dissolved in a solvent and the preferable solvent is the same as described above.

The film can be obtained as a film formed on a substrate according to the production method for the film. Further, the film can be obtained by being peeled off from the substrate.

<Production method for laminated structure>

A production method for a laminated structure according to the present embodiment include a step of forming other films described below on the film obtained according to the above-described production method for the film.

Other films may be formed by performing a coating step in the same manner as in the above-described production method for the film or may be formed by performing a step of attaching other films to one another.

In the attaching step, an optional adhesive can be used.

The adhesive is not particularly limited as long as the semiconductor fine particle (1) and the compound of the silazane or modified product thereof (2) are not dissolved therein, and a known adhesive can be used.

<Production method for light-emitting device>

Examples of a production method for a light-emitting device according to the present embodiment include a production method including a step of placing the light source, and the composition the cured product, the film, or the laminated structure on an optical path of a back stage from the light source.

<Composition>

A composition according to the present embodiment has a light-emitting property. The "light-emitting property" indicates a property of emitting light. As the light-emitting property, a property of emitting light using excitation is preferable, and a property of emitting light using excitation caused by excitation light is more preferable. The wavelength of excitation light may be, for example, in a range of 200 nm to 800 nm, in a range of 250 nm to 750 nm, or in a range of 300 nm to 700 nm.
The composition according to the present embodiment contains the semiconductor fine particle (1), the silazane or modified product thereof (2), the solvent (3), and the polymerizable compound or polymer (4) described above.
The composition according to the present embodiment may contain the compound or ion (5).
The composition according to the present embodiment may further contain components other than the above-described components the semiconductor fine particle (1), the silazane or modified product thereof (2), the solvent (3), the polymerizable compound or polymer (4), and the compound or ion (5).
Examples of other components include a small amount of impurities and a compound having an amorphous structure formed of an element component constituting the perovskite compound in a case where a perovskite compound is employed as the semiconductor fine particle (1), and a polymerization initiator.
The content ratio of other components is preferably 10% by mass or less, more preferably 5% by mass or less, and still more preferably 1% by mass or less with respect to the total mass of the composition.

<Cured product>

According to the production method of the present embodiment described above, for example, a cured product which contains the semiconductor fine particle (1), the silazane or modified product thereof (2), and the polymerizable compound or polymer (4) and in which the total content ratio of the semiconductor fine particle (1), the silazane or modified product thereof (2), and the polymerizable compound or polymer (4) with respect to the total mass of the cured product is 90% by mass or greater can be obtained.
In the cured product, the total content ratio of the semiconductor fine particle (1), the silazane or modified product thereof (2), and the polymerizable compound or polymer (4) with respect to the total mass of the cured product may be 95% by mass or greater, 99% by mass or greater, or 100% by mass.
The cured product may contain the compound or ion (5) and may be a cured product which contains the semiconductor fine particle (1), the silazane or modified product thereof (2), the polymerizable compound or polymer (4), and the compound or ion (5) and in which the total content ratio of the semiconductor fine particle (1), the silazane or modified product thereof (2), the polymerizable compound or polymer (4), and the compound or ion (5) with respect to the total mass of the cured product is 90% by mass or greater.
In the cured product, the total content ratio of the semiconductor fine particle (1), the silazane or modified product thereof (2), the polymerizable compound or polymer (4), and the compound or ion (5) with respect to the total mass of the cured product may be 95% by mass or greater, 99% by mass or greater, or 100% by mass.
In the cured product, the semiconductor fine particle (1) is dispersed in the polymerizable compound or polymer (4).

<Film>

A film according to the present embodiment is a film formed of the composition which contains the semiconductor fine particle (1), the silazane or modified product thereof (2), and the polymerizable compound or polymer (4). Further, the film has a sea-island-like phase separation structure, and in the sea-island-like phase separation structure, the polymerizable compound or polymer (4) is present in a sea-like hydrophobic region, and the semiconductor fine particle (1) and the silazane or modified product thereof (2) are present in an island-like hydrophilic region. The island-like hydrophilic region has a size of 0.1 $\mu$m to 100 $\mu$m. Further, it is preferable that the semiconductor fine particle (1) is a compound having a perovskite type crystal structure.
According to the production method of the present embodiment described above, for example, a film which contains the semiconductor fine particle (1), the silazane or modified product thereof (2), and the polymerizable compound or polymer (4) and in which the total content ratio of the semiconductor fine particle (1), the silazane or modified product thereof (2), and the polymerizable compound or polymer (4) with respect to the total mass of the film is 90% by mass or greater can be obtained.
In the film, the total content ratio of the semiconductor fine particle (1), the silazane or modified product thereof (2), and the polymerizable compound or polymer (4) with respect to the total mass of the film may be 95% by mass or greater, 99% by mass or greater, or 100% by mass.
The film may contain the compound or ion (5) and may be a film which contains the semiconductor fine particle (1), the silazane or modified product thereof (2), the polymerizable compound or polymer (4), and the compound or ion

(5) and in which the total content ratio of the semiconductor fine particle (1), the silazane or modified product thereof (2), the polymerizable compound or polymer (4), and the compound or ion (5) with respect to the total mass of the film is 90% by mass or greater.

In the film, the total content ratio of the semiconductor fine particle (1), the silazane or modified product thereof (2), the polymerizable compound or polymer (4), and the compound or ion (5) with respect to the total mass of the film may be 95% by mass or greater, 99% by mass or greater, or 100% by mass.

In the film, the semiconductor fine particle (1) is dispersed in the polymerizable compound or polymer (4).

The shape of the film is not particularly limited, and the film can be formed in an optional shape such as a sheet shape or a bar shape. In the present specification, the "bar shape" indicates a shape having an anisotropy. As the shape having an anisotropy, a shape of a plate having sides with different lengths is an exemplary example.

The thickness of the film may be in a range of 0.01 μm to 1000 mm, in a range of 0.1 μm to 10 mm, or in a range of 1 μm to 1 mm.

The thickness of the film in the present specification can be obtained by measuring the thicknesses of the film at optional three points using a micrometer and calculating the average value of the measured values.

The film may be formed of a single layer or a plurality of layers. In a case of a plurality of layers, the same kind of composition according to the embodiment may be used for each layer or different kinds of composition according to the embodiment may be used for each layer.

«Sea-island-like phase separation structure»

The composition, the cured film, or the film obtained using the above-described production method according to the present embodiment each have a sea-island-like phase separation structure.

The sea-island-like phase separation structure is a phase separation structure having a sea-like hydrophobic regions and island-like hydrophilic regions, which are incompatible with each other.

The sea-like hydrophobic region is a region where the solvent (3) and the polymerizable compound or polymer (4) are present or the polymerizable compound or polymer (4) is present, and the island-like hydrophilic region is a region where a particle formed by the semiconductor fine particle (1) being contained inside the silazane or modified product thereof (2) or an aggregate of such particles is present (hereinafter, also referred to as an island-like phase).

With such a structure, since the silazane or modified product thereof (2) adsorbs oxygen or moisture which is a causative substance that deteriorates the semiconductor fine particle (1) and the semiconductor fine particle (1) is protected by being sufficiently blocked from the oxygen or moisture present outside, the durability with respect to water vapor is considered to the improved.

For example, in a composition in which the total content ratio of the semiconductor fine particle (1) and the silazane or modified product thereof (2) with respect to the total amount of the composition or the compounding ratio between between the light-emitting semiconductor fine particle (1) and the silazane or modified product thereof (2) is in the above-described range, a particle formed by the semiconductor fine particle (1) being contained inside the silazane or modified product thereof (2) or an aggregate of such particles is naturally generated.

The proportion of the number of pieces of the semiconductor fine particles (1) contained in the silazane or modified product thereof (2) with respect to the total number of pieces of the semiconductor fine particles (1) is preferably in a range of 30% to 100%, more preferably in a range of 50% to 100%, and still more preferably in a range of 70% to 100%.

The proportion of the number of pieces of the semiconductor fine particles (1) contained in the silazane or modified product thereof (2) with respect to the total number of pieces of the semiconductor fine particles (1) is calculated using a method of observing the cured product or the film using a TEM. Examples thereof include a method of observing a region with a length of 500 μm and a width of 500 μm in the cured product or the film using a TEM and calculating the proportion of the number of pieces of the semiconductor fine particles (1) contained in the silazane or modified product thereof (2) with respect to the total number of pieces of the semiconductor fine particles (1) in the observed region.

As the method of observing the sea-island-like phase separation structure and the form in which the semiconductor fine particle (1) is contained in the silazane or modified product thereof (2) in the island-like hydrophilic region, a method of observing the cured product or the film using an SEM or a TEM is an exemplary example.
Further, the detailed element distribution can be analyzed by performing EDX measurement using an SEM or a TEM.

The shape of the island-like phase is not particularly limited, and examples thereof include a spherical shape, a distorted spherical shape, a go stone shape, and a rugby ball shape. The average size of the island-like phase is not particularly limited, and the average maximum Feret diameter is in a range of 0.1 to 100 μm, preferably in a range of 0.1 to 30 μm, and more preferably in a range of 0.1 to 20 μm. In a case where the average maximum Feret diameter of the island-like phase is 0.1 μm or greater, the moisture can be effectively blocked from the outside so that the semiconductor fine particle (1) present inside the island-like phase can be sufficiently protected. From the viewpoint of maintaining the visible light transmittance, the average maximum Feret diameter of the island-like phase is preferably 100 μm or less. Examples of the method of calculating the average maximum Feret diameter include a method of

observing 20 or more of island-like phases using a TEM and acquiring the average value of the maximum Feret diameters of the respective island-like phases.

Specific examples thereof include a method of observing 20 island-like phases using a TEM and acquiring the average value of the maximum Feret diameters of the respective island-like phases.

«Dispersibility of semiconductor fine particle»

From the viewpoint of improving the light-emitting property of the composition, the cured product, or the film, it is preferable that the semiconductor fine particle (1) has high dispersibility. Examples of the method of evaluating the dispersibility of the semiconductor fine particle (1) include observation using a TEM, and an X-ray small angle scattering method (hereinafter, also referred to as SAXS), and a method of using a difference in energy value between an emission wavelength PLtop and a band edge (also referred to as a band gap) Eg.

«Dispersibility D using difference in energy value between emission wavelength PLtop and band edge Eg»

In a case where the average particle diameter of the semiconductor fine particles (1) increases, the band edge Eg causes a red shift as known in the literature of the related art (reference literature: Nano Letters 2015, 15, p. 3692 to 3696). In a case where the semiconductor fine particles (1) with a small average particle diameter are present in high dispersion, the difference in energy value between the emission wavelength PLtop and the band edge Eg decreases. However, in a case where the dispersibility of the semiconductor fine particles (1) is degraded and this leads to aggregation of the semiconductor fine particles (1) and generation of particles having a large average particle diameter, since the band edge Eg is red-shifted and a significant change does not occur in the emission wavelength PLtop, the difference in energy value between the emission wavelength PLtop and the band edge Eg increases.

Therefore, a difference D in energy value between the emission wavelength PLtop and the band edge Eg is calculated using Equation (E1), and the dispersibility of the semiconductor fine particles (1) can be evaluated based on the obtained value.

$$D = \text{PLtop (eV)} - \text{Eg (eV)} \cdots \text{Equation (E1)}$$

From the viewpoint that the semiconductor fine particles (1) with a small average particle diameter are present in high dispersion, the difference D is preferably 0.20 or less, more preferably 0.15 or less, still more preferably 0.12 or less, and particularly preferably 0.10 or less.

According to another aspect of the present invention, from the viewpoint that the semiconductor fine particles (1) with a small average particle diameter are present in high dispersion, the difference D is preferably in a range of 0.0001 to 0.20, more preferably in a range of 0.0002 to 0.15, still more preferably in a range of 0.0005 to 0.12, and particularly preferably in a range of 0.001 to 0.10.

<<Emission wavelength PLtop>>

In the emission spectrum, a value obtained by converting a wavelength at which the light emission becomes maximum into the energy value (eV) can be used as the emission wavelength PLtop. As an equation of converting a wavelength $\lambda$ (nm) into an energy value E (eV), Equation (E2) has been generally known, and the energy value can be calculated using Equation (E2).

$$E \text{ (eV)} = hc/\lambda = 1240/\lambda \text{ (nm)} \cdots \text{Equation (E2)}$$

(E: energy value (eV), h: Planck's constant, c: speed of light, $\lambda$: wavelength (nm))

«Band edge Eg»

The band edge Eg is acquired using a so-called Taus Plot method of measuring the ultraviolet visible absorption spectrum and performing calculation using a light absorption coefficient $\alpha$ calculated based on the transmittance data. Eg is acquired by plotting the square root of $\alpha$hv against hv using Equation (E3).

$$\alpha h\nu \propto (h\nu - Eg)^2 \cdots \text{Equation (E3)}$$

($\alpha$: light absorption coefficient, h: Planck's constant, v: frequency, Eg: band edge (eV))

«Measurement of concentration of semiconductor fine particle»

The amount of the semiconductor fine particles (1) contained in the dispersion liquid is measured using an inductively coupled plasma spectrometer ICP-MS (for example, ELAN DRCII, manufactured by PerkinElmer, Inc.) and ion chromatography (for example, Integrion, manufactured by ThermoFisher Scientific Inc.).
The measurement is performed after the semiconductor fine particles (1) are dissolved in a good solvent, in which the solubility of the semiconductor fine particles (1) is high, such as N,N-dimethylformamide.

«Measurement of emission spectrum»

The emission spectrum of the cured product according to the present invention is measured with excitation light having a wavelength of 450 nm at room temperature in the atmosphere using an absolute PL quantum yield measuring device (C9920-02, manufactured by Hamamatsu Photonics K. K.).

«Measurement of quantum yield»

The quantum yield of the cured product according to the present invention is measured with excitation light having a wavelength of 450 nm at room temperature in the atmosphere using an absolute PL quantum yield measuring device (C9920-02, manufactured by Hamamatsu Photonics K. K.).

«Measurement of ultraviolet visible absorption spectrum»

The ultraviolet visible absorption spectrum of the cured product according to the present embodiment is measured at room temperature in the atmosphere using an ultraviolet visible near infrared spectrophotometer (for example, V-670, manufactured by JASCO Corporation).

«Evaluation of durability with respect to water vapor»

The composition, the cured product, and the film according to the present embodiment are prepared to have a thickness of 100 μm and a size of 1 cm × 1 cm, the concentration of the semiconductor fine particles (1) contained in the composition, the cured product, and the film is adjusted to approximately 1000μg/mL, the composition, the cured product, or the film is placed in a thermohygrostat bath under a constant condition of a temperature of 60°C to 65°C and a humidity of 80% to 90%, and a test for the durability with respect to water vapor is performed. The quantum yield is measured before and after the test, and the value of (quantum yield after test for durability with respect to water vapor during X' days)/(quantum yield before test for durability with respect to water vapor) is calculated as an index of the durability with respect to water vapor.
In the composition, the cured product, and the film according to the present embodiment, the durability with respect to water vapor in the test for the durability with respect to water vapor during 3 days measured according to the measuring method may be 0.4 or greater, 0.6 or greater, or 0.7 or greater.
In the composition, the cured product, and the film according to the present embodiment, the durability with respect to water vapor in the test for the durability with respect to water vapor during 3 days measured according to the measuring method may be 1.0 or less.
According to another aspect of the present invention, in the composition, the cured product, and the film according to the present embodiment, the durability with respect to water vapor in the test for the durability with respect to water vapor during 3 days measured according to the measuring method is preferably in a range of 0.4 to 1.0, more preferably in a range of 0.6 to 1.0, and still more preferably in a range of 0.7 to 1.0.
In the composition, the cured product, and the film according to the present embodiment, the durability with respect to water vapor in the test for the durability with respect to water vapor during 5 days measured according to the measuring method may be 0.3 or greater, 0.4 or greater, or 0.5 or greater.
In the composition, the cured product, and the film according to the present embodiment, the durability with respect to water vapor in the test for the durability with respect to water vapor during 5 days measured according to the measuring method may be 1.0 or less.

According to another aspect of the present invention, in the composition according to the present embodiment, the durability after the test for the durability with respect to water vapor for 5 days measured using the above-described measuring method is preferably in a range of 0.3 to 1.0, more preferably in a range of 0.4 to 1.0, and still more preferably in a range of 0.5 to 1.0.
In the composition, the cured product, and the film according to the present embodiment, the durability with respect to water vapor in the test for the durability with respect to water vapor during 7 days measured according to the measuring method may be 0.3 or greater, 0.4 or greater, or 0.5 or greater.
In the composition, the cured product, and the film according to the present embodiment, the durability with respect to water vapor in the test for the durability with respect to water vapor during 7 days measured according to the measuring method may be 1.0 or less.
According to another aspect of the present invention, in the composition, the cured product, and the film according to the present embodiment, the durability with respect to water vapor in the test for the durability with respect to water vapor during 7 days measured according to the measuring method is preferably in a range of 0.3 to 1.0, more preferably in a range of 0.4 to 1.0, and still more preferably in a range of 0.5 to 1.0.

<Laminated structure>

The laminated structure according to the present invention has a plurality of layers, and at least one layer is the above-described film.
Among the plurality of layers included in the laminated structure, examples of layers other than the above-described film include optional layers such as a substrate, a barrier layer, and a light scattering layer.
The shape of the film to be laminated is not particularly limited, and the film can be formed in an optional shape such as a sheet shape or a bar shape.

(Substrate)

The layer which may be included in the laminated structure according to the present invention is not particularly limited, and examples thereof include a substrate.
The substrate is not particularly limited and may be a film. From the viewpoint of extracting light at the time of light emission, a transparent substrate is preferable.
As the substrate, a polymer such as polyethylene terephthalate or known substrates such as glass can be used.
For example, the above-described film may be provided on the substrate in the laminated structure.
FIG. 1 is a cross-sectional view schematically showing the configuration of the laminated structure according to the present embodiment. A film 10 according to the present embodiment may be provided between a first substrate 20 and a second substrate 21 in a first laminated structure 1a. The film 10 is sealed by a sealing layer 22.
According to one aspect of the present invention, the laminated structure 1a includes the first substrate 20, the second substrate 21, the film 10 according to the present embodiment which is positioned between the first substrate 20 and the second substrate 21, and the sealing layer 22 and is configured such that the sealing layer is disposed on a surface that does not contact with the first substrate 20 and the second substrate 21 of the film 10.

(Barrier layer)

The layer which may be included in the laminated structure according to the present invention is not particularly limited, and examples thereof include a barrier layer. The laminated structure may include a barrier layer from the viewpoint that the barrier layer protects the composition, the cured product, or the film described above from water vapor in outside air or the air in the atmosphere.
The barrier layer is not particularly limited, and a transparent barrier layer is preferable from the viewpoint of extracting emitted light. For example, a polymer such as polyethylene terephthalate or a known barrier layer such as a glass film can be used as the barrier layer.

(Light scattering layer)

The layer which can be included in the laminated structure according to the present invention is not particularly limited, and examples thereof include a light scattering layer. From the viewpoint of efficiently utilizing incident light, the laminated structure may include a light scattering layer.
The light scattering layer is not particularly limited, and a transparent light scattering layer is preferable from the viewpoint of extracting emitted light. For example, light scattering particles such as silica particles or a known light scattering layer such as an amplified diffusion film can be used.

<Light-emitting device>

A light-emitting device according to the present invention can be obtained by combining the composition according to the embodiment of the present invention or the laminated structure described above with a light source. The light-emitting device is a device that extracts light by irradiating the laminated structure or the composition placed on the back stage with light emitted from the light source and allowing the composition or the laminated structure to emit light. Among a plurality of layers included in the laminated structure in the light-emitting device, examples of layers other than the film, the substrate, the barrier layer, and the light scattering layer include optional layers such as a light reflection member, a brightness-reinforcing film, a prism sheet, a light-guiding plate, and a medium material layer between elements.

According to one aspect of the present invention, a light-emitting device 2 is formed by laminating a prism sheet 50, a light-guiding plate 60, the first laminated structure 1a, and a light source 30 in this order.

(Light source)

The light source constituting the light-emitting device according to the present invention is not particularly limited. However, from the viewpoint of allowing the composition, the cured product, the film, or semiconductor fine particles in the laminated structure to emit light, a light source having an emission wavelength of 600 nm or less is preferable. Examples of the light source include known light sources, for example, a light-emitting diode (LED) such as a blue light-emitting diode, a laser, and an EL.

(Light reflection member)

The layer which may be included in the laminated structure constituting the light-emitting device according to the present invention is not particularly limited, and examples thereof include a light reflection member. From the viewpoint of irradiating the composition, the cured film, the film, or the laminated structure with light from the light source, the laminated structure may include the light reflection member. The light reflection member is not particularly limited and may be a reflective film.

The reflective film is not particularly limited, and examples thereof include known reflective films such as a reflecting mirror, a film formed of reflective particles, a reflective metal film, and a reflector.

(Brightness-reinforcing unit)

The layer which may be included in the laminated structure constituting the light-emitting device according to the present invention is not particularly limited, and examples thereof include a brightness-reinforcing unit. From the viewpoint of reflecting partial light to be returned to the direction in which the light is transmitted, the laminated structure may include the brightness-reinforcing unit.

(Prism sheet)

The layer which may be included in the laminated structure constituting the light-emitting device according to the present invention is not particularly limited, and examples thereof include a prism sheet. A prism sheet typically includes a base material portion and a prism portion. Further, the base material portion may not be provided depending on a member adjacent to the base material portion. The prism sheet is obtained by being bonded to a member adjacent thereto through an optional appropriate adhesion layer (for example, an adhesive layer or a pressure sensitive adhesive layer). The prism sheet is configured such that a plurality of unit prisms which become projections are arranged in parallel with one another on a side (rear side) opposite to a viewing side. Light transmitted through the prism sheet is likely to be focused by arranging the projections of the prism sheet toward the rear side. Further, in a case where the projections of the prism sheet are arranged toward the rear side, the quantity of light to be reflected without being incident on the prism sheet is small compared to a case where the projections are arranged toward the viewing side, and a display with high brightness can be obtained.

(Light-guiding plate)

The layer which may be included in the laminated structure constituting the light-emitting device according to the present invention is not particularly limited, and examples thereof include a light-guiding plate. As the light-guiding plate, an optional appropriate light-guiding plate such as a light-guiding plate in which a lens pattern is formed on the rear side such that light from the lateral direction can be deflected in the thickness direction or a light-guiding plate in which a prism shape or the like is formed on the rear side and/or the viewing side is used.

(Medium material layer between elements)

The layer which may be included in the laminated structure constituting the light-emitting device according to the present invention is not particularly limited, and examples thereof include a layer (medium material layer between elements) formed of one or more medium materials on an optical path between elements (layers) adjacent to each other.
One or more mediums included in the medium material layer between element are not particularly limited, and examples thereof include vacuum, air, gas, an optical material, an adhesive, an optical adhesive, glass, a polymer, a solid, a liquid, a gel, a curing material, an optical bonding material, a refractive index matching or refractive index mismatching material, a refractive index gradient material, a cladding or anti-gladding material, a spacer, a silica gel, a brightness-reinforcing material, a scattering or diffusing material, a reflective or anti-reflective material, a wavelength selective material, a wavelength selective anti-reflective material, a color filter, and suitable media known in the technical field.
Specific examples of the light-emitting device according to the present invention include those provided with wavelength conversion materials for an EL display and a liquid crystal display.
Specific examples thereof include a backlight (e1) (on-edge type backlight) that converts blue light to green light or red light by putting the composition of the present invention into a glass tube or the like so as to be sealed and disposing the glass tube or the like between a light-guiding plate and a blue light-emitting diode serving as a light source such that the glass tube or the like is along with an end surface (side surface) of the light-guiding plate; a backlight (e2) (surface-mounting type backlight) that converts blue light to be applied to a sheet after passing through a light-guiding plate from a blue light-emitting diode placed on an end surface (side surface) of the light-guiding plate to green light or red light by forming the sheet using the composition of the present invention and placing a film obtained by interposing the sheet between two barrier films so as to be sealed on the light-guiding plate; a backlight (e3) (on-chip type backlight) that converts blue light to be applied to green light or red light by dispersing the composition of the present invention in a resin or the like and placing the resin or the like in the vicinity of a light-emitting unit of a blue light-emitting diode; and a backlight (e4) that converts blue light to be applied from a light source to green light or red light by dispersing the composition of the present invention in a resist and placing the resist on a color filter.
Further, specific examples of the light-emitting device according to the present invention include an illumination emitting white light which is obtained by forming the composition according to the embodiment of the present invention, disposing the composition on a back stage of a blue light-emitting diode serving as a light source, and converting blue light to green light or red light.

<Display>

As shown in FIG. 2, a display 3 according to the present embodiment includes a liquid crystal panel 40 and the light-emitting device 2 described above in this order from the viewing side. The light-emitting device 2 includes a second laminated structure 1b and a light source 30. The second laminated structure 1b is formed of the first laminated structure 1a which further includes a prism sheet 50 and a light-guiding plate 60. The display may further include other appropriate optional members.
According to one aspect of the present invention, the display is the liquid crystal display 3 obtained by laminating the liquid crystal panel 40, the prism sheet 50, the light-guiding plate 60, the first laminated structure 1a, and the light source 30 in this order.

(Liquid crystal panel)

The liquid crystal panel typically includes a liquid crystal cell; a viewing-side polarizing plate disposed on a viewing side of the liquid crystal cell; and a rear-surface-side polarizing plate disposed on a rear surface side of the liquid crystal cell. The viewing-side polarizing plate and the rear-surface-side polarizing plate can be disposed such that respective absorption axes are substantially orthogonal or parallel to each other.

(Liquid crystal cell)

The liquid crystal cell includes a pair of substrates; and a liquid crystal layer serving as a display medium interposed between the substrates. In a typical configuration, a color filter and a black matrix are provided on one substrate. Further, a switching element that controls electro-optical characteristics of a liquid crystal; a scanning line that sends a gate signal to the switching element and a signal line that sends a source signal to the switching element; and a pixel electrode and a counter electrode are provided on the other substrate. The interval (cell gap) between the substrates can be controlled by a spacer or the like. For example, an alignment film formed of polyimide can be provided on a side of the substrate contact in the liquid crystal layer.

(Polarizing plate)

The polarizing plate typically includes a polarizer; and a protective layer disposed on both sides of the polarizer. Typically, the polarizer is an absorption type polarizer.

As the polarizer, an appropriate optional polarizer is used. Examples thereof include a polarizer obtained by adsorbing a dichroic material such as iodine or a dichroic dye on a hydrophilic polymer such as a polyvinyl alcohol-based film, a partially formalized polyvinyl alcohol-based film, or an ethylene-vinyl acetate copolymer-based partially saponified film so as to be uniaxially stretched; and a polyene-based alignment film such as a dehydrated product of polyvinyl alcohol or a dehydrochlorinated product of polyvinyl chloride. Among these, a polarizer obtained by adsorbing a dichroic material such as iodine on a polyvinyl alcohol-based film so as to be uniaxially stretched is particularly preferable from the viewpoint of a high dichroic ratio.

As the applications of the composition according to the present invention, a wavelength conversion material for a light-emitting diode (LED) is an exemplary example.

<LED>

The composition according to the present invention can be used as a material for a light-emitting layer of an LED.

As the LED containing the composition of the present invention, an LED which has a structure in which the composition of the present invention and conductive particles such as ZnS are mixed and laminated in a film shape, an n-type transport layer is laminated on one surface, and a p-type transport layer is laminated on the other surface and emits light by circulating the current so that positive holes of a p-type semiconductor and electrons of an n-type semiconductor cancel the charge in the particles in the semiconductor fine particle (1) and the silazane or modified product thereof (2) contained in the bonding surface of the composition is an exemplary example.

<Solar cell>

The composition of the present invention can be used as an electron transport material contained in an active layer of a solar cell.

The configuration of the solar cell is not particularly limited, and examples thereof include a solar cell which includes a fluorine-doped tin oxide (FTO) substrate, a titanium oxide dense layer, a porous aluminum oxide layer, an active layer containing the composition of the present invention, a hole transport layer such as 2,2',7,7'-tetrakis-(N,N'-di-p-methoxyphenylamine)-9,9'-spirobifluorene (Spiro-MeOTAD), and a silver (Ag) electrode in this order.

The titanium oxide dense layer has a function of transporting electrons, an effect of suppressing the roughness of FTO, and a function of suppressing movement of inverse electrons.

The porous aluminum oxide layer has a function of improving the light absorption efficiency.

The composition of the present invention which is contained in the active layer plays a role of charge separation and electron transport.

Further, the technical scope of the present invention is not limited to the above-described embodiments, and various modifications can be added within the range not departing from the spirit of the present invention.

[Examples]

Hereinafter, the embodiments of the present invention will be described in more detail based on examples and comparative example, but the present invention is not limited to the following examples.

«Measurement of X-ray diffraction pattern of perovskite compound»

The X-ray diffraction patterns of precipitates obtained in examples and comparative examples were measured using an X-ray diffraction device (hereinafter, also referred to as an XRD) (X'pert PRO, manufactured by PANalytical). The measurement was performed by filling a dedicated substrate with the obtained precipitates at a diffraction angle 2$\theta$ of 10° to 90° using a source for Cu-K$\alpha$ rays, thereby obtaining an X-ray diffraction pattern. The peak of the X-ray diffraction figure was analyzed using X-ray diffraction pattern comprehensive analysis software JADE 5.

<<Measurement of concentration of semiconductor fine particle>>

The concentration of the semiconductor fine particles in the dispersion liquid obtained in each example and each comparative example was obtained by adding N,N-dimethylformamide to the dispersion liquid containing the solvent and the semiconductor fine particles which was obtained by redispersing the semiconductor fine particles, dissolving

the semiconductor particles therein, and measuring the concentration using ICP-MS (ELAN DRCII, manufactured by PerkinElmer, Inc.) and ion chromatography (Integrion, manufactured by ThermoFisher Scientific Inc.).

«Evaluation of dispersibility D»

The emission spectrum and the ultraviolet visible absorption spectrum of the cured product obtained in each example and each comparative example were measured, the emission wavelength PLtop and the band edge Eg were respectively calculated, and the dispersibility D of the semiconductor fine particles was evaluated using Equation (E1). The emission spectrum of the cured product was measured with excitation light having a wavelength of 450 nm at room temperature in the atmosphere using an absolute PL quantum yield measuring device (C9920-02, manufactured by Hamamatsu Photonics K. K.). The ultraviolet visible absorption spectrum of the cured product was measured at room temperature in the atmosphere using an ultraviolet visible near infrared spectrophotometer (V-670, manufactured by JASCO Corporation).

«Evaluation of durability with respect to water vapor»

Each cured product obtained in Examples 1 and 2 was placed in a thermohygrostat bath under a constant condition of a temperature of 65°C and a humidity of 95% for 7 days, and a test for the durability with respect to water vapor was performed. The quantum yield was evaluated by measuring the quantum yield after the test for durability with respect to water vapor during 7 days based on the value of (quantum yield after test for durability with respect to water vapor during 7 days)/(quantum yield before test for durability with respect to water vapor) as an index of the durability with respect to water vapor.

Each cured product obtained in Examples 3 to 6 was placed in a thermohygrostat bath under a constant condition of a temperature of 60°C and a humidity of 80% for 7 days, and a test for the durability with respect to water vapor was performed. The quantum yield was evaluated by measuring the quantum yield after the test for durability with respect to water vapor during 7 days based on the value of (quantum yield after test for durability with respect to water vapor during 7 days)/(quantum yield before test for durability with respect to water vapor) as an index of the durability with respect to water vapor.

Each cured product obtained in Examples 7 to 9 was placed in a thermohygrostat bath under a constant condition of a temperature of 60°C and a humidity of 80% for 3 days, and a test for the durability with respect to water vapor was performed. The quantum yield was evaluated by measuring the quantum yield after the test for durability with respect to water vapor during 3 days based on the value of (quantum yield after test for durability with respect to water vapor during 3 days)/(quantum yield before test for durability with respect to water vapor) as an index of the durability with respect to water vapor.

Each cured product obtained in Examples 10 and 11 was placed in a thermohygrostat bath under a constant condition of a temperature of 60°C and a humidity of 80% for 5 days, and a test for the durability with respect to water vapor was performed. The quantum yield was evaluated by measuring the quantum yield after the test for durability with respect to water vapor during 5 days based on the value of (quantum yield after test for durability with respect to water vapor during 5 days)/(quantum yield before test for durability with respect to water vapor) as an index of the durability with respect to water vapor.

Each cured product obtained in Comparative Examples 1 and 2 was placed in a thermohygrostat bath under a constant condition of a temperature of 65°C and a humidity of 95% for 7 days, and a test for the durability with respect to water vapor was performed. The quantum yield was evaluated by measuring the quantum yield after the test for durability with respect to water vapor during 7 days based on the value of (quantum yield after test for durability with respect to water vapor during 7 days)/(quantum yield before test for durability with respect to water vapor) as an index of the durability with respect to water vapor.

A cured product obtained in Comparative Example 3 was placed in a thermohygrostat bath under a constant condition of a temperature of 60°C and a humidity of 80% for 3 days, and a test for the durability with respect to water vapor was performed. The quantum yield was evaluated by measuring the quantum yield after the test for durability with respect to water vapor during 3days based on the value of (quantum yield after test for durability with respect to water vapor during 3 days)/(quantum yield before test for durability with respect to water vapor) as an index of the durability with respect to water vapor.

«Measurement of quantum yield»

The quantum yield of each cured product obtained in the examples and the comparative examples was measured with excitation light having a wavelength of 450 nm at room temperature in the atmosphere using an absolute PL quantum yield measuring device (C9920-02, manufactured by Hamamatsu Photonics K. K.).

<<Observation using TEM>>

The semiconductor fine particles in each dispersion liquid obtained in the examples and the comparative examples were observed using a transmission electron microscope (JEM-2200FS, manufactured by JEOL Ltd.). A sample for observation was observed by setting the acceleration voltage to 200 kV after the dispersion liquid was added dropwise to a grid provided with a support film and dried. The average particle diameter of the semiconductor fine particles was set as an average value of the maximum Feret diameters of 20 semiconductor fine particles.

Each cured product obtained in the examples and the comparative examples was observed using a transmission electron microscope (JEM-2200FS, manufactured by JEOL Ltd.). As a sample for observation, a sample embedded with an epoxy resin at room temperature was prepared by being cut using ISOMET and sliced using a microtome. Sample slices were observed by setting the acceleration voltage to 200 kV after being collected using a grid provided with a support film.

In a cured product in which island-like phases were observed, the average maximum Feret diameter was set as an average value of the maximum Feret diameters of 20 island-like phases.

(Synthesis of composition)

[Example 1]

0.814 g of cesium carbonate, 40 mL of 1-octadecene, and 2.5 mL of oleic acid were mixed. A cesium carbonate solution was prepared by stirring the solution using a magnetic stirrer and heating the resulting solution at 150°C for 1 hour while circulating nitrogen.

0.276 g of lead bromide was mixed with 20 mL of 1-octadecene. 2 mL of oleic acid and 2 mL of oleylamine were added to the solution after the solution was stirred using a magnetic stirrer and heated at a temperature of 120°C for 1 hour while nitrogen was circulated, thereby preparing a lead bromide dispersion liquid.

The lead bromide dispersion liquid was heated to a temperature of 160°C, and 1.6 mL of the above-described cesium carbonate solution was added thereto. After the addition, a dispersion liquid in which the perovskite compound was precipitated was obtained by immersing a reaction container in ice water such that the temperature was decreased to room temperature.

Next, the dispersion liquid in which the perovskite compound was precipitated was centrifuged at 10000 rpm for 5 minutes so that the precipitate was separated by decantation, thereby obtaining a perovskite compound.

As determined by measurement performed on the X-ray diffraction pattern of the perovskite compound using an XRD, it was confirmed that a peak derived from (hkl) = (001) at a position where 2θ was 14° and a three-dimensional perovskite type crystal structure were present.

The average maximum Feret diameter (average particle diameter) of the perovskite compound observed using a TEM was 11 nm.

The perovskite compound was dispersed in 5 mL of toluene, 500 μL of the dispersion liquid was taken out, and the compound was re-dispersed in 4.5 mL of toluene to obtain a dispersion liquid 1 containing the perovskite compound and the solvent.

The concentration of the perovskite compound in the dispersion liquid 1 measured using ICP-MS and ion chromatography was 1500 ppm (μg/g).

Next, a methacrylic resin (PMMA, manufactured by Sumitomo Chemical Co., Ltd., SUMIPEX methacrylic resin, MH, molecular weight of approximately 120000, specific gravity of 1.2 g/ml) was mixed with a toluene such that the amount of PMMA reached 16.5% by mass, and the solution was heated at 60°C for 3 hours to obtain a solution in which the polymer was dissolved.

The dispersion liquid 1 containing the perovskite compound and the solvent was mixed with an organopolysilazane (Durazane 1500 Slow Cure, manufactured by Merck Performance Materials Ltd.), and 0.3 g of the mixed solution 1 containing the perovskite compound, the organopolysilazane, and the solvent was mixed with 1.83 g of the solution in which the polymer was dissolved, thereby obtaining a composition 1 containing the semiconductor fine particle (1), the silazane or modified product thereof (2), the solvent (3), and the polymerizable compound or polymer (4). In the composition 1, the molar ratio of Si/Pb was 76.0.

Further, 1.13 g of the composition 1 was added dropwise to a flat petri dish (ϕ32 mm) and allowed to stand at room temperature for 12 hours, and the toluene was allowed to evaporate by being naturally dried, thereby obtaining a cured product 1 (film 1) in which the concentration of the perovskite compound was 1000 μg/mL. The film thickness of the cured product 1 (film 1) was 110 μm. The cured product 1 (film 1) was cut into a size of 1 cm × 1 cm.

<<Measurement of emission wavelength PLtop>>

The emission spectrum of the cured product 1 (film 1) was measured using an absolute PL quantum yield measuring device, and the emission wavelength PLtop was 523.0 nm.
In a case where the value was converted into the energy value, the result was 2.37 eV.

<<Measurement of band edge Eg>>

The ultraviolet visible absorption spectrum of the cured product 1 (film 1) was measured using an ultraviolet visible near infrared spectrophotometer, and the band edge Eg was 2.31 eV.

<<Evaluation of dispersibility D>>

The dispersibility D of the cured product 1 (film 1) was 0.06 eV.

<<Evaluation of durability with respect to water vapor>>

The quantum yield of the cured product 1 (film 1) was measured, and the value of (quantum yield after test for durability with respect to water vapor during 7 days)/(quantum yield before test for durability with respect to water vapor) was 0.80 (80%).

<<Observation using TEM>>

The cured product 1 (film 1) was observed using a TEM. Fig. 3 shows an image obtained by the observation. It was found that a sea-island-like phase separation structure was formed. As determined by EDX measurement using a TEM, the island-like phase was a polysilazane and the sea-like phase was PMMA. Further, the semiconductor fine particles of the perovskite compound were present in the island-like phases. The average maximum Feret diameter of the island-like phases was 500 nm.

[Example 2]

A dispersion liquid 2 (product number: 776750, manufactured by Sigma-Aldrich Co. LLC) containing InP/ZnS (indicating InP coated with ZnS) core shell type semiconductor fine particles was prepared.
The concentration of InP/ZnS in the dispersion liquid 2 measured using ICP-MS and ion chromatography was 4200 ppm ($\mu$g/g).
The average maximum Feret diameter (average particle diameter) of the semiconductor fine particles observed using a TEM was 8 nm.
Next, a methacrylic resin (PMMA, manufactured by Sumitomo Chemical Co., Ltd., SUMIPEX methacrylic resin, MH, molecular weight of approximately 120000, specific gravity of 1.2 g/ml) was mixed with a toluene such that the amount of PMMA reached 16.5% by mass, and the solution was heated at 60°C for 3 hours to obtain a solution in which the polymer was dissolved.
0.45 g of the dispersion liquid 2 containing the above-described InP/ZnS core shell type semiconductor fine particles and the solvent was mixed with 0.98 g of the solution in which the polymer was dissolved, and the resulting solution was mixed with an organopolysilazane (Durazane 1500 Slow Cure, manufactured by Merck Performance Materials Ltd.), thereby obtaining a composition 2 containing the semiconductor fine particle (1), the silazane or modified product thereof (2), the solvent (3), and the polymerizable compound or polymer (4). In the composition 2, the molar ratio of Si/P was 110.
Further, the above-described composition 2 was added dropwise to a flat petri dish ($\phi$32 mm) and allowed to stand at room temperature for 12 hours, and the toluene was allowed to evaporate by being naturally dried, thereby obtaining a cured product 2 (film 2) in which the concentration of the InP/ZnS core shell type semiconductor fine particles was 10000 $\mu$g/mL. The film thickness of the cured product 2 (film 2) was 90 $\mu$m. The cured product 2 (film 2) was cut into a size of 1 cm $\times$ 1 cm.

<<Measurement of emission wavelength PLtop>>

The emission spectrum of the cured product 2 (film 2) was measured using an absolute PL quantum yield measuring device, and the emission wavelength PLtop was 537.9 nm. In a case where the value was converted into the energy value, the result was 2.3 1 eV.

<<Measurement of band edge Eg>>

The ultraviolet visible absorption spectrum of the cured product 2 (film 2) was measured using an ultraviolet visible near infrared spectrophotometer, and the band edge Eg was 2.29 eV.

<<Evaluation of dispersibility D»

The dispersibility D of the cured product 2 (film 2) was 0.02 eV.

<<Evaluation of durability with respect to water vapor>>

The quantum yield of the cured product 2 (film 2) was measured, and the value of (quantum yield after test for durability with respect to water vapor during 7 days)/(quantum yield before test for durability with respect to water vapor) was 0.59 (59%).

<<Observation using TEM>>

The cured product 2 (film 2) was observed using a TEM.
Fig. 4 shows an image obtained by the observation. It was found that a sea-island-like phase separation structure was formed. As determined by EDX measurement using a TEM, the island-like phase was a polysilazane and the sea-like phase was PMMA. Further, the InP/ZnS core shell type semiconductor fine particles were present in the island-like phases. The average maximum Feret diameter of the island-like phases was 800 nm.
The results of Examples 1 and 2 are listed in Table 1.

[Table 1]

| | (1) | (2) | Durability | Emission wavelength PLtop | | Band edge Eg | Dispersibility D | Feret diameter |
|---|---|---|---|---|---|---|---|---|
| | | | | (nm) | (eV) | (eV) | (eV) | (nm) |
| Example 1 | $CsPbBr_3$ | Durazane 1500 Slow Cure | 0.80 | 523.0 | 2.37 | 2.31 | 0.06 | 500 |
| Example 2 | InP/ZnS | Durazane 1500 Slow Cure | 0.59 | 537.9 | 2.31 | 2.29 | 0.02 | 800 |

[Example 3]

0.814 g of cesium carbonate, 40 mL of 1-octadecene, and 2.5 mL of oleic acid were mixed. A cesium carbonate solution was prepared by stirring the solution using a magnetic stirrer and heating the resulting solution at 150°C for 1 hour while circulating nitrogen.
0.276 g of lead bromide was mixed with 20 mL of 1-octadecene. 2 mL of oleic acid and 2 mL of oleylamine were added to the solution after the solution was stirred using a magnetic stirrer and heated at a temperature of 120°C for 1 hour while nitrogen was circulated, thereby preparing a lead bromide dispersion liquid.
The lead bromide dispersion liquid was heated to a temperature of 160°C, and 1.6 mL of the above-described cesium carbonate solution was added thereto. After the addition, a dispersion liquid in which the perovskite compound was precipitated was obtained by immersing a reaction container in ice water such that the temperature was decreased to room temperature.
Next, the dispersion liquid in which the perovskite compound was precipitated was centrifuged at 10000 rpm for 5 minutes so that the precipitate was separated by decantation, thereby obtaining a perovskite compound.
As determined by measurement performed on the X-ray diffraction pattern of the perovskite compound using an XRD, it was confirmed that a peak derived from (hkl) = (001) at a position where 2$\theta$ was 14° and a three-dimensional perovskite type crystal structure were present.
The average maximum Feret diameter (average particle diameter) of the perovskite compound observed using a TEM was 11 nm.
The perovskite compound was dispersed in 5 mL of toluene, 500 $\mu$L of the dispersion liquid was taken out, and the

compound was re-dispersed in 4.5 mL of toluene to obtain a dispersion liquid 3 containing the perovskite compound and the solvent.

The concentration of the perovskite compound in the dispersion liquid 3 measured using ICP-MS and ion chromatography was 1500 ppm (μg/g).

Next, the dispersion liquid 3 containing the perovskite compound and the solvent was mixed with an organopolysilazane (Durazane 1500 Rapid Cure, manufactured by Merck Performance Materials Ltd.). In the mixed solution, the molar ratio of Si/Pb was 20.0. The above-described mixed solution was subjected to a modification treatment for 1 day while being stirred using a stirrer at 25°C under a humidity condition of 80%, thereby obtaining a mixed solution 3.

Next, a methacrylic resin (PMMA, manufactured by Sumitomo Chemical Co., Ltd., SUMIPEX methacrylic resin, MH, molecular weight of approximately 120000, specific gravity of 1.2 g/ml) was mixed with a toluene such that the amount of PMMA reached 16.5% by mass, and the solution was heated at 60°C for 3 hours to obtain a solution in which the polymer was dissolved.

0.15 g of the mixed solution 3 containing the perovskite compound, the modified product of organopolysilazane, and the solvent was mixed with 0.913 g of the solution in which the polymer was dissolved to obtain a composition 3 containing the semiconductor fine particle (1), the silazane or modified product thereof (2), the solvent (3), and the polymerizable compound or polymer (4).

Further, 1.13 g of the composition 3 was added dropwise to a flat petri dish (ϕ32 mm) and allowed to stand at room temperature for 12 hours, and the toluene was allowed to evaporate by being naturally dried, thereby obtaining a cured product 3 (film 3) in which the concentration of the perovskite compound was 1000 μg/mL. The cured product 3 (film 3) was cut into a size of 1 cm × 1 cm.

<<Measurement of emission wavelength PLtop>>

The emission spectrum of the cured product 3 (film 3) was measured using an absolute PL quantum yield measuring device, and the emission wavelength PLtop was 523.2 nm. In a case where the value was converted into the energy value, the result was 2.37 eV.

<<Measurement of band edge Eg>>

The ultraviolet visible absorption spectrum of the cured product 3 (film 3) was measured using an ultraviolet visible near infrared spectrophotometer, and the band edge Eg was 2.31 eV.

<<Evaluation of dispersibility D>>

The dispersibility D of the cured product 3 (film 3) was 0.06 eV.

<<Evaluation of durability with respect to water vapor>>

The quantum yield of the cured product 3 (film 3) was measured, and the value of (quantum yield after test for durability with respect to water vapor during 7 days)/(quantum yield before test for durability with respect to water vapor) was 0.79 (79%).

<<Observation using TEM>>

The cured product 3 (film 3) was observed using a TEM. Fig. 5 shows an image obtained by the observation. It was found that a sea-island-like phase separation structure was formed. As determined by EDX measurement using a TEM, the island-like phase was a polysilazane and the sea-like phase was PMMA. Further, the semiconductor fine particles of the perovskite compound were present in the island-like phases. The average maximum Feret diameter of the island-like phases was 500 nm.

[Example 4]

A cured product 4 (film 4) having a size of 1 cm × 1 cm was obtained according to the same method as that of Example 3 except that the molar ratio of Si/Pb in the mixed solution was set to 66.8.

<<Measurement of emission wavelength PLtop>>

The emission spectrum of the cured product 4 (film 4) was measured using an absolute PL quantum yield

measuring device, and the emission wavelength PLtop was 524.5 nm. In a case where the value was converted into the energy value, the result was 2.36 eV.

<<Measurement of band edge Eg>>

The ultraviolet visible absorption spectrum of the cured product 4 (film 4) was measured using an ultraviolet visible near infrared spectrophotometer, and the band edge Eg was 2.35 eV.

<<Evaluation of dispersibility D>>

The dispersibility D of the cured product 4 (film 4) was 0.01 eV.

<<Evaluation of durability with respect to water vapor>>

The quantum yield of the cured product 4 (film 4) was measured, and the value of (quantum yield after test for durability with respect to water vapor during 7 days)/(quantum yield before test for durability with respect to water vapor) was 0.78 (78%).

<<Observation using TEM>>

The cured product 4 (film 4) was observed using a TEM, and it was found that a sea-island-like phase separation structure was formed. As determined by EDX measurement using a TEM, the island-like phase was a polysilazane and the sea-like phase was PMMA. Further, the semiconductor fine particles of the perovskite compound were present in the island-like phases. The average maximum Feret diameter of the island-like phases was 600 nm.

[Example 5]

0.814 g of cesium carbonate, 40 mL of 1-octadecene, and 2.5 mL of oleic acid were mixed. A cesium carbonate solution was prepared by stirring the solution using a magnetic stirrer and heating the resulting solution at 150°C for 1 hour while circulating nitrogen.

0.276 g of lead bromide was mixed with 20 mL of 1-octadecene. 2 mL of oleic acid and 2 mL of oleylamine were added to the solution after the solution was stirred using a magnetic stirrer and heated at a temperature of 120°C for 1 hour while nitrogen was circulated, thereby preparing a lead bromide dispersion liquid.

The lead bromide dispersion liquid was heated to a temperature of 160°C, and 1.6 mL of the above-described cesium carbonate solution was added thereto. After the addition, a dispersion liquid in which the perovskite compound was precipitated was obtained by immersing a reaction container in ice water such that the temperature was decreased to room temperature.

Next, the dispersion liquid in which the perovskite compound was precipitated was centrifuged at 10000 rpm for 5 minutes so that the precipitate was separated by decantation, thereby obtaining a perovskite compound.

As determined by measurement performed on the X-ray diffraction pattern of the perovskite compound using an XRD, it was confirmed that a peak derived from (hkl) = (001) at a position where $2\theta$ was 14° and a three-dimensional perovskite type crystal structure were present.

The average maximum Feret diameter (average particle diameter) of the perovskite compound observed using a TEM was 11 nm.

The perovskite compound was dispersed in 5 mL of toluene, 500 $\mu$L of the dispersion liquid was taken out, and the compound was re-dispersed in 4.5 mL of toluene to obtain a dispersion liquid 5 containing the perovskite compound and the solvent.

The concentration of the perovskite compound in the dispersion liquid 5 measured using ICP-MS and ion chromatography was 1500 ppm ($\mu$g/g).

The dispersion liquid 5 containing the perovskite compound and the solvent was mixed with an organopolysilazane (Durazane 1500 Slow Cure, manufactured by Merck Performance Materials Ltd.). In the mixed solution, the molar ratio of Si/Pb was 76.0. The above-described mixed solution was subjected to a modification treatment for 1 day while being stirred using a stirrer at 25°C under a humidity condition of 80%, thereby obtaining a mixed solution 5.

Next, a methacrylic resin (PMMA, manufactured by Sumitomo Chemical Co., Ltd., SUMIPEX methacrylic resin, MH, molecular weight of approximately 120000, specific gravity of 1.2 g/ml) was mixed with a toluene such that the amount of PMMA reached 16.5% by mass with respect to the total mass of the methacrylic acid and toluene, and the solution was heated at 60°C for 3 hours to obtain a solution in which the polymer was dissolved.

0.15 g of the mixed solution 5 containing the perovskite compound, the modified product organopolysilazane,

and the solvent was mixed with 0.913 g of the solution in which the polymer was dissolved to obtain a composition 5 containing the semiconductor fine particle (1), the silazane or modified product thereof (2), the solvent (3), and the polymerizable compound or polymer (4).

Further, 1.13 g of the composition 5 was added dropwise to a flat petri dish (ϕ32 mm) and allowed to stand at room temperature for 12 hours, and the toluene was allowed to evaporate by being naturally dried, thereby obtaining a cured product 5 (film 5) in which the concentration of the perovskite compound was 1000 μg/mL. The cured product 5 (film 5) was cut into a size of 1 cm × 1 cm.

<<Measurement of emission wavelength PLtop>>

The emission spectrum of the cured product 5 (film 5) was measured using an absolute PL quantum yield measuring device, and the emission wavelength PLtop was 522.0 nm. In a case where the value was converted into the energy value, the result was 2.38 eV.

<<Measurement of band edge Eg>>

The ultraviolet visible absorption spectrum of the cured product 5 (film 5) was measured using an ultraviolet visible near infrared spectrophotometer, and the band edge Eg was 2.33 eV.

<<Evaluation of dispersibility D>>

The dispersibility D of the cured product 5 (film 5) was 0.05 eV.

<<Evaluation of durability with respect to water vapor>>

The quantum yield of the cured product 5 (film 5) was measured, and the value of (quantum yield after test for durability with respect to water vapor during 7 days)/(quantum yield before test for durability with respect to water vapor) was 0.87 (87%).

<<Observation using TEM>>

The cured product 5 (film 5) was observed using a TEM. Fig. 6 shows an image obtained by the observation. It was found that a sea-island-like phase separation structure was formed. As determined by EDX measurement using a TEM, the island-like phase was a polysilazane and the sea-like phase was PMMA. Further, the semiconductor fine particles of the perovskite compound were present in the island-like phases. The average maximum Feret diameter of the island-like phases was 1100 nm.

[Example 6]

A cured product 6 (film 6) having a size of 1 cm × 1 cm was obtained according to the same method as that of Example 5 except that the molar ratio of Si/Pb in the mixed solution was set to 228.

<<Measurement of emission wavelength PLtop>>

The emission spectrum of the cured product 6 (film 6) was measured using an absolute PL quantum yield measuring device, and the emission wavelength PLtop was 522.7 nm. In a case where the value was converted into the energy value, the result was 2.37 eV.

<<Measurement of band edge Eg>>

The ultraviolet visible absorption spectrum of the cured product 6 (film 6) was measured using an ultraviolet visible near infrared spectrophotometer, and the band edge Eg was 2.36 eV.

<<Evaluation of dispersibility D>>

The dispersibility D of the cured product 6 (film 6) was 0.01 eV.

<<Evaluation of durability with respect to water vapor>>

The quantum yield of the cured product 6 (film 6) was measured, and the value of (quantum yield after test for durability with respect to water vapor during 7 days)/(quantum yield before test for durability with respect to water vapor) was 0.93 (93%).

<<Observation using TEM>>

The cured product 6 (film 6) was observed using a TEM, and it was found that a sea-island-like phase separation structure was formed. As determined by EDX measurement using a TEM, the island-like phase was a polysilazane and the sea-like phase was PMMA. Further, the semiconductor fine particles of the perovskite compound were present in the island-like phases. The average maximum Feret diameter of the island-like phases was 1200 nm.

The results of Examples 3 to 6 are listed in Table 2.

[Table 2]

| | (1) | (2) | Si/Pb | Durability | Emission wavelength PLtop | | Band edge Eg | Dispersibility D | Feret diameter |
|---|---|---|---|---|---|---|---|---|---|
| | | | | | (nm) | (eV) | (eV) | (eV) | (nm) |
| Example 3 | $CsPbBr_3$ | Durazane 1500 Rapid Cure (modified product) | 20.0 | 0.79 | 523.2 | 2.37 | 2.31 | 0.06 | 500 |
| Example 4 | $CsPbBr_3$ | Durazane 1500 Rapid Cure (modified product) | 66.8 | 0.78 | 524.5 | 2.36 | 2.35 | 0.01 | 600 |
| Example 5 | $CsPbBr_3$ | Durazane 1500 Slow Cure (modified product) | 76.0 | 0.87 | 522.0 | 2.38 | 2.33 | 0.05 | 1100 |
| Example 6 | $CsPbBr_3$ | Durazane 1500 Slow Cure (modified product) | 228 | 0.93 | 522.7 | 2.37 | 2.36 | 0.01 | 1200 |

[Example 7]

0.814 g of cesium carbonate, 40 mL of 1-octadecene, and 2.5 mL of oleic acid were mixed. A cesium carbonate solution was prepared by stirring the solution using a magnetic stirrer and heating the resulting solution at 150°C for 1 hour while circulating nitrogen.

0.110 g of lead bromide and 0.208 g of lead iodide were mixed into 20 mL of 1-octadecene. 2 mL of oleic acid and 2 mL of oleylamine were added to the solution after the solution was stirred using a magnetic stirrer and heated at a temperature of 120°C for 1 hour while nitrogen was circulated, thereby preparing a lead bromide-lead iodide dispersion liquid.

The lead bromide-lead iodide dispersion liquid was heated to a temperature of 160°C, and 1.6 mL of the above-described cesium carbonate solution was added thereto. After the addition, a dispersion liquid was obtained by immersing a reaction container in ice water such that the temperature was decreased to room temperature.

Next, a precipitate was separated by performing centrifugation on the dispersion liquid at 10000 rpm for 5 minutes to obtain a perovskite compound as a precipitate.

As determined by measurement performed on the X-ray diffraction pattern of the perovskite compound using an XRD, it was confirmed that a peak derived from (hkl) = (001) at a position where 2θ was 14° and a three-dimensional perovskite type crystal structure were present.

The average maximum Feret diameter (average particle diameter) of the perovskite compound observed using a TEM was 19 nm.

The perovskite compound was dispersed in 5 mL of toluene, 500 μL of the dispersion liquid was taken out, and the compound was re-dispersed in 4.5 mL of toluene to obtain a dispersion liquid 7 containing the perovskite compound and the solvent.

The concentration of the perovskite compound in the dispersion liquid 7 measured using ICP-MS and ion chromatography was 1500 ppm (μg/g).

The dispersion liquid 7 containing the perovskite compound and the solvent was mixed with an organopolysilazane (Durazane 1500 Rapid Cure, manufactured by Merck Performance Materials Ltd.). In mixed solution, the molar ratio of Si/Pb was 10.6.

The above-described mixed solution was subjected to a modification treatment for 1 day while being stirred using a stirrer at 25°C under a humidity condition of 80%, thereby obtaining a mixed solution 7.

Next, a methacrylic resin (PMMA, manufactured by Sumitomo Chemical Co., Ltd., SUMIPEX methacrylic resin, MH, molecular weight of approximately 120000, specific gravity of 1.2 g/ml) was mixed with a toluene such that the amount of PMMA reached 16.5% by mass with respect to the total mass of the methacrylic acid and toluene, and the solution was heated at 60°C for 3 hours to obtain a solution in which the polymer was dissolved.

0.15 g of the mixed solution 7 containing the perovskite compound, the modified product of organopolysilazane, and the solvent was mixed with 0.913 g of the solution in which the polymer was dissolved to obtain a composition 7 containing the semiconductor fine particle (1), the silazane or modified product thereof (2), the solvent (3), and the polymerizable compound or polymer (4).

Further, 1.13 g of the composition 7 was added dropwise to a flat petri dish (ϕ32 mm) and allowed to stand at room temperature for 12 hours, and the toluene was allowed to evaporate by being naturally dried, thereby obtaining a cured product 7 (film 7) in which the concentration of the perovskite compound was 1000 μg/mL. The cured product 7 (film 7) was cut into a size of 1 cm × 1 cm.

<<Measurement of emission wavelength PLtop>>

The emission spectrum of the cured product 7 (film 7) was measured using an absolute PL quantum yield measuring device, and the emission wavelength PLtop was 632.1 nm. In a case where the value was converted into the energy value, the result was 1.96 eV.

<<Measurement of band edge Eg>>

The ultraviolet visible absorption spectrum of the cured product 7 (film 7) was measured using an ultraviolet visible near infrared spectrophotometer, and the band edge Eg was 1.93 eV.

<<Evaluation of dispersibility D>>

The dispersibility D of the cured product 7 (film 7) was 0.03 eV.

<<Evaluation of durability with respect to water vapor>>

The quantum yield of the cured product 7 (film 7) was measured, and the value of (quantum yield after test for durability with respect to water vapor during 3 days)/(quantum yield before test for durability with respect to water vapor) was 0.62 (62%).

<<Observation using TEM>>

The cured product 7 (film 7) was observed using a TEM. Fig. 7 shows an image obtained by the observation. It was found that a sea-island-like phase separation structure was formed. As determined by EDX measurement using a TEM, the island-like phase was a polysilazane and the sea-like phase was PMMA. Further, the semiconductor fine particles of the perovskite compound were present in the island-like phases. The average maximum Feret diameter of the island-like phases was 800 nm.

[Example 8]

A cured product 8 (film 8) having a size of 1 cm × 1 cm was obtained according to the same method as that of Example 7 except that the molar ratio of Si/Pb in the mixed solution was set to 31.8.

<<Measurement of emission wavelength PLtop>>

The emission spectrum of the cured product 8 (film 8) was measured using an absolute PL quantum yield measuring device, and the emission wavelength PLtop was 617.8 nm. In a case where the value was converted into the energy value, the result was 2.00 eV.

<<Measurement of band edge Eg>>

The ultraviolet visible absorption spectrum of the cured product 8 (film 8) was measured using an ultraviolet visible near infrared spectrophotometer, and the band edge Eg was 1.98 eV.

<<Evaluation of dispersibility D>>

The dispersibility D of the cured product 8 (film 8) was 0.02 eV.

<<Evaluation of durability with respect to water vapor>>

The quantum yield of the cured product 8 (film 8) was measured, and the value of (quantum yield after test for durability with respect to water vapor during 3 days)/(quantum yield before test for durability with respect to water vapor) was 0.77 (77%).

<<Observation using TEM>>

The cured product 8 (film 8) was observed using a TEM, and it was found that a sea-island-like phase separation structure was formed. As determined by EDX measurement using a TEM, the island-like phase was a polysilazane and the sea-like phase was PMMA. Further, the semiconductor fine particles of the perovskite compound were present in the island-like phases. The average maximum Feret diameter of the island-like phases was 500 nm.

[Example 9]

A cured product 9 (film 9) having a size of 1 cm × 1 cm was obtained according to the same method as that of Example 7 except that the molar ratio of Si/Pb in the mixed solution was set to 53.0.

<<Measurement of emission wavelength PLtop>>

The emission spectrum of the cured product 9 (film 9) was measured using an absolute PL quantum yield measuring device, and the emission wavelength PLtop was 611.3 nm. In a case where the value was converted into the energy value, the result was 2.03 eV.

<<Measurement of band edge Eg>>

The ultraviolet visible absorption spectrum of the cured product 9 (film 9) was measured using an ultraviolet visible near infrared spectrophotometer, and the band edge Eg was 2.00 eV.

<<Evaluation of dispersibility D>>

The dispersibility D of the cured product 9 (film 9) was 0.03 eV.

<<Evaluation of durability with respect to water vapor>>

The quantum yield of the cured product 9 (film 9) was measured, and the value of (quantum yield after test for durability with respect to water vapor during 3 days)/(quantum yield before test for durability with respect to water vapor) was 0.86 (86%).

<<Observation using TEM>>

The cured product 9 (film 9) was observed using a TEM, and it was found that a sea-island-like phase separation structure was formed. As determined by EDX measurement using a TEM, the island-like phase was a polysilazane and the sea-like phase was PMMA. Further, the semiconductor fine particles of the perovskite compound were present in the island-like phases. The average maximum Feret diameter of the island-like phases was 700 nm.

The results of Examples 7 to 9 are listed in Table 3.

[Table 3]

| | (1) | (2) | Si/Pb | Durability | Emission wavelength PLtop | | Band edge Eg | Dispersibility D | Feret diameter |
|---|---|---|---|---|---|---|---|---|---|
| | | | | | (nm) | (eV) | (eV) | (eV) | (nm) |
| Example 7 | $CsPbBr_{1.2}I_{1.8}$ | Durazane 1500 Rapid Cure (modified product) | 10.6 | 0.62 | 632.1 | 1.96 | 1.93 | 0.03 | 800 |
| Example 8 | $CsPbBr_{1.2}I_{1.8}$ | Durazane 1500 Rapid Cure (modified product) | 31.8 | 0.77 | 617.8 | 2.00 | 1.98 | 0.02 | 500 |
| Example 9 | $CsPbBr_{1.2}I_{1.8}$ | Durazane 1500 Rapid Cure (modified product) | 53.0 | 0.86 | 611.3 | 2.03 | 2.00 | 0.03 | 700 |

[Example 10]

0.814 g of cesium carbonate, 40 mL of 1-octadecene, and 2.5 mL of oleic acid were mixed. A cesium carbonate solution was prepared by stirring the solution using a magnetic stirrer and heating the resulting solution at 150°C for 1 hour while circulating nitrogen.

0.276 g of lead bromide was mixed with 20 mL of 1-octadecene. 2 mL of oleic acid and 2 mL of oleylamine were added to the solution after the solution was stirred using a magnetic stirrer and heated at a temperature of 120°C for 1 hour while nitrogen was circulated, thereby preparing a lead bromide dispersion liquid.

The lead bromide dispersion liquid was heated to a temperature of 160°C, and 1.6 mL of the above-described cesium carbonate solution was added thereto. After the addition, a dispersion liquid in which the perovskite compound was precipitated was obtained by immersing a reaction container in ice water such that the temperature was decreased to room temperature.

Next, the dispersion liquid in which the perovskite compound was precipitated was centrifuged at 10000 rpm for 5 minutes so that the precipitate was separated by decantation, thereby obtaining a perovskite compound.

As determined by measurement performed on the X-ray diffraction pattern of the perovskite compound using an XRD, it was confirmed that a peak derived from (hkl) = (001) at a position where 2θ was 14° and a three-dimensional perovskite type crystal structure were present.

The average maximum Feret diameter (average particle diameter) of the perovskite compound observed using a TEM was 11 nm.

The perovskite compound was dispersed in 5 mL of toluene, 500 μL of the dispersion liquid was taken out, and the compound was re-dispersed in 4.5 mL of toluene to obtain a dispersion liquid 10 containing the perovskite compound and the solvent.

The concentration of the perovskite compound in the dispersion liquid measured using ICP-MS and ion chromatography was 1500 ppm (μg/g).

The dispersion liquid 10 containing the perovskite compound and the solvent was mixed with octamethylcyclotetrasilazane (manufactured by Tokyo Chemical Industry Co., Ltd.). In the mixed solution, the molar ratio of Si/Pb was 91.4.

The above-described mixed solution was subjected to a modification treatment for 1 day while being stirred using a stirrer at 25°C under a humidity condition of 80%, thereby obtaining a mixed solution 10.

Next, a methacrylic resin (PMMA, manufactured by Sumitomo Chemical Co., Ltd., SUMIPEX methacrylic resin, MH, molecular weight of approximately 120000, specific gravity of 1.2 g/ml) was mixed with a toluene such that the amount of PMMA reached 16.5% by mass with respect to the total mass of the methacrylic acid and toluene, and the solution was heated at 60°C for 3 hours to obtain a solution in which the polymer was dissolved.

0.15 g of the mixed solution 10 containing the perovskite compound, the modified product of octamethylcyclotetrasilazane, and the solvent was mixed with 0.913 g of the solution in which the polymer was dissolved to obtain a composition 10 containing the semiconductor fine particle (1), the silazane or modified product thereof (2), the solvent (3), and the polymerizable compound or polymer (4).

Further, 1.13 g of the composition 10 was added dropwise to a flat petri dish (ϕ32 mm) and allowed to stand at room temperature for 12 hours, and the toluene was allowed to evaporate by being naturally dried, thereby obtaining a cured product 10 (film 10) in which the concentration of the perovskite compound was 1000 μg/mL. The cured product 10 (film 10) was cut into a size of 1 cm × 1 cm.

<<Measurement of emission wavelength PLtop>>

The emission spectrum of the cured product 10 (film 10) was measured using an absolute PL quantum yield measuring device, and the emission wavelength PLtop was 521.7 nm. In a case where the value was converted into the energy value, the result was 2.38 eV.

<<Measurement of band edge Eg>>

The ultraviolet visible absorption spectrum of the cured product 10 (film 10) was measured using an ultraviolet visible near infrared spectrophotometer, and the band edge Eg was 2.29 eV.

<<Evaluation of dispersibility D>>

The dispersibility D of the cured product 10 (film 10) was 0.09 eV.

<<Evaluation of durability with respect to water vapor>>

The quantum yield of the cured product 10 (film 10) was measured, and the value of (quantum yield after test for durability with respect to water vapor during 5 days)/(quantum yield before test for durability with respect to water vapor) was 0.67 (67%).

«Observation using TEM»

The cured product 10 (film 10) was observed using a TEM, and it was found that a sea-island-like phase separation structure was formed. As determined by EDX measurement using a TEM, the island-like phase was a polysilazane and the sea-like phase was PMMA. Further, the semiconductor fine particles of the perovskite compound were present in the island-like phases. The average maximum Feret diameter of the island-like phases was 1500 nm.

[Example 11]

0.814 g of cesium carbonate, 40 mL of 1-octadecene, and 2.5 mL of oleic acid were mixed. A cesium carbonate solution was prepared by stirring the solution using a magnetic stirrer and heating the resulting solution at 150°C for 1 hour while circulating nitrogen.

0.276 g of lead bromide was mixed with 20 mL of 1-octadecene. 2 mL of oleic acid and 2 mL of oleylamine were added to the solution after the solution was stirred using a magnetic stirrer and heated at a temperature of 120°C for 1 hour while nitrogen was circulated, thereby preparing a lead bromide dispersion liquid.

The lead bromide dispersion liquid was heated to a temperature of 160°C, and 1.6 mL of the above-described cesium carbonate solution was added thereto. After the addition, a dispersion liquid in which the perovskite compound was precipitated was obtained by immersing a reaction container in ice water such that the temperature was decreased to room temperature.

Next, the dispersion liquid in which the perovskite compound was precipitated was centrifuged at 10000 rpm for 5 minutes so that the precipitate was separated by decantation, thereby obtaining a perovskite compound.

As determined by measurement performed on the X-ray diffraction pattern of the perovskite compound using an XRD, it was confirmed that a peak derived from (hkl) = (001) at a position where $2\theta$ was 14° and a three-dimensional perovskite type crystal structure were present.

The average maximum Feret diameter (average particle diameter) of the perovskite compound observed using a TEM was 11 nm.

The perovskite compound was dispersed in 5 mL of toluene, 500 μL of the dispersion liquid was taken out, and the compound was re-dispersed in 4.5 mL of toluene to obtain a dispersion liquid 11 containing the perovskite compound and the solvent.

The concentration of the perovskite compound in the dispersion liquid 11 measured using ICP-MS and ion chromatography was 1500 ppm (μg/g).

The dispersion liquid 11 containing the perovskite compound and the solvent was mixed with a perhydropolysilazane (AZNN-120-20, manufactured by Merck Performance Materials Ltd.). In the mixed solution, the molar ratio of Si/Pb was 10.4. The above-described mixed solution was subjected to a modification treatment for 1 day while being stirred using a stirrer at 25°C under a humidity condition of 80%, thereby obtaining a mixed solution 11.

Next, a methacrylic resin (PMMA, manufactured by Sumitomo Chemical Co., Ltd., SUMIPEX methacrylic resin, MH, molecular weight of approximately 120000, specific gravity of 1.2 g/ml) was mixed with a toluene such that the amount of PMMA reached 16.5% by mass with respect to the total mass of the methacrylic acid and toluene, and the solution was heated at 60°C for 3 hours to obtain a solution in which the polymer was dissolved.

0.15 g of the mixed solution 11 containing the perovskite compound, the modified product of perhydropolysilazane, and the solvent was mixed with 0.913 g of the solution in which the polymer was dissolved to obtain a composition 11 containing the semiconductor fine particle (1), the silazane or modified product thereof (2), the solvent (3), and the polymerizable compound or polymer (4).

Further, 1.13 g of the composition 11 was added dropwise to a flat petri dish (ϕ32 mm) and allowed to stand at room temperature for 12 hours, and the toluene was allowed to evaporate by being naturally dried, thereby obtaining a cured product 11 (film 11) in which the concentration of the perovskite compound was 1000 μg/mL. The cured product 11 (film 11) was cut into a size of 1 cm × 1 cm.

<<Measurement of emission wavelength PLtop>>

The emission spectrum of the cured product 11 (film 11) was measured using an absolute PL quantum yield measuring device, and the emission wavelength PLtop was 522.5 nm.

In a case where the value was converted into the energy value, the result was 2.37 eV.

<<Measurement of band edge Eg>>

The ultraviolet visible absorption spectrum of the cured product 11 (film 11) was measured using an ultraviolet visible near infrared spectrophotometer, and the band edge Eg was 2.34 eV.

<<Evaluation of dispersibility D>>

The dispersibility D of the cured product 11 (film 11) was 0.03 eV.

<<Evaluation of durability with respect to water vapor>>

The quantum yield of the cured product 11 (film 11) was measured, and the value of (quantum yield after test for durability with respect to water vapor during 5 days)/(quantum yield before test for durability with respect to water vapor) was 0.70 (70%).

<<Observation using TEM>>

The cured product 11 (film 11) was observed using a TEM, and it was found that a sea-island-like phase separation structure was formed. As determined by EDX measurement using a TEM, the island-like phase was a polysilazane and the sea-like phase was PMMA. Further, the semiconductor fine particles of the perovskite compound were present in the island-like phases. The average maximum Feret diameter of the island-like phases was 1000 nm.
The results of Examples 10 and 11 are listed in Table 4.

[Table 4]

| | (1) | (2) | Si/Pb | Durability | Emission wavelength PLtop | | Band edge Eg | Dispersibility D | Feret diameter |
|---|---|---|---|---|---|---|---|---|---|
| | | | | | (nm) | (eV) | (eV) | (eV) | (nm) |
| Example 10 | $CsPbBr_3$ | Octamethylcyclotetrasilazane (modified product) | 91.4 | 0.67 | 521.7 | 2.38 | 2.29 | 0.09 | 1500 |
| Example 11 | $CsPbBr_3$ | AZNN-120-20 (modified product) | 10.4 | 0.70 | 522.5 | 2.37 | 2.34 | 0.03 | 1000 |

[Comparative Example 1]

A dispersion liquid 2 (product number: 776750, manufactured by Sigma-Aldrich Co. LLC) containing InP/ZnS core shell type semiconductor fine particles was prepared.

Next, a methacrylic resin (PMMA, manufactured by Sumitomo Chemical Co., Ltd., SUMIPEX methacrylic resin, MH, molecular weight of approximately 120000, specific gravity of 1.2 g/ml) was mixed with a toluene such that the amount of PMMA reached 16.5% by mass with respect to the total mass of the methacrylic acid and toluene, and the solution was heated at 60°C for 3 hours to obtain a solution in which the polymer was dissolved.

The temperature of 1.3 g of the dispersion liquid 2 containing the above-described InP/ZnS core shell type semiconductor fine particles and the solvent was adjusted to 40°C, the dispersion liquid was stirred, and 39 μL of a perhydropolysilazane (AZNN-120-20, manufactured by Merck Performance Materials Ltd.) was added to the dispersion liquid. Thereafter, the solution was stirred at 40°C for 1 hour. An obtained mixed solution 12 was dried under reduced pressure to obtain semiconductor fine particles containing the perhydropolysilazane.

The semiconductor fine particles containing the perhydropolysilazane were mixed into the solution in which the polymer was dissolved such that the weight content ratio of InP/ZnS was set to 1%, thereby obtaining a composition 12 containing the semiconductor fine particle (1), the silazane or modified product thereof (2), the solvent (3), and the polymerizable compound or polymer (4).

Further,0.98 g of the composition 12 was added dropwise to a flat petri dish (ϕ32 mm) and allowed to stand at 60°C for 12 hours, and the toluene was allowed to evaporate, thereby obtaining a cured product 12 (film 12). The film thickness of the cured product 12 (film 12) was 100 μm. The cured product 12 (film 12) was cut into a size of 1 cm × 1 cm.

<<Measurement of emission wavelength PLtop>>

The emission spectrum of the cured product 12 (film 12) was measured using an absolute PL quantum yield measuring device, and the emission wavelength PLtop was 537.9 nm. In a case where the value was converted into the energy value, the result was 2.31 eV.

<<Measurement of band edge Eg>>

The ultraviolet visible absorption spectrum of the cured product 12 (film 12) was measured using an ultraviolet visible near infrared spectrophotometer, and the band edge Eg was 2.23 eV.

<<Evaluation of dispersibility D>>

The dispersibility D of the cured product 12 (film 12) was 0.08 eV.

<<Evaluation of durability with respect to water vapor>>

The quantum yield of the cured product 12 (film 12) was measured, and the value of (quantum yield after test for durability with respect to water vapor during 7 days)/(quantum yield before test for durability with respect to water vapor) was 0.53 (53%).

<<Observation using TEM>>

As determined by observation performed on the cured product 12 (film 12) using a TEM, the perhydropolysilazane was present in a region with an area of several nanometers around each of the InP/ZnS core shell type semiconductor fine particles such that the InP/ZnS core shell type semiconductor fine particle became a core and the perhydropolysilazane became a shell. However, the sea-island-like separation structure in which the island-like phase was a polysilazane and the sea-like phase was PMMA was not formed.

[Comparative Example 2]

0.814 g of cesium carbonate, 40 mL of 1-octadecene, and 2.5 mL of oleic acid were mixed. A cesium carbonate solution was prepared by stirring the solution using a magnetic stirrer and heating the resulting solution at 150°C for 1 hour while circulating nitrogen.

0.276 g of lead bromide was mixed with 20 mL of 1-octadecene. 2 mL of oleic acid and 2 mL of oleylamine were added to the solution after the solution was stirred using a magnetic stirrer and heated at a temperature of 120°C for 1 hour while nitrogen was circulated, thereby preparing a lead bromide dispersion liquid.

The lead bromide dispersion liquid was heated to a temperature of 160°C, and 1.6 mL of the above-described cesium carbonate solution was added thereto. After the addition, a dispersion liquid in which the perovskite compound was precipitated was obtained by immersing a reaction container in ice water such that the temperature was decreased to room temperature.

Next, the dispersion liquid in which the perovskite compound was precipitated was centrifuged at 10000 rpm for 5 minutes so that the precipitate was separated by decantation, thereby obtaining a perovskite compound.

As determined by measurement performed on the X-ray diffraction pattern of the perovskite compound using an XRD, it was confirmed that a peak derived from (hkl) = (001) at a position where 2θ was 14° and a three-dimensional perovskite type crystal structure were present.

The average maximum Feret diameter (average particle diameter) of the perovskite compound observed using a TEM was 11 nm.

The perovskite compound was dispersed in 5 mL of toluene, 500 μL of the dispersion liquid was taken out, and the compound was re-dispersed in 4.5 mL of toluene to obtain a dispersion liquid 13 containing the perovskite compound and the solvent.

The concentration of the perovskite compound in the dispersion liquid 13 measured using ICP-MS and ion chromatography was 1500 ppm (μg/g).

Next, a methacrylic resin (PMMA, manufactured by Sumitomo Chemical Co., Ltd., SUMIPEX methacrylic resin, MH, molecular weight of approximately 120000, specific gravity of 1.2 g/ml) was mixed with a toluene such that the amount of PMMA reached 16.5% by mass with respect to the total mass of the methacrylic acid and toluene, and the solution was heated at 60°C for 3 hours to obtain a solution in which the polymer was dissolved.

0.15 g of the dispersion liquid 13 containing the perovskite compound and the solvent was mixed with 0.913 g of the solution in which the polymer was dissolved to obtain a composition 13 containing the semiconductor fine particle (1), the silazane or modified product thereof (2), the solvent (3), and the polymerizable compound or polymer (4).

Further, the total amount of the composition 13 was added dropwise to an aluminum cup (ϕ4.5 cm) and allowed to stand at room temperature for 12 hours, and the toluene was allowed to evaporate by being naturally dried, thereby obtaining a cured product 13 (film 13) in which the concentration of the perovskite compound was 1000 μg/mL. The cured product 13 (film 13) was cut into a size of 1 cm × 1 cm.

<<Measurement of emission wavelength PLtop>>

The emission spectrum of the cured product 13 (film 13) was measured using an absolute PL quantum yield measuring device, and the emission wavelength PLtop was 519.0 nm. In a case where the value was converted into the energy value, the result was 2.38 eV.

<<Measurement of band edge Eg>>

The ultraviolet visible absorption spectrum of the cured product 13 (film 13) was measured using an ultraviolet visible near infrared spectrophotometer, and the band edge Eg was 2.22 eV.

<<Evaluation of dispersibility D>>

The dispersibility D of the cured product 13 (film 13) was 0.16 eV.

<<Evaluation of durability with respect to water vapor>>

The quantum yield of the cured product 13 (film 13) was measured, and the value of (quantum yield after test for durability with respect to water vapor during 7 days)/(quantum yield before test for durability with respect to water vapor) was 0.00 (0%).

<<Observation using TEM>>

The cured product 13 (film 13) was observed using a TEM, and the sea-island-like phase separation structure was not formed.

[Comparative Example 3]

0.814 g of cesium carbonate, 40 mL of 1-octadecene, and 2.5 mL of oleic acid were mixed. A cesium carbonate solution was prepared by stirring the solution using a magnetic stirrer and heating the resulting solution at 150°C for 1

hour while circulating nitrogen.

0.110 g of lead bromide and 0.208 g of lead iodide were mixed into 20 mL of 1-octadecene. 2 mL of oleic acid and 2 mL of oleylamine were added to the solution after the solution was stirred using a magnetic stirrer and heated at a temperature of 120°C for 1 hour while nitrogen was circulated, thereby preparing a lead bromide-lead iodide dispersion liquid.

The lead bromide-lead iodide dispersion liquid was heated to a temperature of 160°C, and 1.6 mL of the above-described cesium carbonate solution was added thereto. After the addition, a dispersion liquid was obtained by immersing a reaction container in ice water such that the temperature was decreased to room temperature.

Next, the dispersion liquid in which the perovskite compound was precipitated was centrifuged at 10000 rpm for 5 minutes so that the precipitate was separated by decantation, thereby obtaining a perovskite compound.

As determined by measurement performed on the X-ray diffraction pattern of the perovskite compound using an XRD, it was confirmed that a peak derived from (hkl) = (001) at a position where 2θ was 14° and a three-dimensional perovskite type crystal structure were present.

The average maximum Feret diameter (average particle diameter) of the perovskite compound observed using a TEM was 19 nm.

The perovskite compound was dispersed in 5 mL of toluene, 500 μL of the dispersion liquid was taken out, and the compound was re-dispersed in 4.5 mL of toluene to obtain a dispersion liquid 14 containing the perovskite compound and the solvent.

The concentration of the perovskite compound in the dispersion liquid 14 measured using ICP-MS and ion chromatography was 1500 ppm (μg/g).

Next, a methacrylic resin (PMMA, manufactured by Sumitomo Chemical Co., Ltd., SUMIPEX methacrylic resin, MH, molecular weight of approximately 120000, specific gravity of 1.2 g/ml) was mixed with a toluene such that the amount of PMMA reached 16.5% by mass with respect to the total mass of the methacrylic acid and toluene, and the solution was heated at 60°C for 3 hours to obtain a solution in which the polymer was dissolved.

0.15 g of the dispersion liquid 14 containing the perovskite compound and the solvent was mixed with 0.913 g of the solution in which the polymer was dissolved to obtain a composition 14 containing the semiconductor fine particle (1), the silazane or modified product thereof (2), the solvent (3), and the polymerizable compound or polymer (4).

Further, the total amount of the composition 14 was added dropwise to an aluminum cup (ϕ4.5 cm) and allowed to stand at room temperature for 12 hours, and the toluene was allowed to evaporate by being naturally dried, thereby obtaining a cured product 14 (film 14) in which the concentration of the perovskite compound was 1000 μg/mL. The cured product 14 (film 14) was cut into a size of 1 cm × 1 cm.

<<Measurement of emission wavelength PLtop>>

The emission spectrum of the cured product 14 (film 14) was measured using an absolute PL quantum yield measuring device, and the emission wavelength PLtop was 626.2 nm. In a case where the value was converted into the energy value, the result was 1.98 eV.

<<Measurement of band edge Eg>>

The ultraviolet visible absorption spectrum of the cured product 14 (film 14) was measured using an ultraviolet visible near infrared spectrophotometer, and the band edge Eg was 1.77 eV.

<<Evaluation of dispersibility D>>

The dispersibility D of the cured product 14 (film 14) was 0.21 eV.

<<Evaluation of durability with respect to water vapor>>

The quantum yield of the cured product 14 (film 14) was measured, and the value of (quantum yield after test for durability with respect to water vapor during 3 days)/(quantum yield before test for durability with respect to water vapor) was 0.04 (4%).

<<Observation using TEM>>

The cured product 14 (film 14) was observed using a TEM, and the sea-island-like phase separation structure was not formed.

The results of Comparative Examples 1 to 3 are listed in Table 5.

[Table 5]

| | (1) | (2) | Durability | Emission wavelength PLtop | | Band edge Eg | Dispersibility D |
|---|---|---|---|---|---|---|---|
| | | | | (nm) | (eV) | (eV) | (eV) |
| Comparative Example 1 | InP/ZnS | AZNN-120-20 | 0.53 | 537.9 | 2.31 | 2.23 | 0.08 |
| Comparative Example 2 | $CsPbBr_3$ | - | 0.00 | 519.0 | 2.38 | 2.22 | 0.16 |
| Comparative Example 3 | $CsPbBr_{1.2}I_{1.8}$ | - | 0.04 | 626.2 | 1.98 | 1.77 | 0.21 |

In the examples, each cured product having durability with respect to water vapor was able to be produced without performing the step of mixing the semiconductor fine particle (1) with the silazane or modified product thereof (2) to cause a reaction in advance and the step of drying the obtained reaction product to obtain the semiconductor fine particle (1) coated with the silazane or modified product thereof (2).

[Reference Example 1]

A backlight that is capable of converting blue light of a blue light-emitting diode to green light or red light by putting the cured products 1 to 11 of Examples 1 to 11 into a glass tube or the like so as to be sealed and disposing the glass tube or the like between a light-guiding plate and the blue light-emitting diode serving as a light source is produced.

[Reference Example 2]

A backlight that is capable of converting blue light to be applied to a sheet after passing through a light-guiding plate from a blue light-emitting diode placed on an end surface (side surface) of the light-guiding plate to green light or red light by forming the sheet using the cured products 1 to 11 of Examples 1 to 11 and placing a film obtained by interposing the sheet between two barrier films so as to be sealed on the light-guiding plate is produced.

[Reference Example 3]

A backlight that is capable of converting blue light to be applied to green light or red light by placing the cured products 1 to 11 of Examples 1 to 11 in the vicinity of a light-emitting unit of a blue light-emitting diode is produced.

[Reference Example 4]

A wavelength conversion material can be obtained by mixing the cured products 1 to 11 of Examples 1 to 11 with a resist and removing the solvent. A backlight that is capable of converting blue light from a light source to green light or red light by disposing the obtained wavelength conversion material between the blue light-emitting diode serving as a light source and a light-guiding plate and on a back stage of an OLED serving as a light source is produced.

[Reference Example 5]

An LED is obtained by mixing the cured products 1 to 11 of Examples 1 to 11 with conductive particles such as ZnS to form a film, laminating an n-type transport layer on one surface of the film, and laminating a p-type transport layer on the other surface thereof. The LED is allowed to emit light by circulating the current so that positive holes of the p-type semiconductor and electrons of the n-type semiconductor cancelled the charge in the semiconductor fine particles of the bonding surface.

[Reference Example 6]

A solar cell is prepared by laminating a titanium oxide dense layer on a surface of a fluorine-doped tin oxide (FTO) substrate, laminating a porous aluminum oxide layer thereon, laminating the cured products 1 to 11 of Examples

1 to 11 thereon, laminating a hole transport layer such as 2,2',7,7'-tetrakis-(N,N'-di-p-methoxyphenylamine)-9,9'-spirobifluorene (Spiro-OMeTAD) thereon after the solvent is removed, and laminating a silver (Ag) layer thereon.

[Reference Example 7]

A laser diode illumination emitting white light by converting blue light applied from a blue light-emitting diode to a resin molded body to green light or red light is produced by mixing the cured products 1 to 11 of Examples 1 to 11 with a resin, removing the solvent for molding to obtain the resin composition containing the composition according to the present invention, and placing the resin composition on a back stage of the blue light-emitting diode.

[Reference Example 8]

A laser diode illumination emitting white light by converting blue light applied from a blue light-emitting diode to a resin molded body to green light or red light is produced by placing the cured products 1 to 11 of Examples 1 to 11 on a back stage of the blue light-emitting diode.

Industrial Applicability

According to the present invention, it is possible to provide a production method for producing a composition, a cured product, and a film having durability with respect to water vapor by performing simple steps and a composition produced according to the production method.

Therefore, the laminated structure containing the composition of the present invention, and the display obtained by using the composition can be suitably used for light emission.

Reference Signs List

1a, 1b: laminated structure
10: film
20, 21: substrate
22: sealing layer
2: light-emitting device
3: display
30: light source
40: liquid crystal panel
50: prism sheet
60: light-guiding plate

## Claims

**1.** A film comprising:

a light-emitting semiconductor fine particle (1);
a silazane or modified product thereof (2); and
a polymerizable compound or polymer (4),
wherein the film has a sea-island-like phase separation structure,
in the sea-island-like phase separation structure, the polymerizable compound or polymer (4) is present in a sea-like hydrophobic region, and the light-emitting semiconductor fine particle (1) and the silazane or modified product thereof (2) are present in an island-like hydrophilic region, and
the island-like hydrophilic region has a size of 0.1 μm to 100μm.

**2.** The film according to claim 1,
wherein the light-emitting semiconductor fine particle (1) is a compound having a perovskite type crystal structure which includes constituent components A, B, and X.
(the constituent component A indicates a component positioned at each vertex of a hexahedron having the constituent component B at the center in the perovskite type crystal structure and is a monovalent cation,

the constituent component X indicates a component positioned at each vertex of an octahedron having the constituent component B at the center in the perovskite type crystal structure and is at least one anion selected from the group consisting of a halide ion and a thiocyanate ion, and
the constituent component B indicates a component positioned at the centers of the hexahedron where the constituent component A is disposed at each vertex and the octahedron where the constituent component X is disposed at each vertex in the perovskite type crystal structure and is a metal ion)

**3.** The film according to claim 1 or 2,
wherein a difference D in energy value between an emission wavelength PLtop and a band edge Eg is 0.2 or less.

**4.** A production method for a composition, comprising:
a step of mixing a light-emitting semiconductor fine particle (1), a silazane or modified product thereof (2), and a polymerizable compound or polymer (4) in the presence of a solvent (3).

**5.** The production method for a composition according to claim 4, comprising:

a step of dispersing the light-emitting semiconductor fine particle (1) in the solvent (3) to obtain a dispersion liquid; and
a step of mixing the dispersion liquid, the silazane or modified product thereof (2), and the polymerizable compound or polymer (4).

**6.** The production method for a composition according to claim 5, comprising:

a step of dispersing the light-emitting semiconductor fine particle (1) in the solvent (3) to obtain a dispersion liquid;
a step of mixing the dispersion liquid and the silazane or modified product thereof (2) to obtain a mixed solution; and
a step of mixing the mixed solution and the polymerizable compound or polymer (4).

**7.** The production method for a composition according to claim 5, comprising:

a step of dispersing the light-emitting semiconductor fine particle (1) in the solvent (3) to obtain a dispersion liquid;
a step of mixing the dispersion liquid and a silazane (2') to obtain a mixed solution;
a step of performing a modification treatment on the mixed solution to obtain a mixed solution containing a modified product of silazane; and
a step of mixing the mixed solution containing the modified product of silazane and the polymerizable compound or polymer (4).

**8.** A production method for a cured product, comprising:

a step of dispersing a light-emitting semiconductor fine particle (1) in a solvent (3) to obtain a dispersion liquid;
a step of mixing the dispersion liquid and a silazane (2') to obtain a mixed solution;
a step of performing a modification treatment on the mixed solution to obtain a mixed solution containing a modified product of silazane;
a step of mixing the mixed solution containing the modified product of silazane and a polymer (4") to obtain a composition; and
a step of removing the solvent (3) from the composition.

**9.** A production method for a film, comprising:

a step of dispersing a light-emitting semiconductor fine particle (1) in a solvent (3) to obtain a dispersion liquid;
a step of mixing the dispersion liquid and a silazane (2') to obtain a mixed solution;
a step of performing a modification treatment on the mixed solution to obtain a mixed solution containing a modified product of silazane;
a step of mixing the mixed solution containing the modified product of silazane and a polymer (4") to obtain a composition;
a step of coating a substrate with the composition to obtain a coated film; and
a step of removing the solvent (3) from the coated film.

FIG. 1

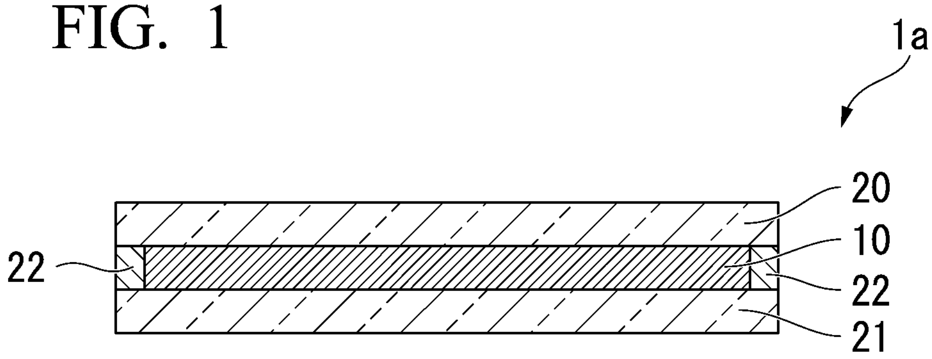


FIG. 2

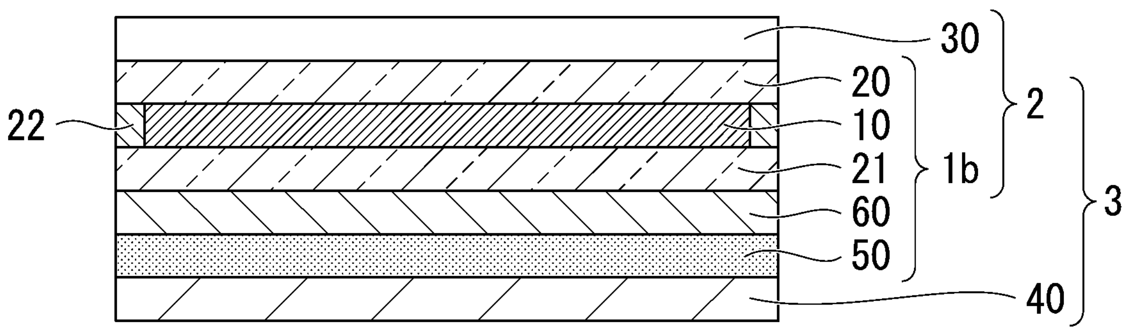

FIG. 3

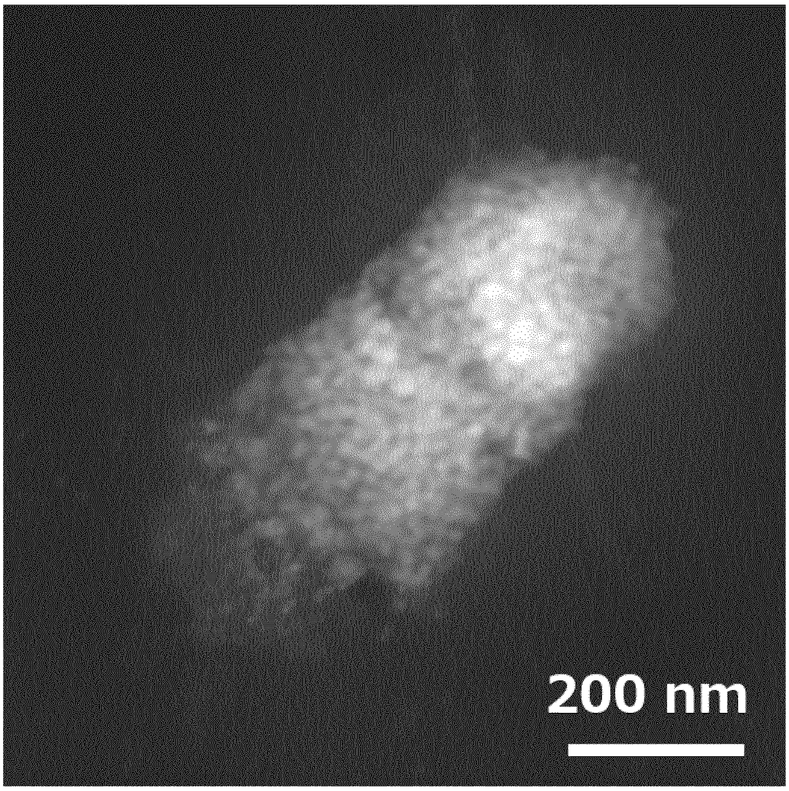


FIG. 4

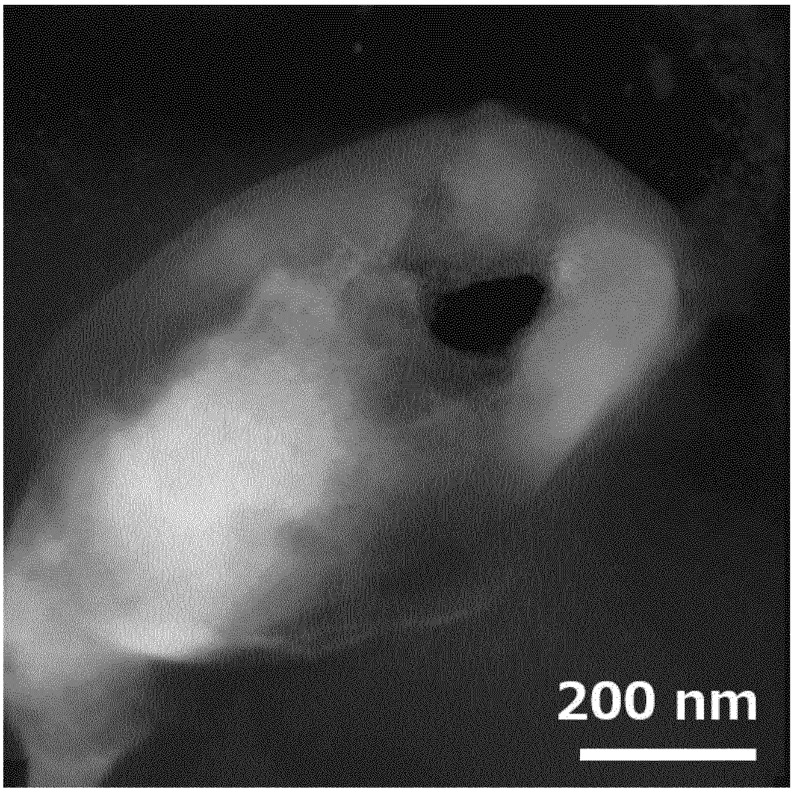

FIG. 5

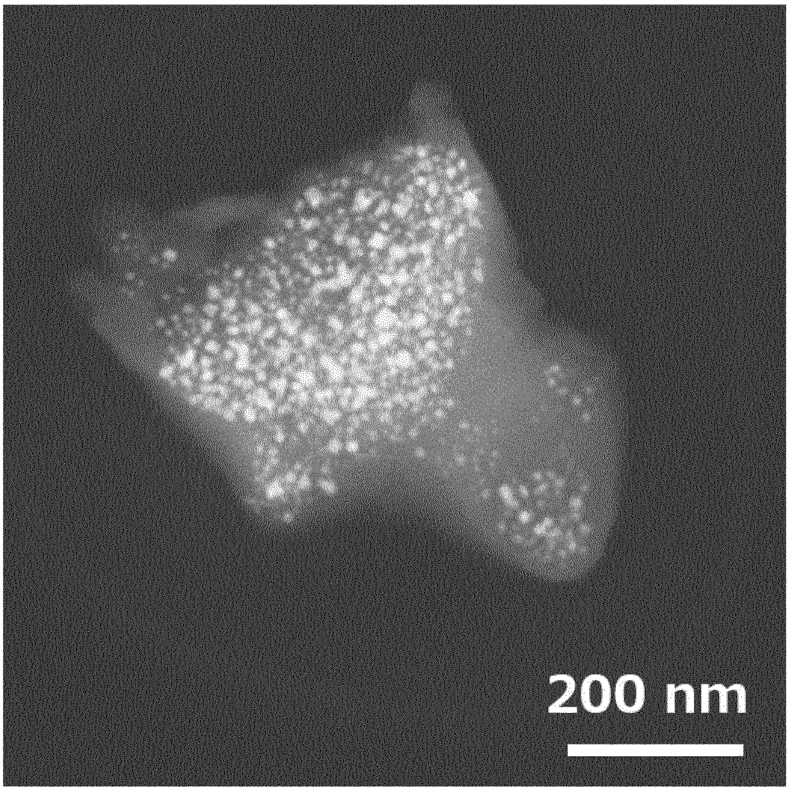


FIG. 6

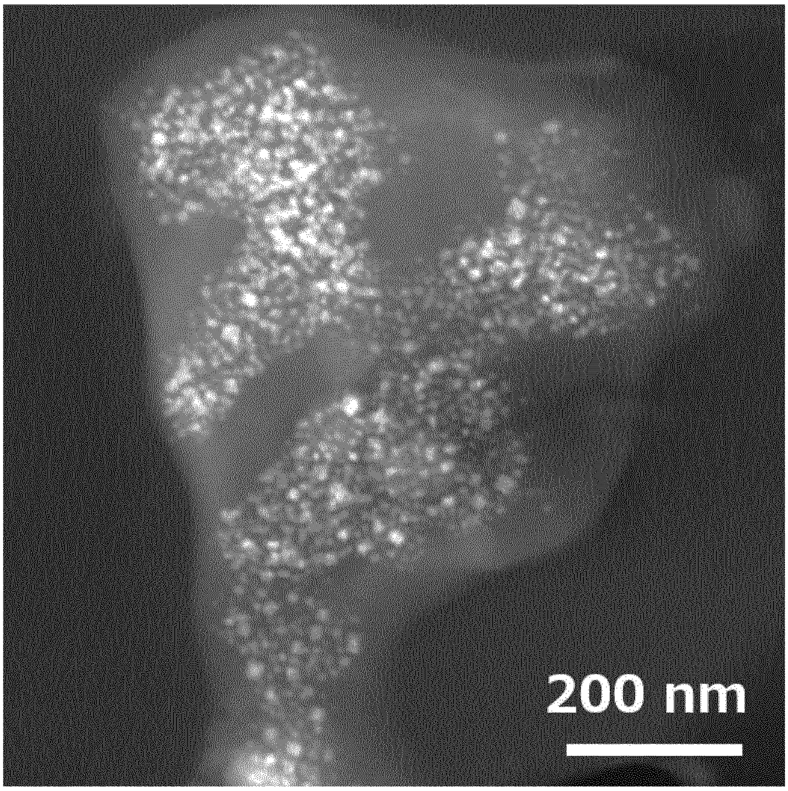

FIG. 7

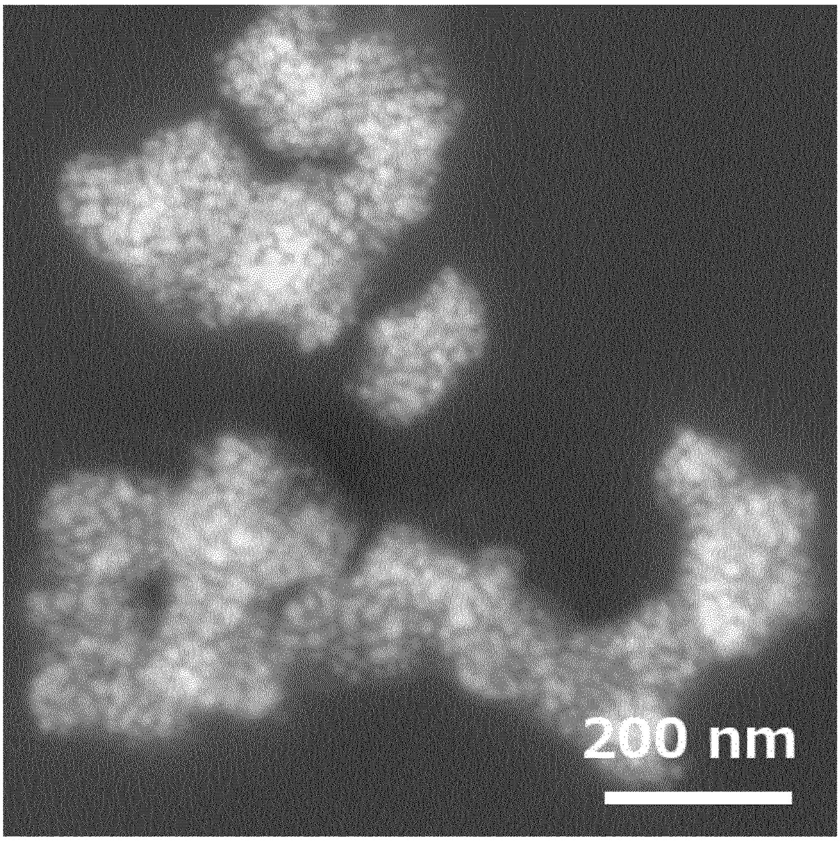

**INTERNATIONAL SEARCH REPORT**

International application No.
PCT/JP2018/019072

A. CLASSIFICATION OF SUBJECT MATTER
Int.Cl. C08L101/00(2006.01)i, C01G21/00(2006.01)i, C08J3/02(2006.01)i, C08J5/18(2006.01)i, C08K3/10(2018.01)i, C08L83/14(2006.01)i, C08L83/16(2006.01)i, G02B5/20(2006.01)i, C09K11/66(2006.01)n
According to International Patent Classification (IPC) or to both national classification and IPC

B. FIELDS SEARCHED
Minimum documentation searched (classification system followed by classification symbols)
Int.Cl. C08L1/00-101/16, C01G21/00, C08J3/02, C08J5/18, C08K3/10-3/11, C08L83/14, C08L83/16, G02B5/20, C09K11/66

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2016-114846 A (KONICA MINOLTA, INC.) 23 June 2016, claims, paragraphs [0021]-[0148], fig. 1, 2, 3<br>(Family: none) | 1, 3-9<br>2 |
| E, X | JP 6332522 B1 (SUMITOMO CHEMICAL COMPANY, LIMITED) 30 May 2018, claims, examples 5-13<br>(Family: none) | 1-9 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 20.07.2018 | 31.07.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2018/019072

C (Continuation). DOCUMENTS CONSIDERED TO BE RELEVANT

| Category* | Citation of document, with indication, where appropriate, of the relevant passages | Relevant to claim No. |
|---|---|---|
| A | WO 2014/208356 A1 (KONICA MINOLTA, INC.) 31 December 2014 (Family: none) | 1-9 |
| A | WO 2014/196319 A1 (KONICA MINOLTA, INC.) 11 December 2014 & US 2016/0115378 A1 & CN 105264042 A & TW 201505960 A | 1-9 |
| A | JP 2-283616 A (NIPPON TELEGRAPH AND TELEPHONE CORPORATION) 21 November 1990 (Family: none) | 1-9 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017097962 A
- WO 2014196319 PCT


### Non-patent literature cited in the description


- *Nano Lett.,* 2015, vol. 15, 3692-3696
- *ACSNano,* 2015, vol. 9, 4533-4542
- *Nano Letters,* 2015, vol. 15, 3692-3696